# EUROPEAN PATENT SPECIFICATION

(11) **EP 0 618 567 B1**
(45) Date of publication and mention of the grant of the patent: **28.07.1999**
(21) Application number: 94103038.9
(22) Date of filing: 01.03.1994
(51) Int. Cl.: G11B 5/008, G11B 20/10, H04N 5/92, H04N 5/783, H04N 5/94

(54) **Signal recording and reproducing apparatus**
Signalaufzeichnungs- und Wiedergabegerät
Appareil d'enregistrement et de reproduction de signaux

(30) Priority: 03.03.1993 JP 4250093; 03.03.1993 JP 4250193; 06.04.1993 JP 7923693; 27.04.1993 JP 10090493; 17.06.1993 JP 14588993; 01.07.1993 JP 16341793; 30.07.1993 JP 18997793; 06.08.1993 JP 19587693; 09.11.1993 JP 27952293
(43) Date of publication of application: 05.10.1994
(73) Proprietor: MATSUSHITA ELECTRIC INDUSTRIAL CO., LTD., Kadoma-shi, Osaka 571-8501 (JP)
(72) Inventor: Hamamoto, Yasuo, Higashiosaka-shi, Osaka (JP); Takeuchi, Akihiro, Ikoma-shi, Nara-ken (JP); Morimoto, Kenji, Osaka-shi, Osaka (JP); Kohno, Katsufumi, Sakai-shi, Osaka (JP); Sakakibara, Yoshio, Neyagawa-shi, Osaka (JP); Gotou, Makoto, Nishinomiya-shi, Hyogo-ken (JP)
(74) Representative: Marx, Lothar, Dr.

(56) References cited:
- EP-A- 0 158 166
- EP-A- 0 355 721
- EP-A- 0 436 114
- EP-A- 0 508 779
- EP-A- 0 517 141
- EP-A- 0 564 234
- EP-A- 0 579 411
- EP-A- 0 596 826
- US-A- 4 338 631
- US-A- 4 731 659
- US-A- 4 760 474
- US-A- 4 864 430
- US-A- 4 920 435
- US-A- 5 148 272
- PATENT ABSTRACTS OF JAPAN vol. 017, no. 095 (P-1493), 25 February 1993 & JP-A-04 291049 (MATSUSHITA ELECTRIC IND CO LTD), 15 October 1992, & US-A-5 321 557 (SHIMOTASHIRO MASAFUMI ET AL.) 14 June 1994
- PATENT ABSTRACTS OF JAPAN vol. 016, no. 267 (E-1217), 16 June 1992 & JP-A-04 061523 (MATSUSHITA ELECTRIC IND CO LTD), 27 February 1992,
- PATENT ABSTRACTS OF JAPAN vol. 016, no. 259 (E-1215), 11 June 1992 & JP-A-04 056577 (MATSUSHITA ELECTRIC IND CO LTD), 24 February 1992,
- PATENT ABSTRACTS OF JAPAN vol. 011, no. 389 (P-648), 19 December 1987 & JP-A-62 154203 (MATSUSHITA ELECTRIC IND CO LTD), 9 July 1987,

## Description

### BACKGROUND OF THE INVENTION

### 1. Field of the Invention:

The present invention relates to a signal recording and reproducing apparatus of helical scan type for recording and reproducing signals by using a rotation head. More particularly, the present invention relates to a signal recording and reproducing apparatus capable of positively reproducing signals recorded at predetermined positions of a recording medium even when the reproduction is to be performed at a speed which is different from the speed at which the signals were recorded.

### 2. Description of the Related Art:

In a signal recording and reproducing apparatus of helical scan type, signals are recorded on or reproduced from a tape-like recording medium such as a magnetic tape by using rotation heads. A prior art signal recording and reproducing apparatus of helical scan type has a problem in that, when the recording medium is made to travel at a high speed in reproduction, it is very difficult to obtain data required for the high-speed reproduction. This is because the path of the head relative to the recorded tracks varies depending on the traveling speed of the recording medium. As a conventional solution to the problem, for example shown in Japanese Laid-Open Patent Publication No. 2-94071, the high-speed reproduction speed is limited to only one specific speed, and data required for the high-speed reproduction is recorded at a position corresponding to the head path at that specific speed.

In such a prior art signal recording and reproducing apparatus, the data for high-speed reproduction is located at a position corresponding to the head path at the specific high-speed reproduction speed. Accordingly, the reproduction can basically be performed only at that specific high speed, in addition to the normal reproduction speed. In other words, it is impossible to reproduce data for high-speed reproduction at various high speeds.

Moreover, when an image is to be reproduced at various reproduction speeds by using the above conventional solution, it is necessary to record data for high-speed reproduction at positions corresponding to the head paths at the various reproduction speeds. This causes a problem of an increase in the recorded bit rate.

### SUMMARY OF THE INVENTION

The apparatus for recording and reproducing data of this invention is defined in claim 1.

With the above construction, according to the invention, it is possible to reproduce a fundamental data group which is required for the reproduction at a plurality of high speeds.

If the recorded data is a video signal, it is possible to perform the high-speed reproduction at a plurality of high speeds, and the thus reproduced image matches the visual sense of human beings, i.e., the image has the characteristics that the image has a higher quality as the reproduction speed is lowered.

According to the invention, if video-frame page information such as time record and other information are inserted at the first position and the second position, the page information can be stably obtained in the searching. Thus, the method of the invention is very advantageous in that the search can be performed by designating a page of frame or the like.

The fundamental data group used for the high-speed reproduction is recorded or reproduced in the vicinity of the center of the track, so that it is possible to obtain data with relatively few errors during the high-speed reproduction.

To the fundamental data group for the high-speed reproduction, an identification code indicating the contents of data and the position on a recording medium is added. By using the code for the purpose of the control of the head path, the head path can be controlled with high accuracy during the high-speed reproduction.

Thus, the invention described herein makes possible the advantages of (1) providing a signal recording and reproducing apparatus of helical scan type capable of variable-speed reproduction at three or more different medium speeds without additional data for high-speed reproduction, (2) providing a signal recording and reproducing apparatus of helical scan type by which an image reproduced at a high speed matches the visual senses of human beings so that the image can be viewed comfortably, when digital image signals are recorded as the recorded data, (3) providing a signal recording and reproducing apparatus which performs the high-speed reproduction even when part of the data for high-speed reproduction is lost during the high-speed reproduction, (4) providing a highly accurate control method by which the head path is controlled with high accuracy during the high-speed reproduction, and (5) providing a signal recording and reproducing apparatus of helical scan type which stably obtains data during the high-speed reproduction.

These and other advantages of the present invention will become apparent to those skilled in the art upon reading and understanding the following detailed description with reference to the accompanying figures.

### BRIEF DESCRIPTION OF THE DRAWINGS

Figures 1 through 16 are diagrams each showing a tape pattern and a heed path in a signal recording and reproducing apparatus according to the invention.

Figure **17** is a view showing the construction of a scanner of a recording and reproducing apparatus of helical scan type.

Figure **18** is a concept diagram showing the reproduced output.

Figure **19** is a view showing the construction of a rotating drum having two heads.

Figure **20** is a diagram showing the construction of a rotating drum having four heads.

Figure **21A** is a diagram showing a DCT coefficient obtained by a DCT.

Figure **21B** is a diagram showing a quantization table.

Figure **22** is a diagram showing a zigzag scan.

Figure **23** is a diagram illustrating a preferential classification method for DCT coefficients.

Figure **24** is a diagram showing the block divisions of a screen.

Figures **25A** to **25C** are diagrams each showing a priority based on the position of DCT blocks in the screen.

Figure **26** is a diagram showing an example for determining a priority depending on the position of a DCT block and a component in the DCT block.

Figures **27** and **28** are concept diagrams illustrating a process for producing a plurality of synchronization blocks, based on the priority determined depending on the position of a DCT block and a component in the DCT block.

Figures **29A** and **29B** are concept diagrams showing a subsampling of a DCT block.

Figures **30A** and **30B** are concept diagrams showing a recorded pattern of subsampling data.

Figures **31A** to **31D** are concept diagrams showing the recorded portions of identification codes.

Figures **32A** and **32B** are concept diagrams showing the relationship between the reproduction output during the high-speed reproduction and the center identification code.

Figure **33** is a concept diagram showing the process for separating the bit stream into intra-frame compressed data and inter-frame compressed data, and for adding an ID and a pointer.

Figure **34** is a concept diagram showing the transmission of data with a higher priority and data with a lower priority.

Figures **35A** and **35B** are diagrams each showing the construction of a signal recording and reproducing apparatus.

Figure **36** is a block diagram showing the construction of a signal recording and reproducing apparatus in a first example according to the invention.

Figure **37** is a block diagram showing the construction of -a signal recording and reproducing apparatus in a second example according to the invention.

Figure **38** is a block diagram showing the construction of a signal recording and reproducing apparatus in a third example according to the invention.

Figure **39** is a block diagram showing the construction of another signal recording and reproducing apparatus in the third example according to the invention.

Figure **40** is a block diagram showing the construction of a signal recording and reproducing apparatus in a fourth example according to the invention.

Figure **41** is a block diagram showing the construction of a signal recording and reproducing apparatus in a fifth example according to the invention.

Figure **42** is a block diagram showing the construction of a signal recording and reproducing apparatus in a sixth example according to the invention.

Figure **43** is a block diagram showing the construction of a signal recording and reproducing apparatus in a seventh example according to the invention.

Figure **44** is a block diagram showing the construction of an image compression circuit.

Figure **45A** is a block diagram showing the construction of a data shuffler.

Figure **45B** is a block diagram showing the construction of a memory for the data shuffler.

Figure **45C** shows an exemplary pattern of recorded tracks.

Figure **45D** is a diagram showing the structure of a sync block.

Figure **45E** shows the switching timing of a selector.

Figure **46** is a block diagram showing the construction of an image reconstruction circuit.

Figure **47A** is a block diagram showing the construction of a bit stream separation circuit.

Figure **47B** is a block diagram showing the construction of a bit stream reconstruction circuit.

Figure **48** is a block diagram showing the construction of a signal recording and reproducing apparatus in an eighth example according to the invention.

Figures **49A** to **49D** are schematic diagrams for illustrating the operation of the signal recording and reproducing apparatus in the eighth example of the invention.

Figure **50** shows the data structure in tracks.

Figure **51** is a diagram showing the construction of a tracking error detector.

Figure **52** is a diagram showing a tracking controller.

Figure **53** shows signal waveforms in the tracking controller.

Figure **54** is a block diagram showing the construction of a signal recording and reproducing apparatus in a ninth example according to the invention.

Figure **55** is a diagram showing the construction of a timing corrector, the tracking controller, sampler, and a delayed pulse generator.

Figure **56** is a flowchart illustrating the operation of the timing corrector and part of the operation of the tracking controller.

### DESCRIPTION OF THE PREFERRED EMBODIMENTS

Hereinafter, the present invention will be described by way of illustrative examples with reference to the accompanying drawings.

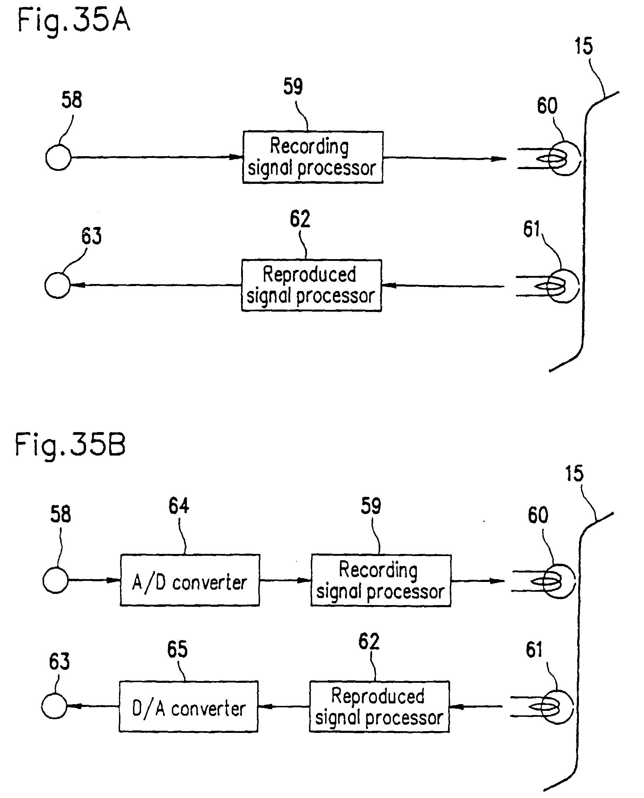

Figures **35A** and **35B** each show the construction of a signal recording and reproducing apparatus of helical scan type.

Figure **35A** shows the construction of the signal recording and reproducing apparatus when the input signal is a digital signal. Herein, a signal which is to be recorded on a recording medium is referred to as a recording signal, and a signal which is reproduced from the recording medium is referred to as a reproduced signal.

A digital signal is input through an input terminal **58** and then fed to a recording signal processor **59** where a prescribed signal processing is performed. Then, the processed digital signal is recorded on a tape-like recording medium **15** by using a recording head **60**. The recording is performed in a helical scan manner.

Figure **17** shows an exemplary construction of a scanner of helical scan type.

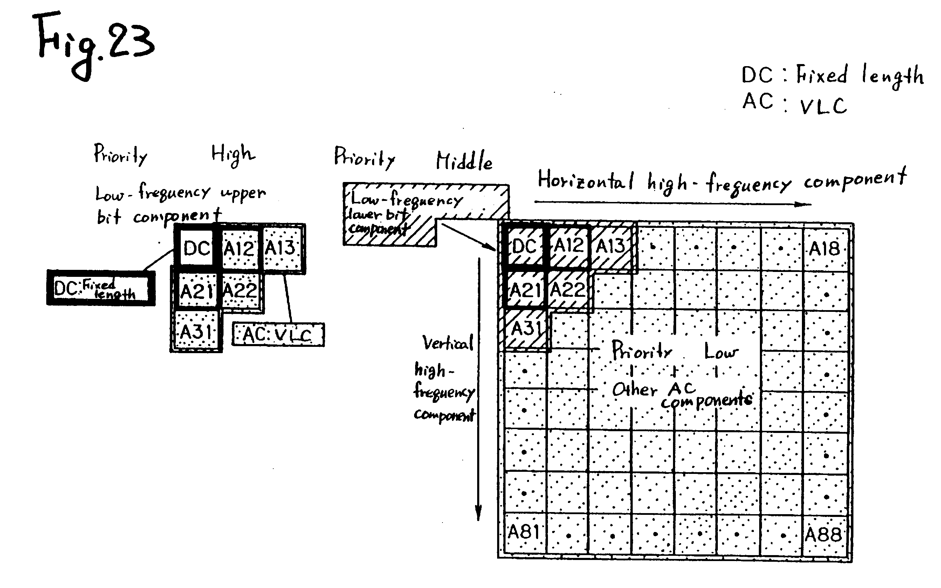

A cylindrical rotating drum **37** rotates at a prescribed angle with respect to the traveling direction of the tape-like recording medium **15**. The rotating drum **37** has recording and reproducing heads **38**(L) and **39**(R). The recording and reproducing heads **38**(L) and **39**(R) and the rotating drum **37** rotate at equal speed. The tape-like recording medium **15** is wrapped in a helix around the rotating drum **37** by 180°. The tape-like recording medium **15** travels at a predetermined speed. Figure **19** is a view of the scanner shown in Figure **17** when it is viewed in the direction along the rotation axis of the rotating drum **37**.

By using the scanner of helical scan type with the above-described construction, the signal is recorded on the tape-like recording medium **15**.

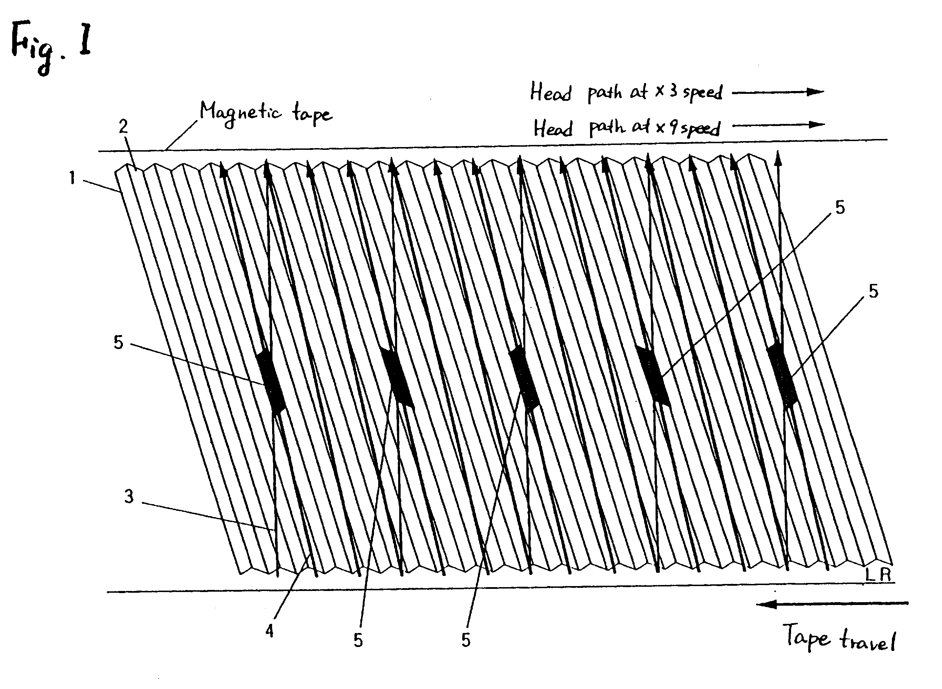

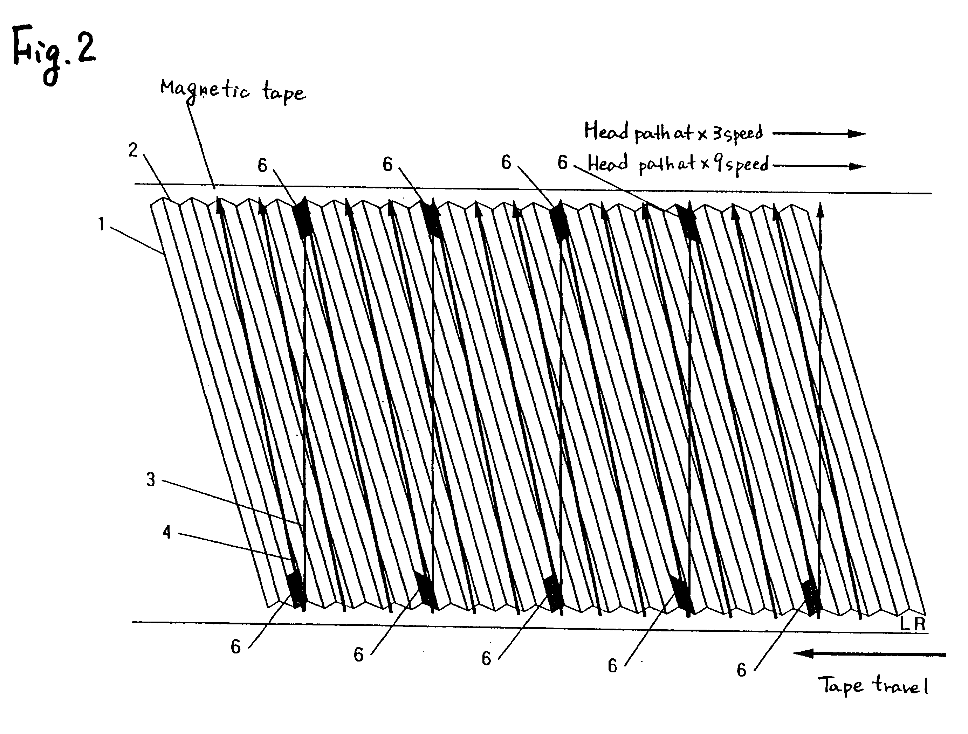

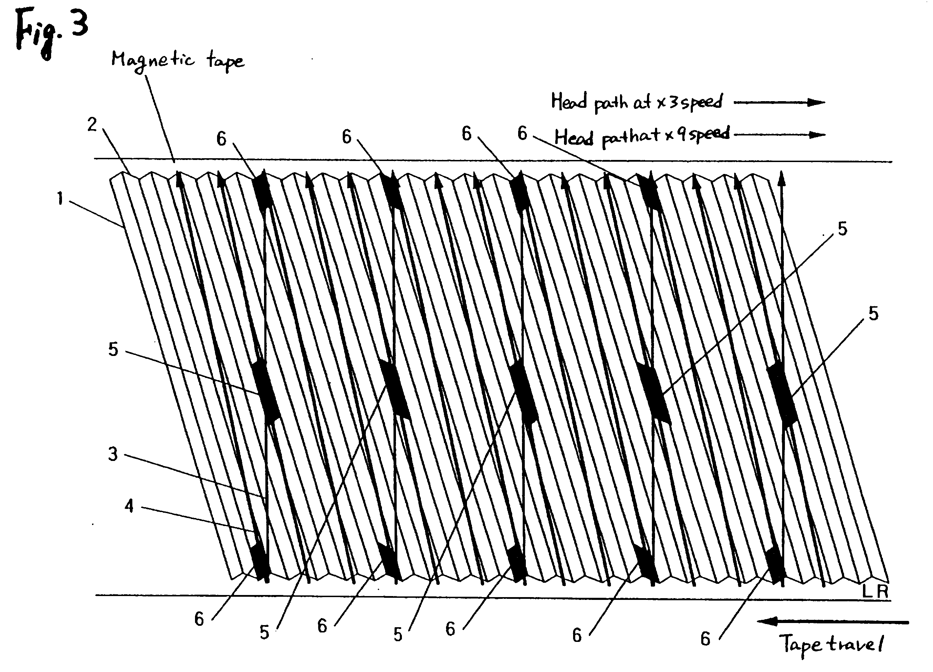

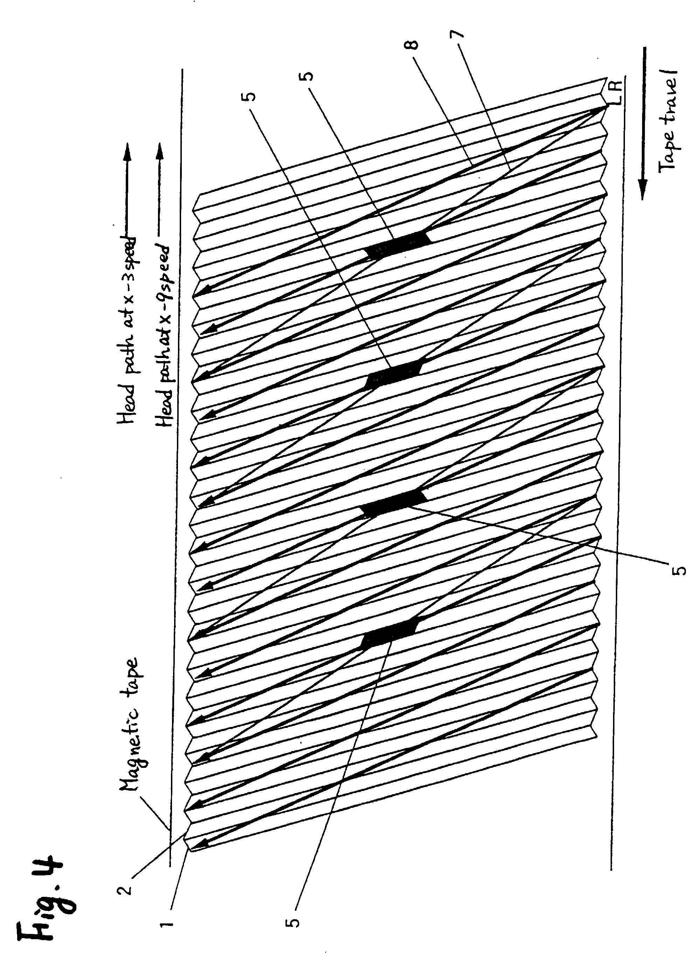

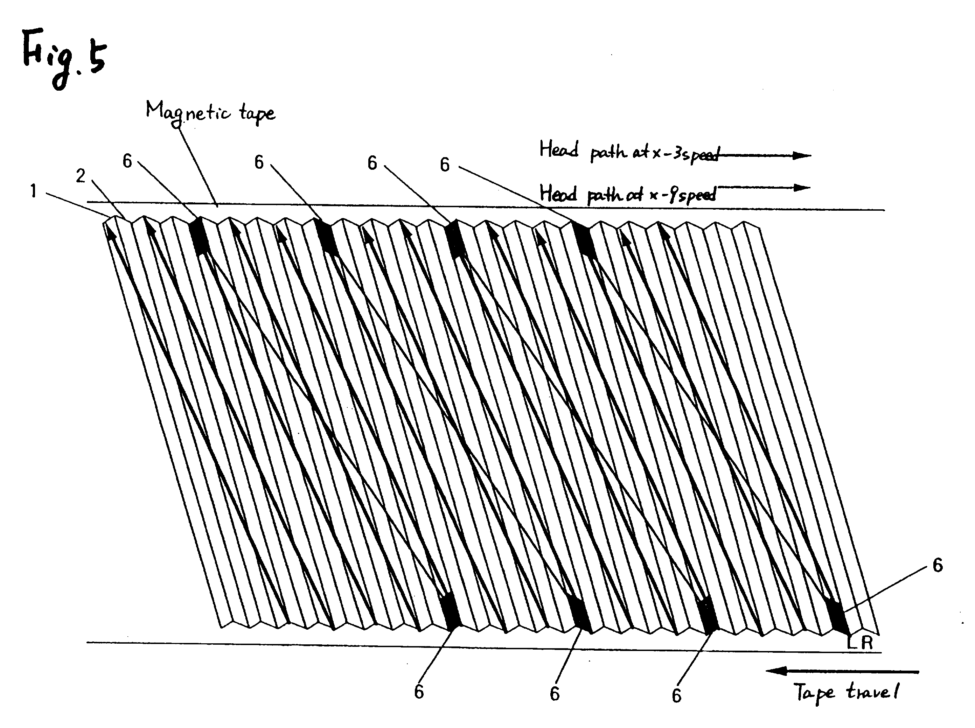

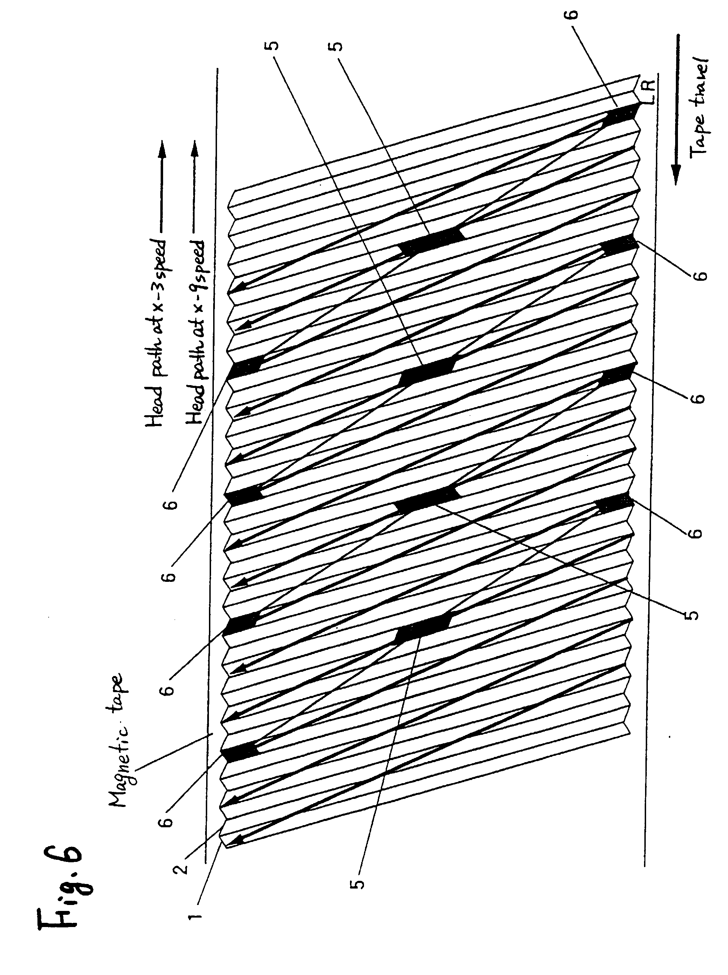

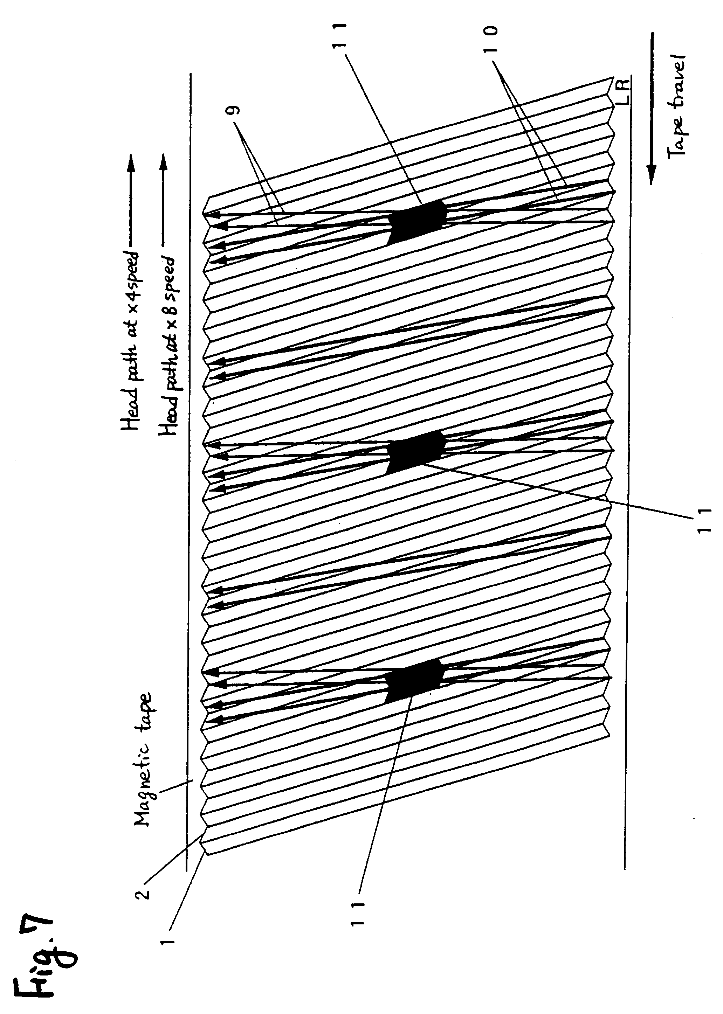

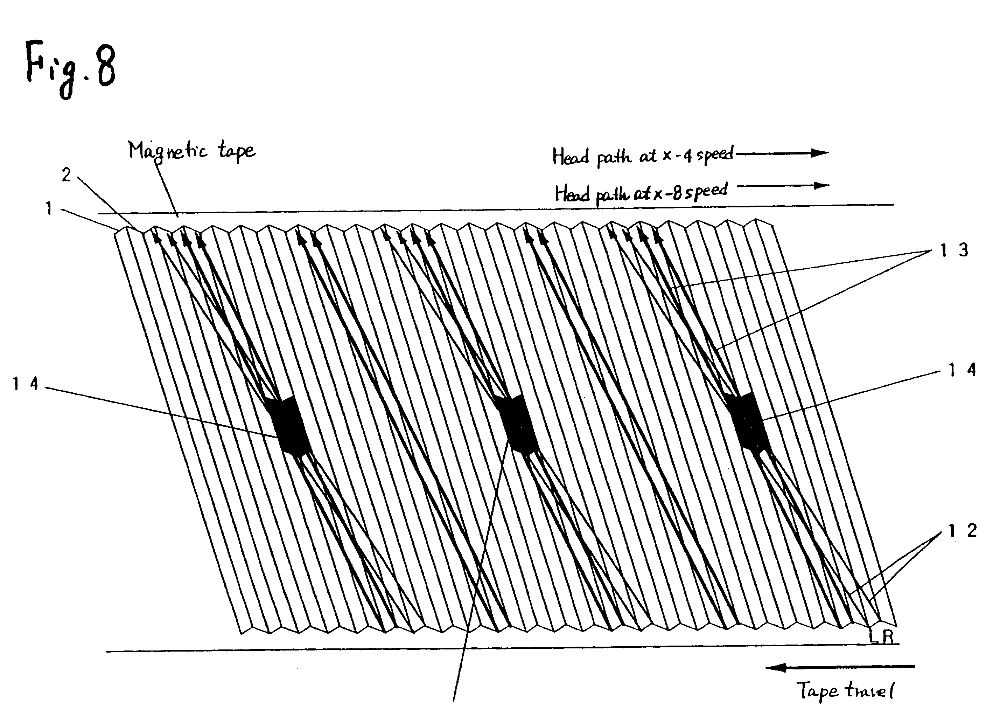

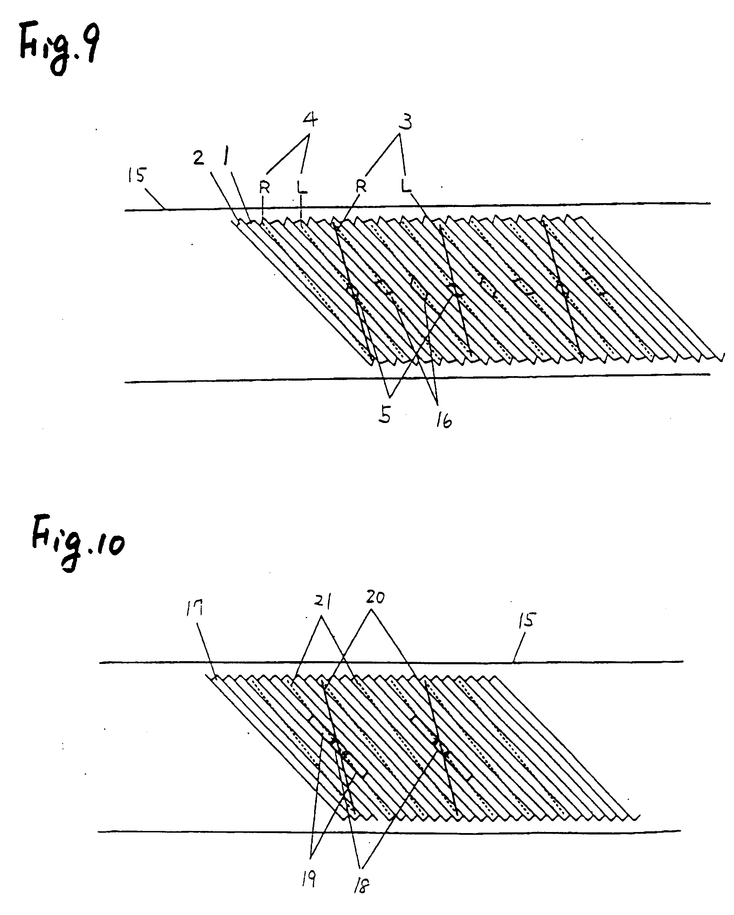

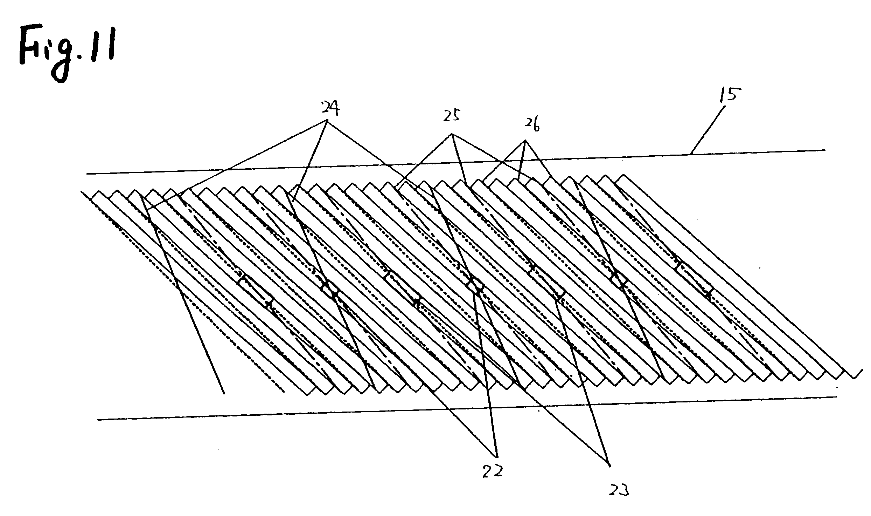

In the scanner of helical scan type, the recording head moves obliquely to the traveling direction of the tape-like recording medium. As a result, a plurality of tracks are formed on the tape-like recording medium at a prescribed angle with respect to the traveling direction of the tape-like recording medium. The reference numerals **1** and **2** in Figure **1** indicate the recorded track patterns formed by the recording head.

In the reproduction, the tape-like recording medium is made to travel at the same speed as in the recording, and the rotating drum **37** is made to rotate at the same speed as in the recording, whereby the reproducing head can accurately scan the recorded tracks. As a result, the recorded data is accurately reproduced. In most cases, the reproducing head is also used as the recording head. The recording and reproducing heads **38**(L) and **39**(R) are usually mounted on the rotating drum **37** in such a manner that they are diametrically opposed so that the corresponding tracks have respectively different azimuth angles. This makes it possible to reproduce signals from only the desired tracks, even when the reproducing head scans positions which deviate somewhat from the desired tracks during the reproduction. The thus reproduced signals are processed back into the original signals by a reproduced signal processor **62** which performs a processing inverted from that in the recording signal processor **59**, and then output from an output terminal **63**.

Figure **35B** shows the construction of the signal recording and reproducing apparatus when the input signal is an analog signal.

The analog signal is input through the input terminal **58** and then converted into a digital signal by an A/D converter **64**. Thereafter, the digital signal is recorded on the tape-like recording medium **15** via the same process as described with reference to Figure **35A**. In the reproduction, the digital signal recorded on the tape-like recording medium **15** is reproduced via the same process as described with reference to Figure **35A**. The reproduced digital signal is converted into the original analog signal by a D/A converter **65**, and then output from the output terminal **63**.

Figures **1** to **8** show exemplary patterns of tracks recorded by the signal recording and reproducing apparatus according to the invention.

In Figure **1**, the tracks **1**(L) and **2**(R) are tracks recorded by the recording and reproducing heads **38**(L) and **39**(R) shown in Figures **17** and **19** where the magnetic tape **15** is made to travel at a 1-fold speed. Herein, a 1-fold speed, i.e., a tape speed equal to the normal speed is referred to as x1 speed, and an N-fold speed, i.e., a tape speed which is N times as fast as the normal speed is referred to as xN speed. In the same way, a -N-fold speed, i.e., a tape speed which is -N times as fast as the normal speed is referred to as x(-N) speed.

It is assumed herein that the rotation speed of the rotation head **37** is constant. A thick arrow **3** shows a head path when the magnetic tape **15** is made to travel at x9 speed. In this case, the recording and reproducing heads **38**(L) and **39**(R) obliquely traverse nine tracks in one scanning. A thin arrow **4** shows a head path when the magnetic tape **15** is made to travel at x3 speed. In this case, the recording and reproducing heads **38**(L) and **39**(R) obliquely traverse three tracks in one scanning.

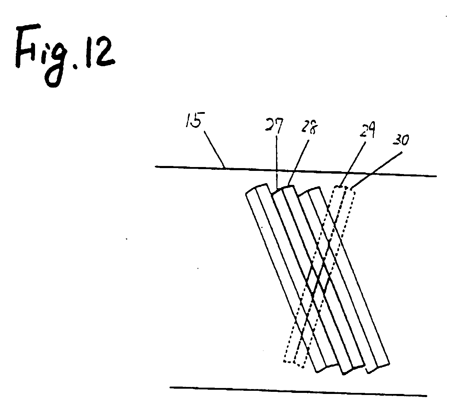

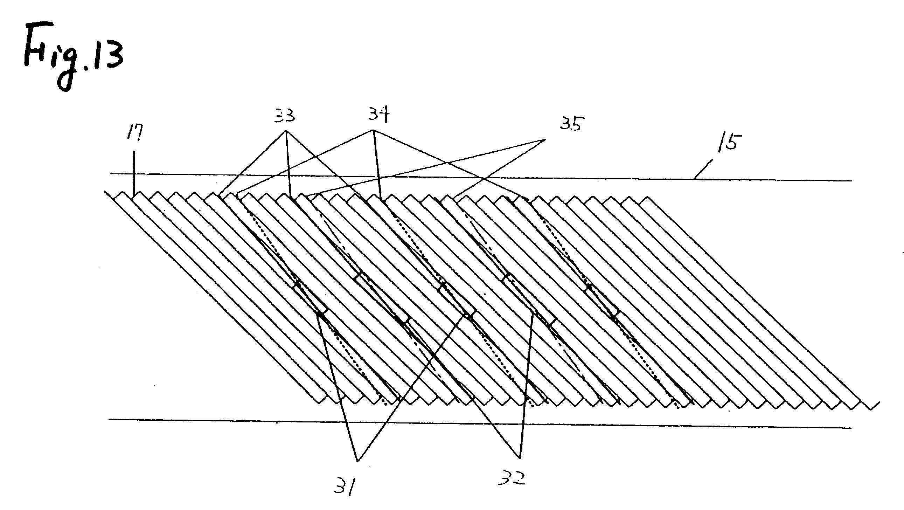

In Figure **1**, solid portions **5** are areas which are traced in both cases of x3 and x9 speeds. Accordingly, if data which is utilized for high-speed reproduction is located in the portions **5**, it is possible to perform the reproduction at x3 and x9 speeds. The areas which are traced in both cases of x3 and x9 speeds may be portions **6** which are located at both ends of the tracks, as is shown in Figure **2**. Alternatively, data may be located at both of the portions **5** and **6**, as is shown in Figure **3**.

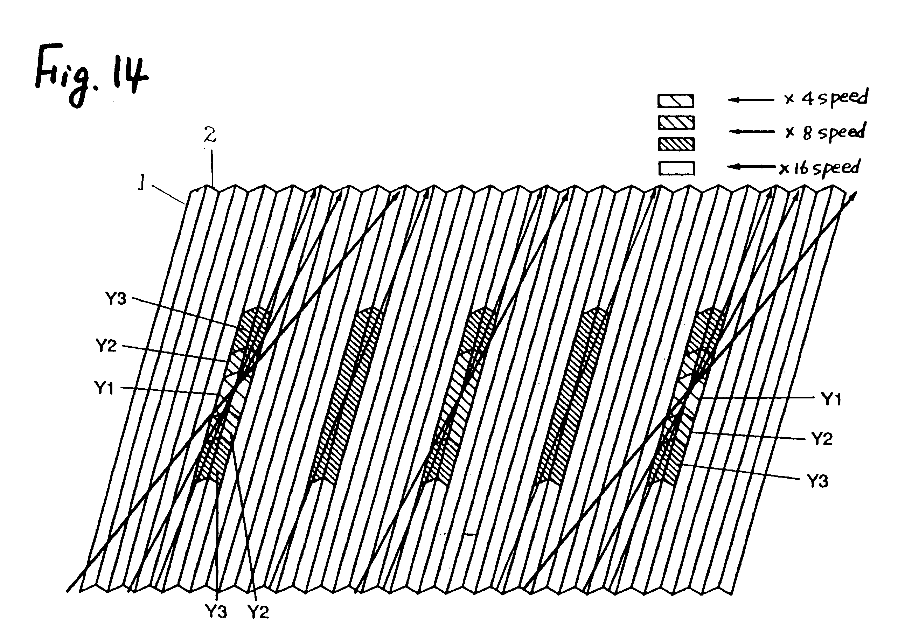

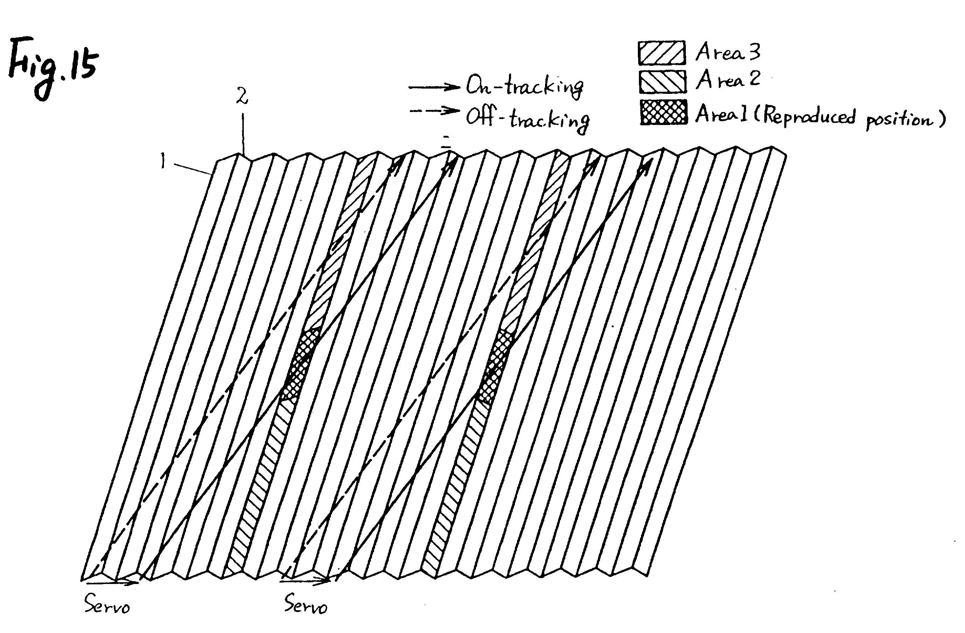

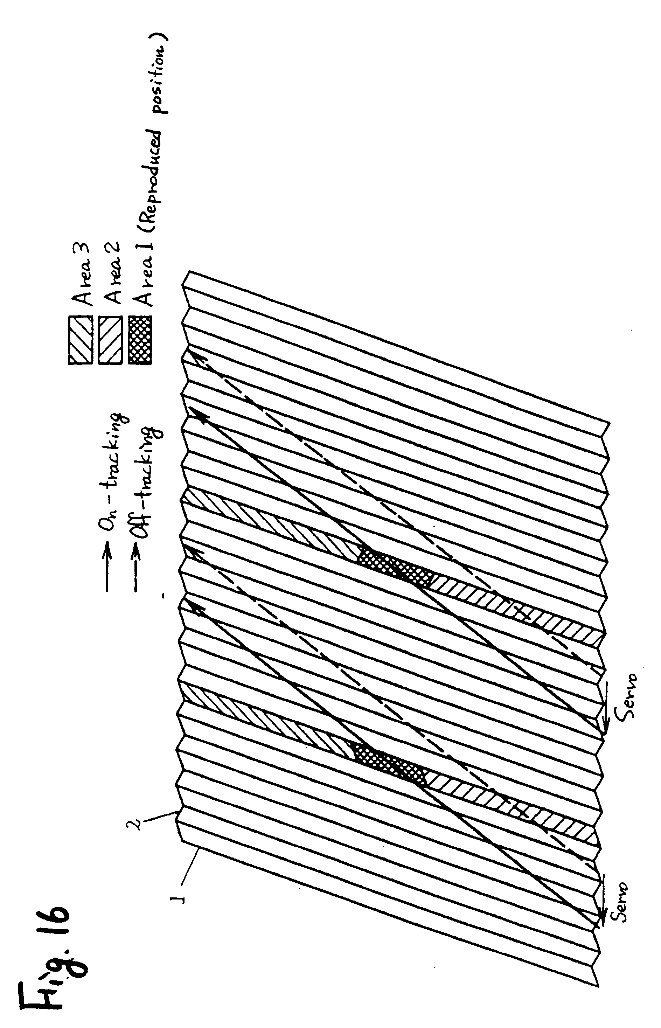

Figures **4** to **6** each show a head path when the magnetic tape **15** is made to travel at x(-3) speed and a head path when the magnetic tape **15** is made to travel at a x(-9) speed. In Figure **4**, a thin arrow **7** indicates a head path in the case of x(-9) speed, and a thick arrow **8** indicates a head path in the case of x(-3) speed. It is seen from Figures **4** and **5** that from the portion from which data can be reproduced in both cases of x3 and x9 speeds, data can also be reproduced in both cases of x(-3) and x(-9) speeds. Figure **6** shows that the portions corresponding to the portions **5** and **6** shown in Figure **3** are commonly traced by the head in both cases of x(-3) and x(-9) speeds. In both cases of x(-3) and x(-9) speeds, the portion **5** in the vicinity of the center of the track and the portions **6** in the vicinity of the ends of the track are scanned in one scanning.

Since the data is recorded on the portions **5** and **6** at respective azimuth angles which are different from each other, it is impossible to obtain the data recorded on the portions **5** and **6** in one scanning. However, in the case where data was recorded in a no-azimuth recording manner in which a guard band is provided between tracks, the data can be recorded on the portions **5** and **6** at the same azimuth angle. Therefore, it is possible to obtain the data recorded in both of the portions **5** and **6** in one scanning.

As described above, the portion which is commonly scanned by the reproducing head is not limited to the portions specifically shown in Figures **1** through **8**. The portion may be any portion, insofar as the portion is commonly traced by the head at various different tape speeds, and data can be reproduced from the portion. In any case, a track having such a portion is periodically selected from recorded tracks. In the above description, the cases of the x(±3) speeds and the x(±9) speeds are exemplarily described. However, any combination of tape speeds can be used.

As is shown in Figures **17** and **19**, in the case where the recording and reproducing heads are attached on the rotating drum in such a manner that they are diametrically opposed, it is preferable to use tape speeds multiplied by the power of an odd number, considering the head azimuth. This is because, in the case of tape speeds multiplied by the power of an odd number, there are many portions from which data can be commonly reproduced at respective tape speeds, so that high efficiency is achieved. However, the tape speeds are not necessarily limited to those multiplied by a power of an odd number. Considering the head azimuth, the head path depends of the wrapping angle of the tape on the rotating drum, but it is sufficient that data is located at a position which is commonly traced by the head.

In the above description, the recording and reproducing heads with different azimuths are mounted on the rotating drum in such a manner that they are diametrically opposed. Alternatively, another construction can be used. For example, a pair of heads (L, R) are mounted on the rotating drum at one side.

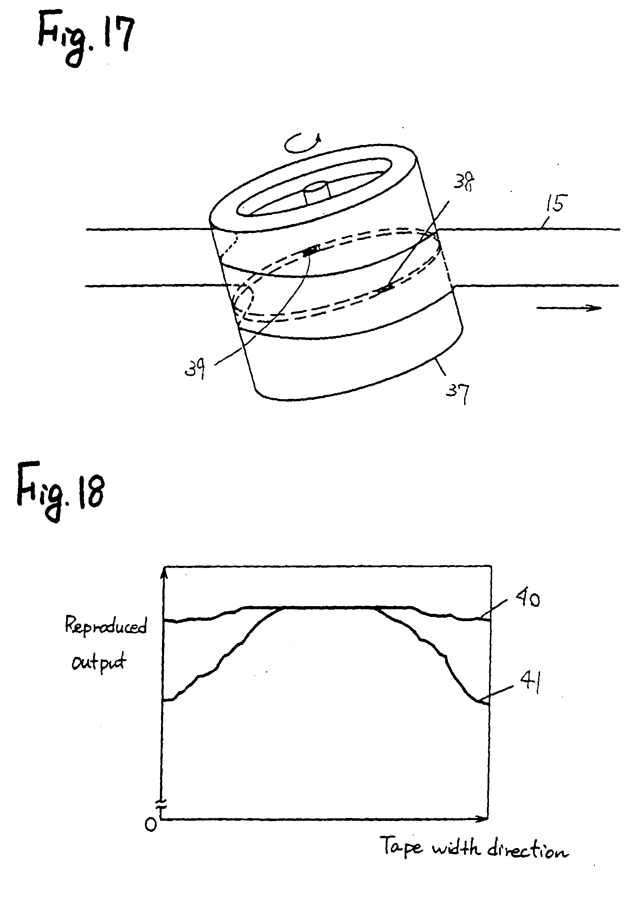

Figure **7** shows another exemplary pattern of tracks recorded by the signal recording and reproducing apparatus of the invention. This example of recorded pattern is obtained by performing the recording at a tape speed multiplied by the Nth power of **2** in the case where the rotating drum **37** has a pair of heads **41**(L) and **42**(R) at one side thereof, as is shown in Figure **20**. The pair of heads **41**(L) and **42**(R) have respective azimuths which are reversed from each other. In Figure **20**, the heads **44**(R) and **45**(L) are auxiliary heads for reproduction. The auxiliary heads for reproduction are optionally used.

Figure **7** shows the head paths in the cases of x4 and x8 speeds by using the rotating drum **37** having the construction shown in Figure **20** (it is assumed that the auxiliary heads for reproduction are not used). A thin arrow **9** indicates the head path in the case of x8 speed. A thick arrow **10** indicates the head path in the case of x4 speed. The portion which is commonly traced in both cases of x8 and x4 speeds is the area **11**. In Figure **8**, a thin arrow **12** indicates the head path in the case of x(-8) speed. A thick arrow **13** indicates the head path in the case of x(-4) speed. The portion which is commonly traced in both cases of x(-8) and x(-4) speeds is the area **14**. The area **14** is identical with the area **11** which is commonly traced in both cases of x8 and x4 speeds. Therefore, if data is recorded in the area **14** shown in Figure **8**, the data can be used for both the forward and the reverse directions.

These portions are not limited to the specific portions shown in the figures. Alternatively, the portions may be areas which are commonly traced by the head at various tape speeds. In any case, a track having such a portion is periodically selected from the recorded tracks. When the data is to be reproduced at tape speeds obtained by multiplying the normal tape speed by even numbers, considering the head azimuth, it is more efficient to mount both the heads (L, R) on the rotating drum at one side. However, the construction is not limited to this specific type. In addition, as is shown in Figure **20**, if the auxiliary heads for reproduction are mounded on the rotating drum on the other side, the area which is capable of being commonly traced at various tape speeds can be increased to be twice as large as in the case without the auxiliary heads for reproduction.

### Example 1

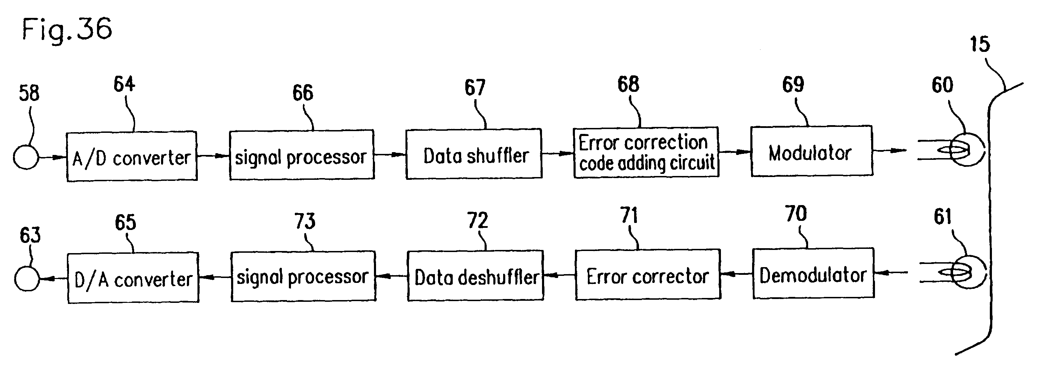

Figure **36** shows the construction of a signal recording and reproducing apparatus in the first example according to the invention. In the following description, it is assumed that the input signal is the analog video signal. However, the input signal is not limited to the analog video signal.

Hereinafter, a process for recording data at a predetermined position of a tape-like recording medium **15** is described.

An analog video signal is input through an input terminal **58**. The input analog video signal is converted into a digital signal having a predetermined number of quantization bits at a predetermined sampling clock, by an A/D converter **64**. A signal processor **66** performs a prescribed signal processing for the digital signal.

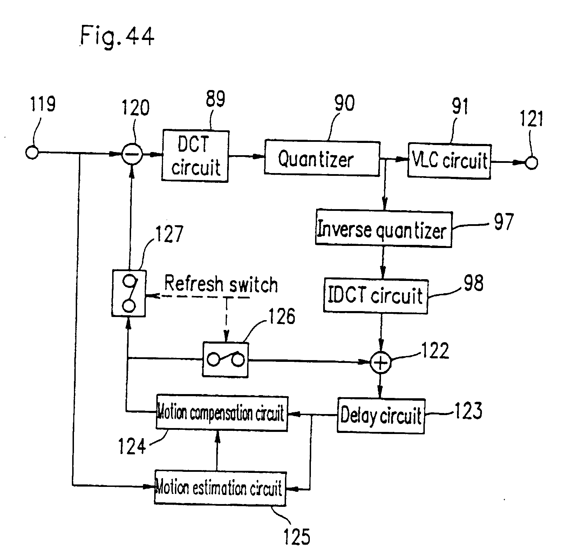

The prescribed signal processing is, for example, a process for removing a redundant component of the input image and compressing the image. Figure **44** shows an exemplary compression circuit. The compression circuit compresses the data by using the motion compensation DCT method. In the motion compensation DCT method, one frame which is periodically selected from the input image data is compressed by using the data in the frame, and for each of the remaining frames, the difference from the respective previous frame is compressed and transmitted. For the intra-frame compression and the inter-frame compression, a discrete cosine transform which is one of orthogonal base transforms is used. In addition, when the difference between frames is to be calculated, a motion vector of the image between the current frame and the previous frame is first detected, and then the difference is obtained after the motions are compensated based on the motion vector. Thus, the compression efficiency is remarkably enhanced.

Hereinafter, the operation of the compression circuit of Figure **44** is described. The image data is input through an input terminal **119**. A subtracter **120** is used for calculating the difference from the previous frame. Refresh switches **126** and **127** are turned on and off depending on either the intra-frame compression or the inter-frame compression. In the case of the intra-frame compression, the refresh switches **126** and **127** are turned off. As a result, the subtracter **120** does not operate. The input image data is subjected to the discrete cosine transform (DCT) by a DCT circuit **89**. The discrete cosine transform is usually performed in two dimension. If the discrete cosine transform is performed for each block of 8 x 8, 8 x 8 coefficients are obtained as the result of the transform. Figure **21A** shows the 8 x 8 coefficients obtained by the DCT. As for the coefficients obtained by the DCT in the figure, the upper-left one is the direct current (DC) component. the more right positions indicate the horizontal higher-frequency components, and the more down positions indicate the vertical higher-frequency components. The respective data obtained by the DCT is inherently a successive amount. However, since the operation is performed by using the digital circuit, each of the 64 coefficients is obtained as a digital value having a predetermined bit width. Next, for the data, an optimum bit assignment is performed for each frequency component by a quantizer **90**. Generally, since the lower-frequency components are important for constituting the image, the bit assignment to the lower frequency components is made larger. Since the higher-frequency components are not so important for constituting the image, the bit assignment thereto is made smaller. Specifically, by using a quantization table shown in Figure **21B**, an optimal bit is assigned by performing a dividing operation for the coefficient obtained as the result of the DCT. In the exemplary quantization table shown in Figure **21B**, the DC components are divided by 8. This means that the lowest three bits of the DC component is rounded down. In this way, the data in which the optimal bit is assigned to each frequency component is output from the quantizer **90**. A VLC circuit **91** performs the variable length coding for the output of the quantizer **90**. In the variable length coding, a shorter code length is assigned to data which appears with a statistically higher frequency. By using the variable length coding, the statistically redundant component included in the data is removed. In such coding, the Huffman code is generally used. However, some devices use the variable length coding and other devices do not use the variable length coding. Thus, the intra-frame compressed data is output from an output terminal **121**.

The output of the quantizer **90** is recovered to the original one by an inverse quantizer **97**. Specifically, the inverse quantizer **97** multiplies the frequency components by the respective values in the quantization table shown in Figure **21B**, in the reversed manner from the quantization. As a result, the amplitude of each frequency component is recovered to the original amplitude. Each coefficient whose amplitude is recovered to the original one by the inverse quantization is reconstructed into the original data by an IDCT circuit **98**. If the reconstructed image data is the intra-frame image data, an adder **122** does not operate. Thereafter, reconstructed image data is delayed by one frame by a delay circuit **123**. The delayed image data is input into a motion estimation circuit **125**. The motion estimation circuit **125** calculates the motion amount from the input image data. The motion estimation circuit **124** moves the position of the image data in accordance with the calculated motion amount. The image data which is thus motion-compensated is used for calculating a difference from the next image data by the subtracter **120**.

The image data of succeeding few frames is used for compressing the differences with respect to the previous frames. The operation as a system is the same as that in the intra-frame compression. However, in the inter-frame compression, the refresh switches **126** and **127** are turned on. The refresh switch **127** is turned on when the difference between frames is to be calculated. When the refresh switch **127** is turned on, the subtracter **120** starts to operate. The refresh switch **126** is repeatedly turned on or off at the same period as that of the refresh switch **127**. During the on period of the refresh switch **126**, the adder **122** operates, so that the inter-frame difference data and the data of the previous frame are added to each other. The added data is used for reconstructing the frame.

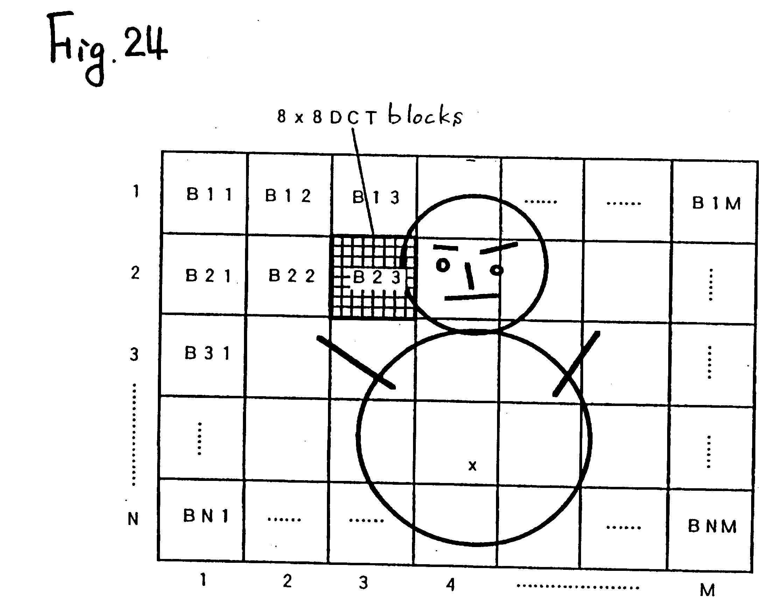

The VLC circuit **91** also performs the variable length coding for the inter-frame compressed data. As a result, the intra-frame compressed data and the inter-frame compressed data are periodically output from the output terminal **121**. Usually, the intra-frame compressed data and the inter-frame compressed data are output in accordance with the order of zigzag scan as shown in Figure **22**. The cycle of the intra-frame compression is appropriately determined depending on the compression rate and the like.

One such image compression method is the MPEG compression method which is, for example, described in the journal INTERFACE, August, 1992, page 124. The method is described in the case of intra-frame in which each intra-frame coding is performed for several frames.

Referring back to Figure **36**, the data which has been subjected to the signal processing required for the recording is input into a data shuffler **67**. The data shuffler **67** rearranges the order of data so that specific data can be located in an area which is commonly traced by the reproducing head at a plurality of predetermined tape speeds.

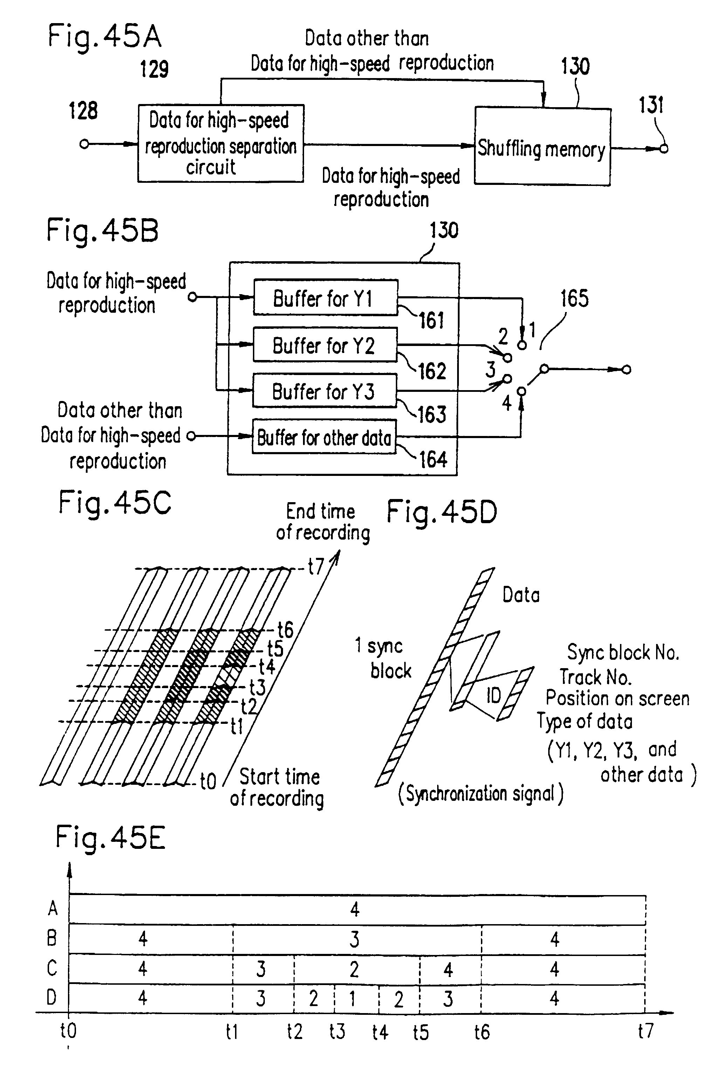

The data shuffler **67** has, for example, a construction shown in Figure **45A**. A signal is input through an input terminal **128**. The input signal is separated into data to be recorded in an area which is commonly traced by the reproducing head at a plurality of predetermined tape speeds (i.e., data for high-speed reproduction) and the other data.

In the case where the input signal is a video signal, it is preferable that the data to be recorded in the area which is commonly traced by the reproducing head at a plurality of predetermined tape speeds may be data which constitutes one frame (or one field). Such data may be, for example, the data which is subjected to the intra-frame compression, or the low-frequency components or the upper bit components of the data. The data for high-speed reproduction and the other data which are separated are rearranged by a shuffling memory **130** in such a manner that the recorded pattern on the tape corresponds to the above-described recorded pattern. The rearranged data is output from an output terminal **131**.

Referring back to Figure **36**, to the data which is shuffled for the high-speed reproduction, an error correction code is added by an error correction code adding circuit **68**. Thereafter, the data is subjected to the modulation required for the recording by a modulator **69**. Then, the modulated data is recorded on the tape-like recording medium **15** by using the recording head **60**.

Next, the process for reproducing the data recorded on the tape-like recording medium **15** is described. The data reproduced by the reproducing head **61** is demodulated by a demodulator **70**, and any correctable error is corrected by an error corrector **71**. Then, the order of the data is recovered to be the original one by a data deshuffler **72**. The data deshuffler **72** serves to recover the locations of the data for high-speed reproduction and the other data which are periodically located on the tracks on the tape by the data shuffler **67** into the original locations.

The data in which the order is recovered by the data deshuffler **72** is reconstructed into the original image by a signal processor **73**.

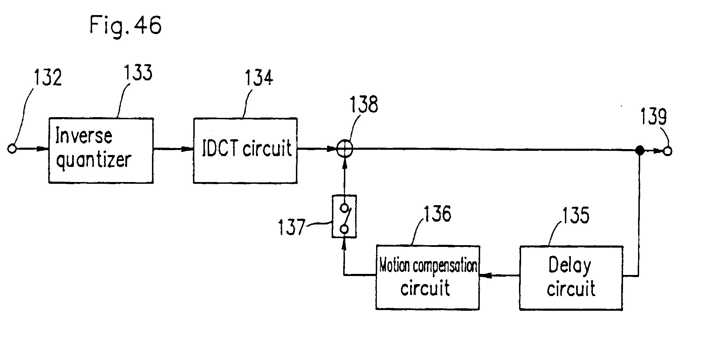

The signal processor **73** performs the reversed processing from that of the signal processor **66**. The image reconstructing circuit corresponding to the image compression circuit shown in Figure **44** is shown in Figure **46**. In this example, it is assumed that the variable length coding (VLC) is not performed during the recording, so that a circuit for decoding the variable length coding (VLD) is not shown in Figure **46**. When the VLC is performed during the recording, it is necessary to first perform the VLD during the reproduction. The quantized data input from the input terminal **132** to which the VLC is performed if necessary is reversed to the original one by an inverse quantizer **134**. The inverse quantizer **134** is identical with the inverse quantizer **97** for the recording. The data which is inversely quantized is then subjected to the inverse discrete cosine transform by an IDCT **134**. If the output data from the IDCT circuit **134** is the intra-frame compressed data, an adder **138** does not operate. If the input data is the inter-frame difference data, the reconstructed signal output to an output terminal **139** is delayed by one frame by a delay circuit **135**. The delayed reconstructed signal is compensated for the motion by a motion compensation circuit **136**. Then, the motion-compensated signal is added to the output data of the IDCT circuit **134**, and then output from the output terminal **139**.

The signal is finally recovered to be the original analog video signal by a D/A converter **65**, and then output from an output terminal **63**.

During the high-speed reproduction, it is sufficient to reproduce only the data for high-speed reproduction in accordance with the above-described reproduction process.

For the data for high-speed reproduction, other than the intra-frame compressed signal, a signal required for search such as a signal indicating the time of recorded data may be used. In such a case, the signal processors 66 and 73 for recording and reproduction can be constructed as a circuit corresponding to the signal contents. Alternatively, if an identification code is added to the data for high-speed reproduction, and the data contents can be identified based on the identification code, the application flexibility of the apparatus is enhanced, and the apparatus can have greater versatility.

As described above, according to the signal recording and reproducing apparatus of the first example according to the invention, the data for high-speed reproduction is located in an area which is commonly traced by the reproducing head at three or more reproduction speeds, so that the required data can be obtained at each of the three or more reproduction speeds.

### Example 2

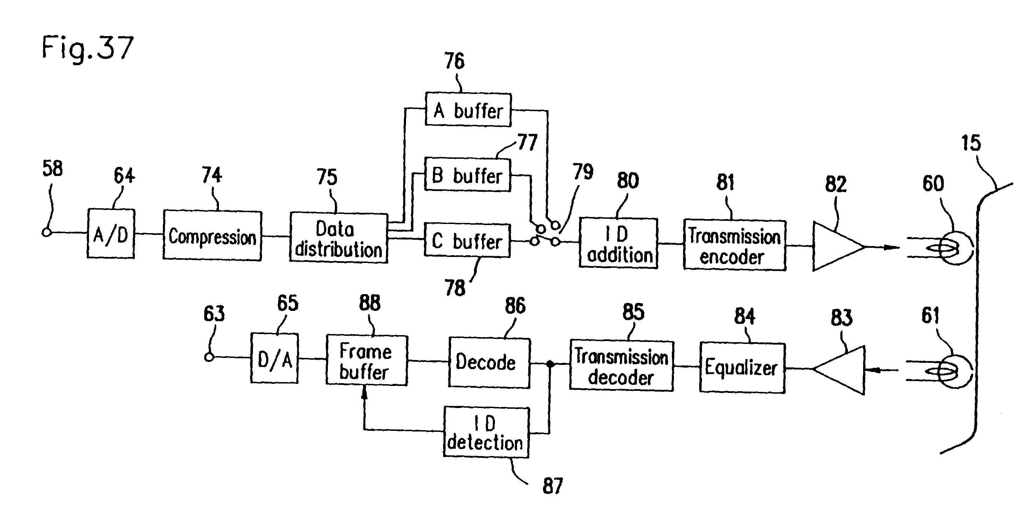

Figure **37** shows the construction of a signal recording and reproducing apparatus of a second example according to the invention.

A video signal which is input from an input terminal **58** and converted into a digital form by an A/D converter **64** is compressed by an image compression circuit **74**. For example, the image compression circuit **74** may have the above-described construction shown in Figure **44**. However, the image compression circuit **74** is not essential to the implementation of the invention, so that it is not necessarily provided. The most fundamental data among the image data compressed by the image compression circuit **74** is transferred to an A data buffer **76** by a data distributor **75**. The second most fundamental data among the compressed image data is transferred to a B data buffer **77** by the data distributor **75**. The remaining image data is transferred to a C data buffer **78** by the data distributor **75**. The data buffers **76** to **78** are memories for temporarily storing the respective data. The reading of data from the data buffer **76** - **78** is stopped until the head comes to a predetermined position on the tape.

When the head comes to the predetermined position on the tape, a switch **79** operates so as to output the data from one of the data buffers **76** - **78**. To the output data, a data ID indicating the position and components of the image is added by an ID adding circuit **80**. Then, an error correction code is further added and then the data is modulated by a transmission encoder **81**. The modulation is performed by a general digital modulation method such as NRZI or 8-14. The data modulated by the transmission encoder **81** is recorded on the tape **15** via a recording amplifier **82** and a head **60**. The construction of the rotating drum is shown in Figure **19**. The heads which are mounted on the rotating drum so that they are diametrically opposed so as to have azimuth angles (L, R) which are different from each other.

In the reproduction, the reproduced signal reproduced via a head **61** is fed through a preamplifier **83** and a reproduction equalizer **84**, and demodulated by a transmission decoder **85**, so that the error is corrected. The reproduced data is subjected to the decode processing which is reversed from the compression during the recording by a decoder **86**, and stored at a location of a frame buffer **88** designated by an address examined in an ID detector **87**. The data in the frame buffer **88** is sequentially read out at a given rate, and then converted into an analog form by a D/A converter. Then, the analog signal is output as a video signal.

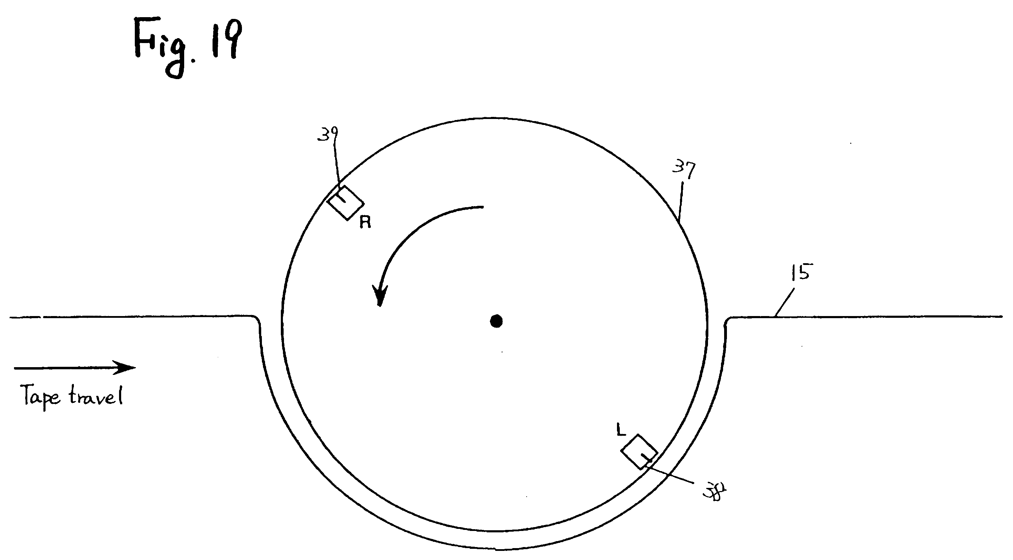

Figure **9** shows a pattern recorded by the signal recording and reproducing apparatus of the second example according to the invention. In Figure **9**, the recorded tracks **1** and **2** are obliquely formed on the tape **15**.

Into first portions **5** on the tracks, the first fundamental data from the A data buffer **76** shown in Figure **37** is written. Into second portions **16**, the second fundamental data from the B data buffer **77** is written. The first portion **5** is formed on a portion of a track which is selected as every ninth track. The second portion **16** is formed on a portion of a track which is selected as every third track, but the second portion **16** does not overlap the first portion **5**. The first portions **5** are successively formed on the tracks alternately having different azimuth angles (R, L). Also, the second portions **16** are successively formed on the tracks alternately having different azimuth angles (R, L).

During the high-speed reproduction, the head scans the tape **15** in such a manner that the head obliquely traverses the tracks. In addition, the length of data along the tape extending direction should be set so as to be equal to, or shorter than the length of data which can be reproduced at the reproduction speed. If the head width is set to be about 1.5 times as large as the track width, the reproducible data length at x9 speed is about 1/6 of the total track length. The data length becomes larger as the tape speed is lowered. Accordingly, at x2 speed, it is possible to obtain the data on almost all of the tracks.

The solid line **3** shown on the tape **15** indicates the head path on the tape **15** when the tape is made to travel at x9 speed. As is apparent from Figure **9**, the head path obliquely traverses nine tracks at one time. When a certain head path starts from a track having an azimuth angle R, the next head path starts from a track having an azimuth angle L. Thus, the azimuth angles of the points from which the head path starts are alternately R and L.

The broken line **4** shown in the tape **15** indicates the head path on the tape **15** when the tape is made to travel at x3 speed. As is apparent from Figure **9**, the head path obliquely traverses three tracks at one time. When a certain head path starts from a track having an azimuth angle R, the next head path starts from a track having an azimuth angle L. Thus, the azimuth angles of the points from which the head path starts are alternately R and L.

As is seen from Figure **9**, the first portions **5** are commonly traced at both x3 and x9 speeds, so that the first fundamental data which is required for the special reproduction can be obtained at respective x3 and x9 speeds. In these cases, the tape **15** is made to travel by means of a capstan motor and a pinch roller the same as in a usual VTR or the like. However, it is necessary to perform phase control in the case of x3 or x9 speed, in order for the head to stably pass the portion **5**. This technique is usually used for the purpose of fixing the noise bar at a given position in the screen so as to eliminate trouble in the displayed image, in a VTR for domestic use of VHS type or the like. With such a construction, it is possible to stably reproduce the specific reproduced image at both of x3 and x9 speeds. Only during the x3 speed, the second fundamental data in the second portions **16** can be additionally obtained, so that it is possible to obtain a reproduced image with higher quality than in the case of a reproduction at x9 speed. In general, the motion of the displayed image is slower at the lower reproduction speed, so that a higher quality is required for the lower reproduction speed. Thus, according to the second example, a system with a good balance can be constructed. In Figure **9**, the length of the second portion **16** along the track direction is larger than that of the first portion **5** along the track direction. This is because, as the reproduction speed is lowered, the angle formed by the head and the track becomes smaller, so that the period in which the data can be effectively obtained is extended.

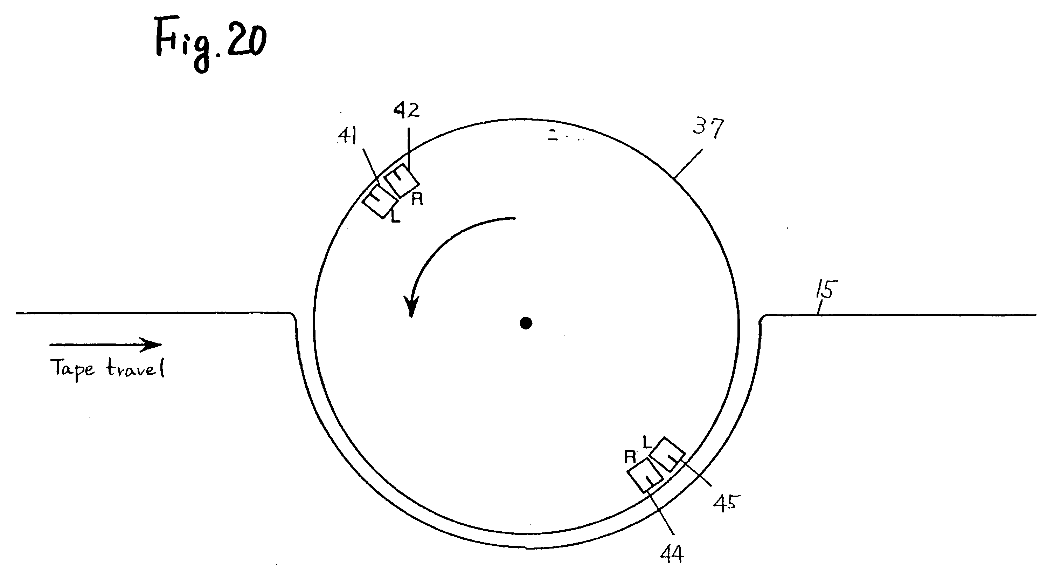

Figure **10** shows another pattern recorded by the signal recording and reproducing apparatus of the second example according to the invention. In Figure **10**, recorded tracks **17** are obliquely formed on the tape **15**, the same as in the pattern shown in Figure **9**. In first portions **18** on the tracks **17**, the first fundamental data from the A data buffer **76** shown in Figure **37** is written. In the second portions **19** on the tracks **17**, the second fundamental data from the B data buffer **77** is written. The second portions **19** are formed on the tracks on which the first portions **18** are formed. The solid line **20** shown on the tape **15** indicates the head path on the tape **15** when the tape **15** is made to travel at x9 speed. The broken line on the tape **15** indicates the head path when the tape **15** is made to travel at x3 speed.

As is seen from Figure **10**, the first portions **18** are traced by the head paths **20** in the case of x9 speed. The second portions **19** are traced by the head paths **21** in the case of the x3 speed. An area of the second portion **19** is larger than that of the first portion **18**. This is because, as the reproduction speed is lowered, the angle formed by the head and the track becomes smaller, so that the portion which can be traced by the head is widened.

Figures **9** and **10** show the cases in which the second portions are formed at the different positions. Alternatively, these cases may be combined. In such a case, a larger number of second portions can be formed. In addition, since the data is located on a portion of the track recorded at the normal speed (x1 speed), it is possible to obtain without failure data in the reproduction at the normal speed. Therefore, the first and the second fundamental data can be used with the data for the normal reproduction.

Thus, it is possible to constitute a system which can attain a special reproduction without increase in total information amount. In the case where the amount of the first and second fundamental data is limited to be smaller than the amount of the remaining data, if the first and second fundamental data is separately located from the data for normal reproduction, the total information amount is not so increased. The first and second fundamental data can be located on both of a portion for normal reproduction and a portion for special reproduction. In such a case, it is unnecessary to provide the memory for storing the first and second data in the reproduction at normal speed, so that the reproduction circuit is simplified.

It is known that among the DCT coefficients shown in Figure **21A**, the one which is located at the upper and leftward position is generally more important for image reproduction. For example, the image data may be classified into three types. Specifically, the DC component at the uppermost and leftmost position is used as the first fundamental data, the A12 and A21 components are used as the second fundamental data, the remaining components are used as the other data.

Alternatively, the image data can be classified into three types in the following manner. Only the upper bits of the DC component are used as the first fundamental data, only the upper bits of the A12 component and the upper bits of the A21 component are used as the second fundamental data, and the remaining components including the lower bits of the DC component, the lower bits of the A12 component, and the lower bits of the A21 component are used as the other data.

It is not necessary that the fundamental data to be used for high-speed reproduction is extracted from all of the frames of the original image. For example, the fundamental data for high-speed reproduction can be extracted from frames which are reduced at a predetermined cycle. For example, the first and the second fundamental data can be extracted from the frames which are selected at a rate of one out of 8 frames. In such a case, the information amount required for the first and second fundamental data can be reduced to be 1/8.

In this invention, it is possible to handle the above-described intra-frames as the first fundamental data. Alternatively, the first and second fundamental data can be extracted from the intra-frames. In the case where the video signal is of the component type and the video signal includes color difference signals in addition to the luminance signal, the first and second fundamental data can be extracted from the luminance signal and the color difference signals, considering the importance for constituting the image. Moreover, the first and second fundamental data can be extracted from the information indicating the page of video frame such as a time code, instead of the video signal, and the extracted data can be located in the first and second portions. In such a case, in the high-speed reproduction, the search and the like can be automatically performed by detecting the time code.

In the above-described example, the heads are mounted on the rotating drum **37** in such a manner that they are diametrically opposed, as is shown in Figure **19**. The heads **38** and **39** have respective azimuth angles R and L which are different from each other. However, if a guard band is provided between the tracks, a rotating drum having heads with the same azimuth angles can attain the same effects as in the case of the rotating drum shown in Figure **19**.

Figure **20** shows the construction of the helical scan type scanner. The heads **41** and **42** having respective azimuth angles which are different from each other, are mounted on the rotating drum **37** at adjacent positions with different track pitches in height.

Figure **11** shows the recorded pattern on the tape **15** formed by the signal recording and reproducing apparatus according to the invention, when the rotating drum shown in Figure **20** is employed. In Figure **11**, the first fundamental data **22** and the second fundamental data **23** are located every 8 paired tracks on the tape **15**. For simplicity, in Figure **11**, the paired tracks formed by the heads **41**(L) and **42**(R) are represented by one track. For the same reason, the head paths are represented by a center line between the two head paths.

The solid line **24** indicates the head-pair path in the case of x8 speed. The one dot chain line **25** indicates the head-pair path in the case of x4 speed. The broken line **26** indicates the head-pair path in the case of x2 speed.

As is apparent from Figure **11**, the first fundamental data can be obtained at all of the special reproduction speeds, i.e., x2, x4, and x8 speeds. Furthermore, even in the case of the reproduction at x8 speed, it is possible to surely obtain a predetermined special reproduction image quality. In addition, in the cases of the reproduction at x2 and x4 speeds, the second fundamental data can be obtained together with the first fundamental data, so that a special image with improved quality can be obtained. As is seen from Figure **11**, there is an area which is traced by the head only in the case of x2 speed. Thus, it is possible to locate the third fundamental data in this area.

Figure **12** shows the detailed positional relationship between the tracks and the head path shown in Figure **11**. As is shown in Figure **12**, there are paired tracks **27** and **28** formed on the tape **15** by the head with azimuth angles R and L, respectively. The paired tracks **27** and **28** obliquely intersect the head paths **29** and **30** formed by the heads with azimuth angles R and L. The fundamental data is located in the intersecting portion.

Next, an example case where only one of two head-pairs mounted on the rotating drum shown in Figure **20** is used for normal recording and reproduction is described. In this example, only one head-pair which is mounted at one side of the rotating drum having two head-pairs is used during the recording. Accordingly, the number of tracks formed per unit time is half that compared with the case of two head-pairs. This is effective in the case of a long-time mode at a half data rate. In such a case, even if the one head-pair which is not used is positioned on the tape, data is not recorded.

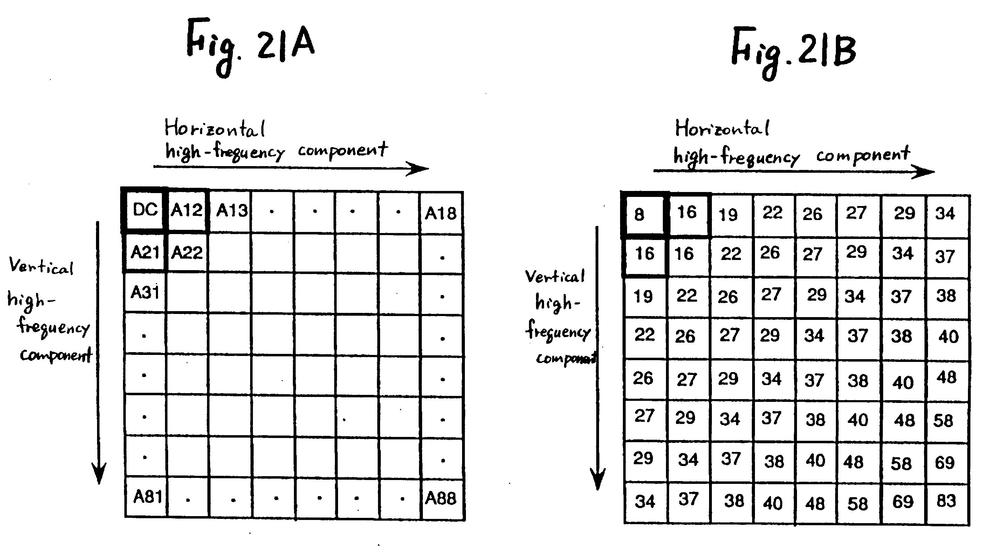

Figure **13** shows the recorded pattern formed on the tape **15** by the signal recording and reproducing apparatus of the invention when only one head-pair mounted at one side of the rotating drum shown in Figure **20** is used. In Figure **13**, the recorded tracks **17** are formed on the tape **15** by the head-pair. For simplicity, in Figure **13**, the paired tracks formed by the two heads **41**(L) and **42**(R) are represented by one track. Also, the head paths of the two heads are represented by a center line of the two head paths. The first fundamental data 31 and the second fundamental data 32 are located every eighth track, respectively. The solid line 33 indicates the head path in the case of x4 speed. The dotted line 34 indicates the head path in the case of x8 speed. As is seen from Figure 13, the first fundamental data can be obtained in the reproduction at x8 speed, thereby surely obtaining a special reproduced image with a good quality. In addition, in the reproduction at x4 speed, the second fundamental data can be obtained together with the first fundamental data, whereby it is possible to reproduce a special reproduced image with an improved image quality.

Now, the head-pair which is not used during the recording (i.e., the reproduction auxiliary head-pair) is described. The one dot chain line 35 in Figure 13 indicates the path of the reproduction auxiliary head-pair at x8 speed. The path of the reproduction auxiliary head-pair depicts another path which is parallel to the path of the recording head, and positioned at the middle between the paths of the recording head. This is because the construction of the reproduction auxiliary head-pair is the same as that of the recording head-pair, but the reproduction auxiliary head-pair is mounted so as to be diametrically opposed to the recording head-pair. As is seen from Figure 13, the path 35 of the reproduction auxiliary head passes the second fundamental data, so that both the first and the second fundamental data can be obtained in the reproduction at x8 speed. As a result, the image obtained in the reproduction at x8 speed has the same quality as that obtained in the reproduction at x4 speed.

### Example 3

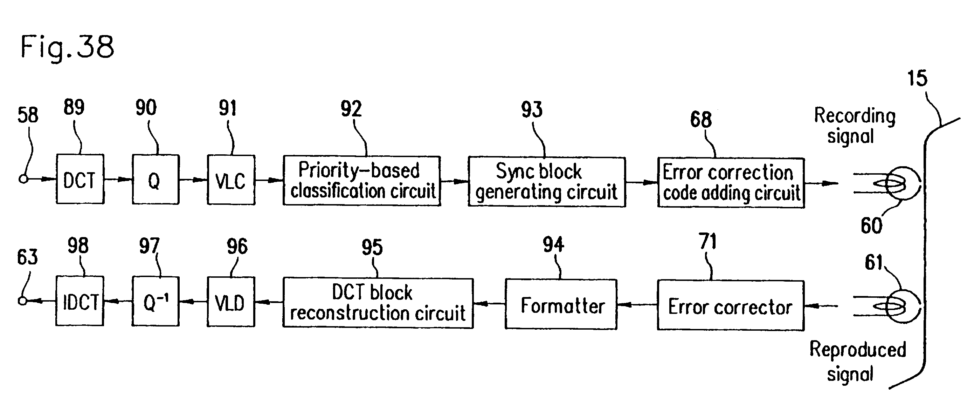

Hereinafter, a signal recording and reproducing apparatus of a third example according to the invention will be described. Figure **38** shows the construction of the signal recording and reproducing apparatus of the third example. As is shown in Figure **38**, the signal recording and reproducing apparatus includes a priority-based classification circuit **92**, a sync block generation circuit **93**, the formatter **94** and a DCT block reconstructor **95**.

The digital video signal input through the input terminal **58** is compressed by using the above-described DCT, so as to reduce the redundancy. In this example, it is assumed that the compression is the intra-frame compression, but alternatively, the inter-frame compression can also be used. The DCT circuit **89** divides the digital data constituting one screen into (M x N) blocks (B11 - BNM) as is shown in Figure **24**, and performs DCT for the respective (M x N) blocks. The transform coefficients (DC, A12-A88 in Figure **21A**) obtained by the DCT represent the orthogonal base components in two dimension.

The quantizer **90** quantizes the respective transform coefficients obtained by the DCT. The quantization can be attained by dividing the transform coefficient by a predetermined value at a position corresponding to the transform coefficient. For example, the quantization for the DC component is attained by dividing the DC component by 8. The quantization for the A88 component is attained by dividing the A88 component by 83. The quantization is performed for all of the DCT blocks divided by the DCT circuit **89**.

The variable length encoder **91** assigns codes having an appropriate length to the quantized transform coefficients, respectively, depending on the occurrence frequencies of the quantized transform coefficients. The variable length coding is performed in the order of the zigzag scan, as is shown in Figure **22**. The Huffman code which is one of entropy coding is generally used for coding.

In the Huffman coding, data is classified by using two parameters, i.e., the number of successive values of 0, and the following value. A shorter code is assigned to the data with higher occurrence frequency, and a longer code is assigned to the data with lower occurrence frequency. For the Huffman code, a so-called two-dimensional Huffman code is often used. As the result of the variable length coding, the statistic redundancy included in the quantized DCT coefficient is eliminated. It is not necessary to assign the variable length codes to all of the data in the DCT block. In some cases, the variable length code is assigned to part of data in the DCT block, and the fixed length code is assigned to the remaining part of data. For example, the DC component has no statistical deviation, so that it is processed as being a fixed length. Herein, it is assumed that the DC component has a fixed length. As for the AC components, it is assumed that they are classified into the upper bits of the lower-frequency components and the remaining AC components, and then the variable length coding is performed for the respective components by a unit of each DCT block.

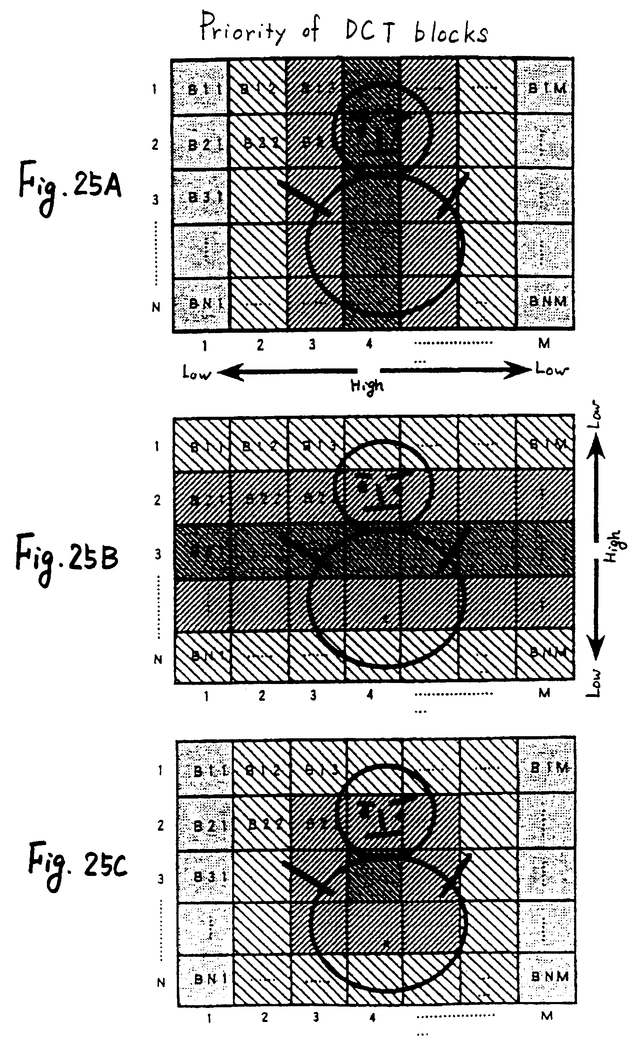

The priority-based classification circuit **92** gives first priorities to the variable length coded data, depending on the positions of the DCT blocks on the screen. The values of the first priorities are preferably set, for example, in such a manner that the highest one is located at the center of the screen and they gradually become lower toward the periphery thereof, as is shown in Figure **25A**. Next, the priority-base classification circuit **92** gives second priorities to the variable length coded data, depending on the coefficients in the DCT block. The values of the second priorities are preferably set, for example, in such a manner that the highest one is given to the upper bits of the DC component, and they become lower in the order of the upper bits of the lower-frequency AC components (zigzag order), the lower bits of the DC component, the lower bits of the lower-frequency AC components (zigzag order), and the remaining AC components (zigzag order), as is shown in Figure **23**. As to the AC components, the variable length coding is performed for the upper bits of the lower-frequency thereof and for the remaining components, respectively, by a unit of each DCT block, so that the priorities are given to the variable length codes.

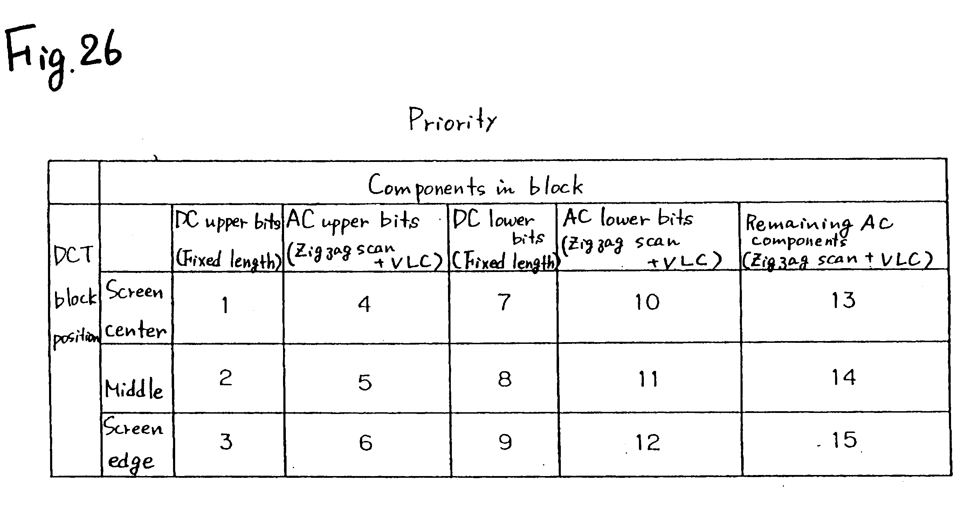

Figure **26** shows an exemplary determination table for determining the total priorities based on the first and second priorities. The horizontal direction of Figure **26** shows the classification depending on the coefficients in the DCT block based on the second priorities, and the vertical direction of Figure **26** shows the classification depending on the positions of the DCT blocks on the screen based on the first priorities. If the first priorities are used in preference to the second priorities, the total priorities have the order designated by the numerals in Figure **26**. In Figure **26**, the lower numeral indicates the higher priority. The determination rule of the priority is not limited to the rule shown in Figure **26**. Alternatively, the data may be classified in accordance with other criteria, or priorities other than the priorities described given may be given. The values of priority (the second priorities) depending on the positions of DCT blocks on the screen may be set as is shown in Figures **25B** and **25C**. If necessary, any desired position of the screen may be given a higher priority. For example, when a specific screen is to be constructed, a position where a more important element exists may given a higher priority.

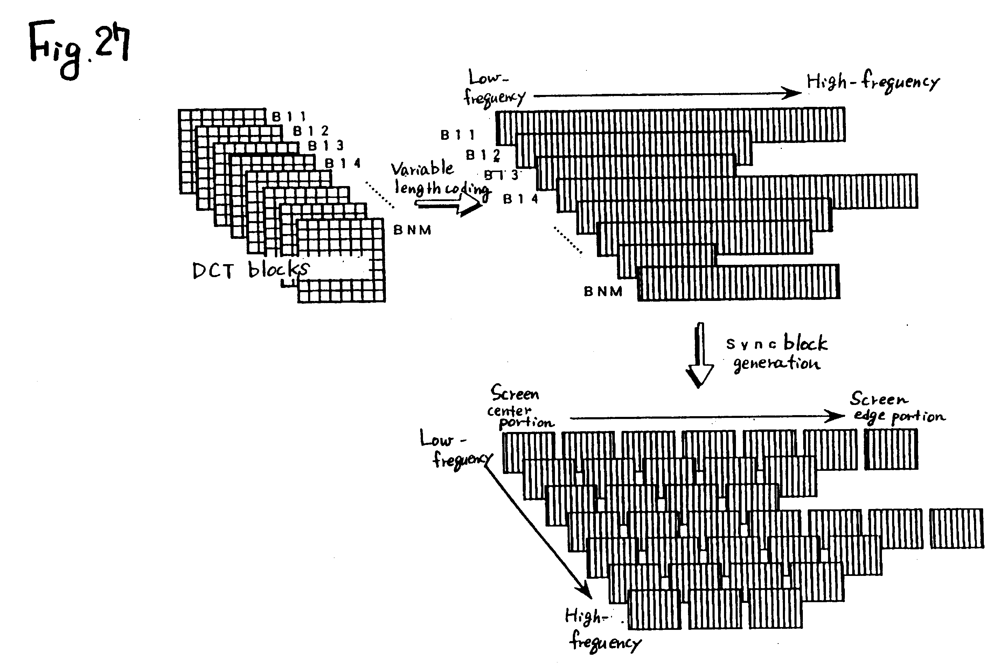

The priority-based classification circuit **92** rearranges the variable length coded data in such a manner that the data having the higher priority is located at a position which is commonly scanned by the reproducing head in all of the cases of three or more reproduction speeds, based on the first and second priorities. In the example shown in Figure **27**, the variable length coded data is rearranged so as to have the order from the lower components to the higher components, and the order from the components corresponding to the DCT block positioned at the center of the screen to the components corresponding to the DCT blocks positioned at the periphery of the screen. In order to simplify the explanation, it is assumed that the priority for the upper bit of a specific component is equal to the priority for the lower bit of the specific component.

The sync block generation circuit **93** divides the data rearranged based on the priorities by the priority-based classification circuit **92** into sync blocks. The term "sync block" means a block as a unit for recording and reproducing. As is shown in Figure **45D**, the recorded track is constituted of sync blocks which is a minimum unit for recording and reproducing. The sync block includes a sync signal **Sync**, **ID** and data which are necessary for recording and reproducing. The sync block **Sync** and **ID** are added to the data by the sync block generating circuit **93.** For example, **ID** includes an identification code indicating the type of data, a position of the data on the screen, a recorded track No. and a sync block No., and is used for the reconstruction of image and the tracking control during the reproduction.

The error correction code adding circuit **68** adds an error correction code to the sync block. Thereafter, the sync block with the error correction code is recorded on the tape-like recording medium **15** via the recording head **60**.

As the scanner used for recording and reproducing, for example as is shown in Figure **20**, a drum **37** having recording heads **41**(L) and **42**(R) and heads **44**(R) and **45**(L) diametrically opposed to the recording heads **41**(L) and **42**(R) can be used. The heads **44**(R) and **45**(L) are used for auxiliary heads dedicated for reproduction and not used for recording. The tape-like recording medium **15** obliquely wraps the scanner having such a construction, so as to perform the helical scan recording.

Figure **14** shows a pattern of recorded tracks on a tape and the head path during the variable-speed reproduction. The reference numerals **1** and **2** denote the tracks recorded by the recording heads **41**(L) and **42**(R), respectively. The recording heads **41**(L) and **42**(R) have respectively different recording azimuths, so that the adjacent tracks on the tape are recorded with different azimuths. The arrows in Figure **14** indicate the paths of RL paired heads, or R'L' paired auxiliary heads during the high-speed reproduction. The thinner arrow indicates the head path in the case of x4 speed. The intermediate arrow indicates the head path in the case of x8 speed. The thick arrow indicates the head path in the case of x16 speed. In Figure **14**, the portion **Y1** is commonly traced by the head in the cases of all the x4, x8 and x16 speeds. The portion **Y2** and the portion which is hatched the same as in the portion **Y2** are portions which are commonly traced by the head in the cases of x4 and x8 speeds. The portion **Y3** and the portion which is hatched the same as in the portion **Y3** are portions which are traced by the head in the case of x4 speed. In accordance with the priorities determined by the determination table shown in Figure **26**, the data is recorded in the portions **Y1**, **Y2**, and **Y3** in the order of priority. In this way, the data with higher priority is recorded in the portion which is commonly traced by the head at a lot of speeds, so that it is possible to realize a high-speed reproduction in which an image is reconstructed only by using the data with higher priority. In other words, in the low-speed reproduction, an image including components from lower to higher components can be reproduced. As the reproduction speed becomes higher, it becomes possible to obtain a high-speed reproduced image in which the components of higher frequencies or lower bits or the components corresponding to the screen periphery are gradually reduced.

The signal processing during the recording will be described below in more detail.

As is shown in Figure **45A**, the priority-based classification circuit **92** has a high-speed reproduction data separation circuit **129** and a shuffling memory **130**. The data input through the terminal **128** is separated into the data for high-speed reproduction and the other data by the high-speed reproduction data separation circuit **129**. The data for high-speed reproduction and the other data are input into the shuffling memory **130**. The shuffling memory **130** includes, as is shown in Figure **45B**, a **Y1** buffer **161** for temporarily storing the data for high-speed reproduction corresponding to the portion **Y1**, a **Y2** buffer **162** for temporarily storing the data for high-speed reproduction corresponding to the portion **Y2**, a **Y3** buffer **163** for temporarily storing the data for high-speed reproduction corresponding to the portion **Y3**, a buffer **164** for temporarily storing the other data corresponding to the portions other than the portions **Y1** to **Y3**, and a selector **165** for selecting one of the outputs of the buffers **161-164**. The selector **165** has terminals **1** to **4** which are connected to the outputs of the buffers **161** to **164**, respectively. The data stored in the buffers **161-164** are output by switching the selector **165** at a predetermined timing. The switching timing of the selector **165** will be described below.

The recorded tracks shown in Figure **14** are classified into four types, **A**, **B**, **C** and **D**, respectively, as is shown in Figure **45C**. These four types are periodically recorded onto the tape. In Figure **45C**, t₀ indicates the time when the head starts to record data onto each track, and t₇ indicates the time when the head terminates the recording of data.

In the example shown in Figure **45C**, track **A** is a track for recording data other than the data for high-speed reproduction. When the head traces the track **A**, the selector **165** is controlled so as to always select terminal **4**, as is shown in row **A** in Figure **45E**. As a result, the data stored in the buffer **164** other than the data for high-speed reproduction is recorded on track **A**. Track **B** is a track for recording the data for high-speed reproduction onto the portion **Y3** in the vicinity of the center thereof. When the head traces track **B**, the selector **165** is controlled so as to select the terminal **4** from time t₀ to time t₁, as is shown in row **B**. From time t₁ to time t₆, the head passes the portion **Y3**. The selector **165** is controlled so as to select the terminal **3** from time t₁ to time t₆. As a result, the data for high-speed reproduction stored in the **Y3** buffer **163** is recorded onto the portion **Y3**. The selector **165** is controlled so as to select the terminal **4** again from time t₆ to time t₇. Track **C** is a track for recording the data for high-speed reproduction onto the portion **Y3** in the vicinity of the center of the track and onto the portion **Y2** in the vicinity of the center of the portion **Y3**, respectively. As is shown in row **C**, the selector **165** is controlled so as to select the terminal **4** from time t₀ to time t₁ and from time t₆ to time t₇, to select the terminal **3** from time t₁ to time t₂ and from time t₅ to time t₆, and to select the terminal **2** from time t₂ to time t₅. From time t₂ to time t₅, the head passes the portion **Y2**. As a result, the data for high-speed reproduction stored in the Y2 buffer **162** is recorded onto the portion **Y2**. Track **D** is a track for recording the data for high-speed reproduction onto the portion **Y3** in the vicinity of the center of the track, onto the portion **Y2** in the vicinity of the center of the portion **Y3**, and onto the portion **Y1** in the vicinity of the center of the portion **Y2**, respectively. As is shown in a row **D** in Figure **45E**, the selector **165** is controlled so as to select the terminal **4** from time t₀ to time t₁ and from time t₆ to time t₇, to select the terminal **3** from time t₁ to t₂ and from time t₅ to time t₆, to select the terminal **2** from time t₂ to time t₃ and from time t₄ to time t₅, and to select the terminal **1** from time t₃ to time t₄. The head passes the portion **Y1** from time t₃ to time t₄. As a result, the data for high-speed reproduction stored in the Y1 buffer **161** is recorded onto the portion **Y1**.

In this way, by switching the selector **165** in the synchronous manner with the types of tracks to be recorded and the position of the recording head, it is possible to realize the recorded pattern shown in Figure **14**. It is understood that the recorded pattern shown in Figure **14** is only an exemplary one, and the recorded pattern is not limited to this specific one. It is sufficient to switch the selector **165** at a predetermined timing based on the recorded pattern. By appropriately controlling the switching timing of the selector **165**, a desired recorded pattern can be obtained. In the case where there is a time delay from the switching of the selector **165** to the time when the data is actually recorded on the track, it is sufficient to control the switching of the selector **165** at a timing earlier by the time delay.

Next, referring back to Figure **38**, the signal processing in the production will be described.

As to the data reproduced by the reproducing head **61**, a bit error which may occur in the recording and reproducing is corrected by an error corrector **71**. Then, the sync signal which is added for each sync block is removed by the formatter **94**, and the data and the ID indicating the contents of the data are supplied to a DCT block reconstruction circuit **95**. The process in the DCT block reconstruction circuit **95** is completely reversed from the process of the priority-based classification in the recording. That is, in the DCT block reconstruction circuit **95**, the DCT block is reconstructed from respective codes which are dispersed into the sync blocks. As to the codes recovered into the DCT block, the codes which were subjected to the variable length coding in the recording are recovered so as to be the fixed length codes in the variable length code decoder **96**. The fixed length codes are subjected to the inverse quantization in an inverse quantizer **97**. In the inverse quantization, the value in the quantization table which was used in the recording is multiplied. The inverse quantized codes are finally subjected to the inverse DCT in an inverse DCT circuit **98**, and then the reproduced image is obtained at the output terminal **63**.

In the reproduction at x1 speed, the image can be reconstructed by using all of data recorded on the tape. In the reproduction at a high speed, the image is reconstructed by using the data which can be reproduced.

As described regarding the tape patterns, the image is reconstructed only by using the data having the higher priority.

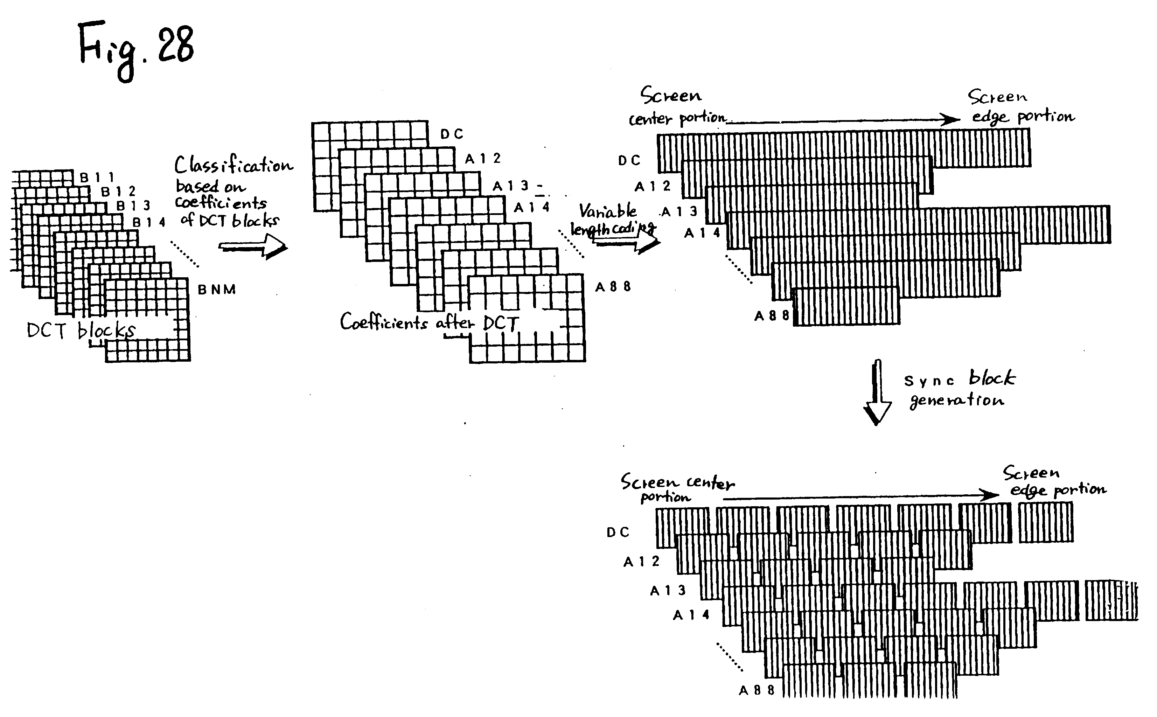

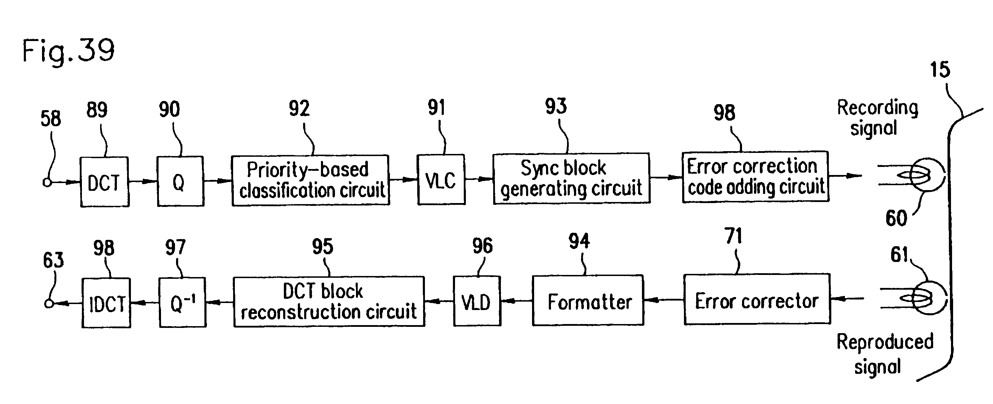

It is appreciated that the process of the priority-based classification circuit **92** may be performed prior to the variable length coding as is shown in Figure **39**. In such a case, for example, as is shown in Figure **28**, the coefficients are classified into component units each having equal frequency after the DCT, and then the variable length coding is performed for each coefficient unit. Accordingly, in the reproduction, the process of the DCT block reconstruction circuit **95** is performed after the process of the variable length code encoder.

The method according to the invention can be applied to any compression for each block unit which is not limited to the compression by using the orthogonal base transform. For example, another compression process such as ADRC (Adaptive Dynamic Range Coding) may be used.

In this example, two types of priorities, i.e., the priority based on the positions in the screen and the priority relating to the importance of the DCT coefficient are used. In the high-speed reproduction, only the data having the higher priority is used, so as to reconstruct the image. Therefore, even when the amount of obtained data is reduced in the high-speed reproduction, an image for one screen can be reconstructed only by using the data in the screen.

It is appreciated that the invention can be applied to any other recording and reproduction in addition to the video signal recording and reproduction by helical scanning. For example, the invention can be applied to the recording and reproduction of a disk.

### Example 4

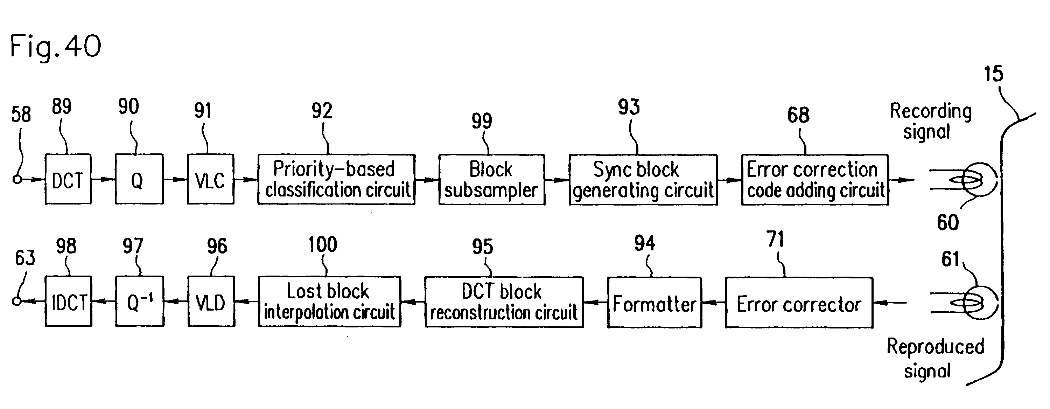

Hereinafter, a signal recording and reproducing apparatus in a fourth example according to the invention will be described. Figure **40** shows the construction of the signal recording and reproducing apparatus in the fourth example according to the invention. The signal recording and reproducing apparatus in the fourth example includes, in addition to the construction shown in Figure **38**, a block subsampler **99** and a lost block interpolation circuit **100**. The same circuits are designated by the same reference numerals as those shown in Figure **38**, and the detailed descriptions thereof are omitted.

The digital video signal input through the input terminal **58** is first processed in the DCT circuit **89**. The compression process is the same as the compression process in the signal recording and reproducing apparatus in the third example, so that the description thereof is omitted. Herein, the intra-frame compression is used, but alternatively, the inter-frame compression may be used.

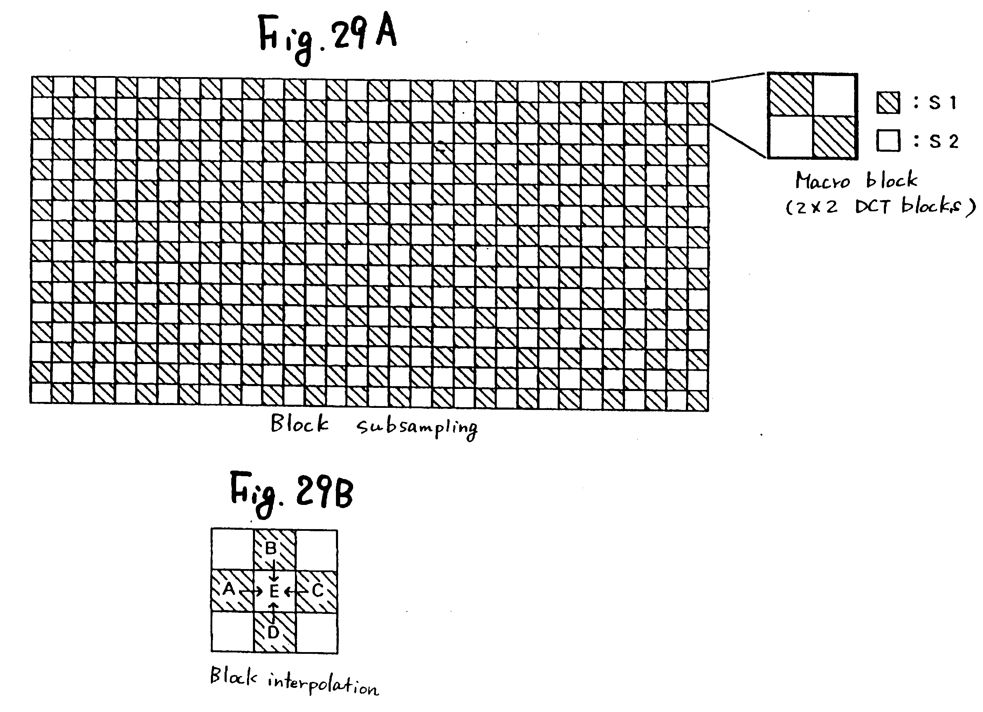

The codes which are rearranged depending on the priorities thereof in the priority-based classification circuit **92** are input into the subsampler **99**. The subsampler **99** performs the subsampling process by each block unit, for the codes corresponding to predetermined components among the input codes. It is preferable that the predetermined components may include at least the DC component. This is because the DC component is essential for reconstructing an image of one screen. In order to perform the subsampling process by a block unit, it is necessary to previously classify a plurality of blocks which constitute an image of one screen into the predetermined number of groups. For example, as is shown in Figure **29A**, the plurality of blocks which constitute an image of one screen are classified into a first group and a second group in checker. Hereinafter, the first group is referred to as group **S1** and the second group is referred to as group **S2**. The group **S1** includes hatched blocks and the group **S2** includes the other blocks. The subsampler **99** rearranges the codes in such a manner that the codes included in the group **S1** and the codes included in the group **S2** are recorded in predetermined positions on the tape, respectively, and then outputs the codes.

The thus classified codes are divided into sync blocks by the sync block generation circuit **93**. The sync block is a unit for recording and reproducing. Basically, the codes are divided in such a manner that the codes having almost the same priority are included in one and the same sync block, and the codes having different priorities are included in the different sync blocks. In addition, the codes are divided in such a manner that the codes in the group **S1** and the codes in the group **S2** which are classified by the block subsampler **99** are included in the different sync blocks.

When the codes are divided into sync blocks, the sync block generation circuit **93** adds an ID indicating the type of data in a sync block and a sync signal required for the recording and reproducing.

To each of the codes divided into the sync blocks, an error correction code is added by the error correction code adding circuit **68**, so that the codes become the recording signals. The recording signals are recorded onto the tape-like recording medium **15** by using the recording head **60**.

For the scanner used for the recording and reproducing, for example, a scanner shown in Figure **20** is used.

The recorded pattern recorded by the signal recording and reproducing apparatus in the fourth example is shown in Figure **14** the same as in the case of the signal recording and reproducing apparatus in the third example. For example, in accordance with the priority determined by the determination table in Figure **26**, the data is recorded onto the portions **Y1**, **Y2**, and **Y3**, in the order of the priority of the data. In this way, by recording the data having the higher priority into the portion which is commonly traced by the head at a large number of speeds, it is possible to realize the high-speed reproduction for reconstructing an image only by using the data having the higher priority. That is, in the low speed reproduction, it is possible to reconstruct an image including all the components from the lower frequency to the higher frequency. As the reproduction speed becomes higher, it is possible to obtain an image in which the components of higher frequencies or lower bits or the components corresponding to the screen periphery are gradually reduced.

Preferably, the DC upper bit component which has the highest priority is recorded on an area having the highest priority. Hereinafter, in which positions of the tracks the DC upper bit component in the group **S1** and the DC upper bit component in the group **S2** are recorded will be described.

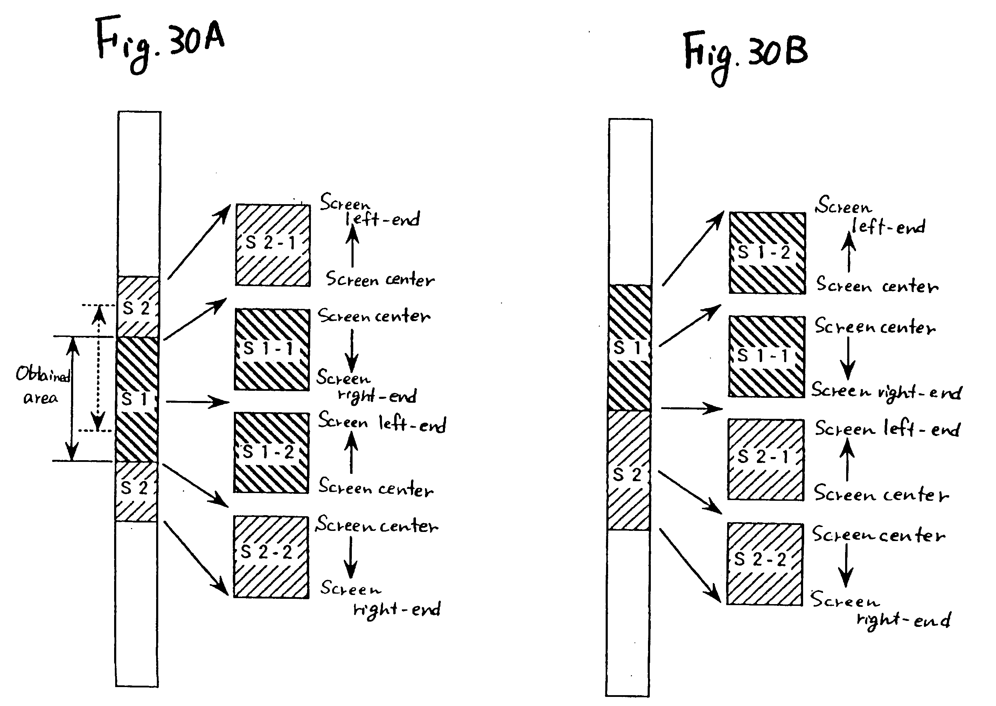

Figures **30A** and **30B** show exemplary recorded patterns of group **S1** and the group **S2** which are classified by the block subsampler **99**.

In Figure **30A**, the data included in the group **S1** and the data included in the group **S2** are recorded into the area designated by **S1** and **S2**, respectively. As is shown in Figure **29A**, two blocks in the group **S1** and two blocks in the group **S2** constitute one macro block. The area **S1** shown in Figures **30A** and **30B** includes cludes sub-areas **S1-1** and **S1-2**, and the area **S2** sub-areas **S2-1** and **S2-2**. In each of the sub-areas, data is recorded in the order from the screen center to the screen periphery. In more detail, in the sub-areas **S1-2** and **S2-1**, the data of groups **S1** and **S2** belonging to the macro block located from the screen center to the left end of the screen are recorded in the directions indicated by arrows, respectively. In the sub-areas **S1-1** and **S2-2**, the data of groups **S1** and **S2** belonging to the macro block located from the screen center to the right end of the screen are recorded in the directions indicated by arrows, respectively.

Next, the signal processing in the reproduction will be described, referring back to Figure **40**.

As to the data reproduced by the reproducing head **61**, a bit error which may occur in the recording and reproducing is corrected by an error corrector **71**. Then, the sync signal which is added for each sync block is removed by the formatter **94**, and the data and the ID indicating the contents of the data are supplied to a DCT block reconstruction circuit **95**. The process in the DCT block reconstruction circuit **95** is completely reversed from the process of the priority-based classification in the recording. That is, in the DCT block reconstruction circuit **95**, the DCT block is reconstructed from respective codes which are dispersed into the sync blocks. The codes of the DCT blocks are input into the lost block interpolation circuit **100**. The lost block interpolation circuit **100** interpolates the data of blocks which are lost in the reproduction. The codes which were subjected to the variable length coding in the recording are recovered so as to be the fixed length codes in the variable length code decoder **96**. The fixed length codes are subjected to the inverse quantization in an inverse quantizer **97**. In the inverse quantization, the value in the quantization table which was used in the recording is multiplied. The inverse quantized codes are finally subjected to the inverse DCT in an inverse DCT circuit **98**, and then the reproduced image is obtained at the output terminal **63**.

In the reproduction at x1 speed, the image can be reconstructed by using all of data recorded on the tape. In the reproduction at a high speed, the image is reconstructed by using the data which can be reproduced.

As described regarding the tape patterns, the image is reconstructed only by using the data having the higher priority.

As described above, as the reproduction speed becomes faster, the area obtained per 1 track is reduced.

It is assumed that the area from which the data can be obtained is the area **S1** shown in Figure **30A**. The data recorded on the area **S1** is the data which is obtained by extracting the DC components from every second block, so that the image cannot be constructed directly from the data recorded on the area **S1**. As is shown in Figure **29B**, the DC component recorded on the area **S2** (**E**) which cannot be obtained at the reproduction speed can be obtained by performing the interpolation process based on the DC components in the areas **S1** (**A**, **B**, **C**, and **D**) located around the area **E**. The lost block interpolation circuit **100** performs the interpolation process. The interpolation is achieved by averaging the DC components recorded in the areas **A**, **B**, **C**, and **D**, and by setting the averaged component as the DC component of the area **E**. Alternatively, among the DC components recorded in the areas **A**, **B**, **C**, and **D**, DC components which are suitable for the interpolation are adaptively selected and averaged, and the averaged component is used for the DC component of the area **E**.

Alternatively, the component of the area **E** may be interpolated so that the pixels in the peripheral portion of the area **E** and the pixels of the areas **A**, **B**, **C**, and **D** which are externally adjacent to the area **E** continue smoothly. In this case, it is preferable that the DC component of the area **E** may be interpolated so that the sum of squares or the sum of absolute values of differences between the values of the pixels in the peripheral portion of the area **E** and the values of the pixels of the areas **A**, **B**, **C**, and **D** which are externally adjacent to the area **E** becomes minimum. For example, the method of least squares is applied by using the DC component to be interpolated between the values of the pixels in the peripheral portion of the area **E** and the values of the pixels of the areas **A**, **B**, **C**, and **D** which are externally adjacent to the area **E** as the variable, so that the DC component of the area **E** can be obtained. According to this method, the DC component is obtained as an averaged value of differences between the pixels in the peripheral portion of the area **E** and the pixels which are externally adjacent to the area **E**.

Alternatively, instead of the use of the pixels in the peripheral portion of the area **E** and the pixels which are externally adjacent to the area **E**, the method of least squares may be applied by using values of intermediate points between the pixels in the peripheral portion of the area **E** and the pixels which are externally adjacent to the area **E** which are estimated from the side of the area **E**, and values of intermediate points therebetween which are estimated from the side of the area **A**, **B**, **C**, and **D**, so that the DC components of the area **E** can be interpolated with higher accuracy. The intermediate points may be estimated by the linear estimation from each side.

As is shown in Figure **30A**, in the case where the obtained area is shifted from the area indicated by solid line to the area indicated by broken line due to the tracking error, the data of group **S1** recorded in the lower end of the area **S1-2** and corresponding to part of image in the vicinity of the screen center cannot be obtained. Instead of the data, the data of group **S2** recorded in the lower end of the area **S2-1** and corresponding to part of image in the vicinity of the screen center can be obtained.

In this way, even when one subsampling data is lost due to the tracking error, the other subsampling data can be obtained. In this case, it is possible to obtain one of paired blocks which are mutually interpolated among four blocks belonging to one macro block, regardless of the position of the obtained area in the area **S1**, **S2**, so that the image can be constructed by interpolation. The image can be constructed in the same way in the arrangement shown in Figure **30B**. It is understood that the block subsampled data is not necessarily recorded in the arrangements shown in Figures **30A** and **30B**. It is sufficient that the data which is lost due to the tracking error and the new obtained data have a relationship in which the data can be mutually interpolated.

According to the signal recording and reproducing apparatus in this example, even if the DC component cannot be obtained up to the half thereof due to the scratch on the tape or the tracking error, the image can be constructed by interpolation. Thus, the apparatus has a high resistance against the scratch and the tracking error. In addition, a reproduction speed which is higher than the conventional one can be selected.

In the above example, the case where the subsampling and the interpolation are performed only for the DC components is described. Alternatively, instead of, or in addition to, the DC components, the subsampling and the interpolation may be performed for the AC components. In the above example, the subsampling is performed in accordance with the classification into the two phases, i.e., the groups **S1** and **S2**. Alternatively, the subsampling may be performed in accordance with the classification into three or more phases, e.g., four phases.

### Example 5

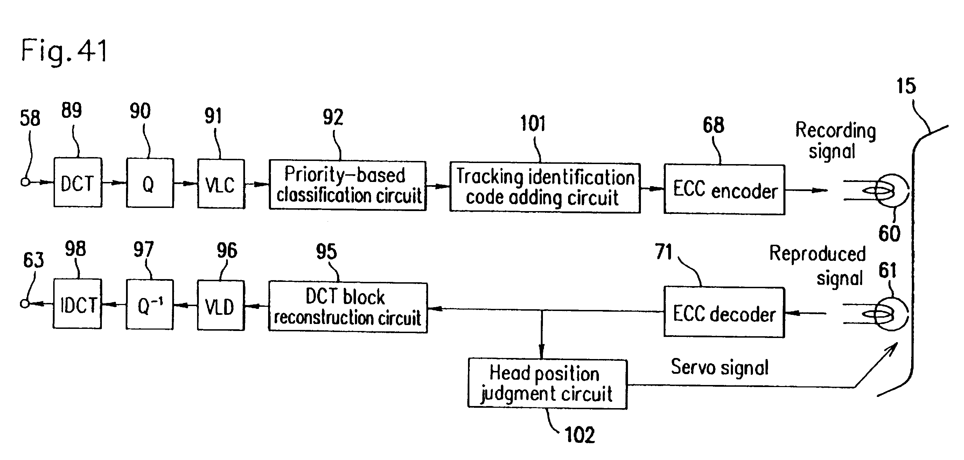

Hereinafter, a signal recording and reproducing apparatus of a fifth example according to the invention will be described. Figure **41** shows the construction of the signal recording and reproducing apparatus of the fifth example according to the invention.

The process in the recording from the input terminal **58** to the priority-based classification circuit **92** and the process in the reproduction from the DCT block reconstruction circuit **95** to the output terminal **63** are the same as those shown in Figure **38**, so that the descriptions thereof are omitted.

Among the output of the priority-based classification circuit **92**, the upper bits of the low-frequency component having the higher priority are recorded in, for example, an area **1** in Figure **15**. The other data having the lower priority is recorded in the areas **2** and **3**. At this time, the data recorded in the respective areas are attached with identification codes which are different from each other by a tracking identification code adding circuit **101**. Then, an error correction code is added by the error correction code adding circuit **68**. The identification code added to the data recorded in the area **1** indicates that the reproducing head passes the proper position. The identification codes added to the data recorded in the areas **2** and **3** indicate that the head path is deviated forwardly or backwardly.

The codes indicating the contents of data may also be used as the tracking identification codes. Alternatively, besides the codes indicating the contents of data, the tracking identification codes may be additionally used.

The rotating drum having recording head is shown in, for example, Figure **19**.

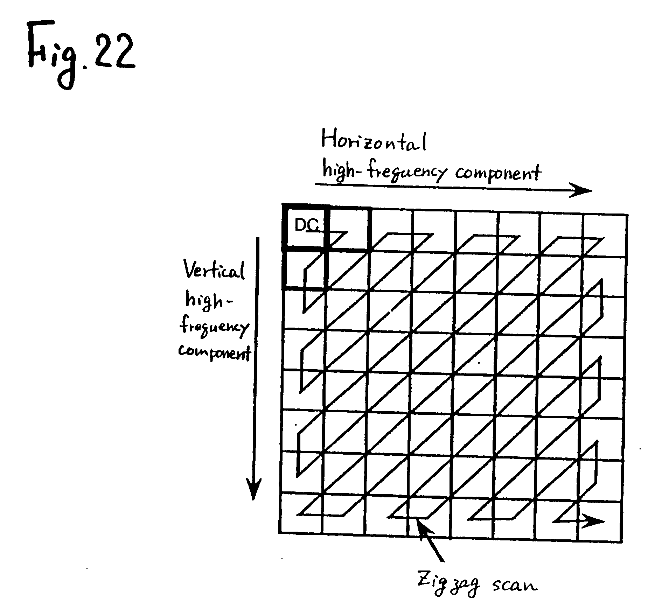

The arrows in Figures **15** and **16** indicate the head paths when the high-speed reproduction is performed for the tape-like recording medium having the recorded areas which are described above.

In the case where, in the reproduction, the recording medium is made to travel at a faster speed than in the recording, the head traverses a plurality of tracks. In Figures **15** and **16**, a broken-line arrow indicates the case where the head does not pass the area **1** in which the data for high-speed reproduction is recorded (i.e., an off-tracking condition), and a solid-line arrow indicates the case where the head properly passes the area **1** (i.e., an on-tracking condition). When the head is in the off-tracking condition, the head may reproduce the data in the area **2** or **3**. In the area **2** or **3**, the code indicating in which direction the head is deviated is recorded. Thus, the servo can be applied in order that the head becomes into the on-tracking condition for the area **1**. Actually, after the error correction is performed for the reproduced signal by the error correction circuit **71**, the head position is judged based on the identification code by the head position judgment circuit **102**. Then, the servo is applied based on the judged head position.

The servo is usually performed by controlling any of or all of the medium traveling speed, the drum rotation speed, and the head position on the drum.

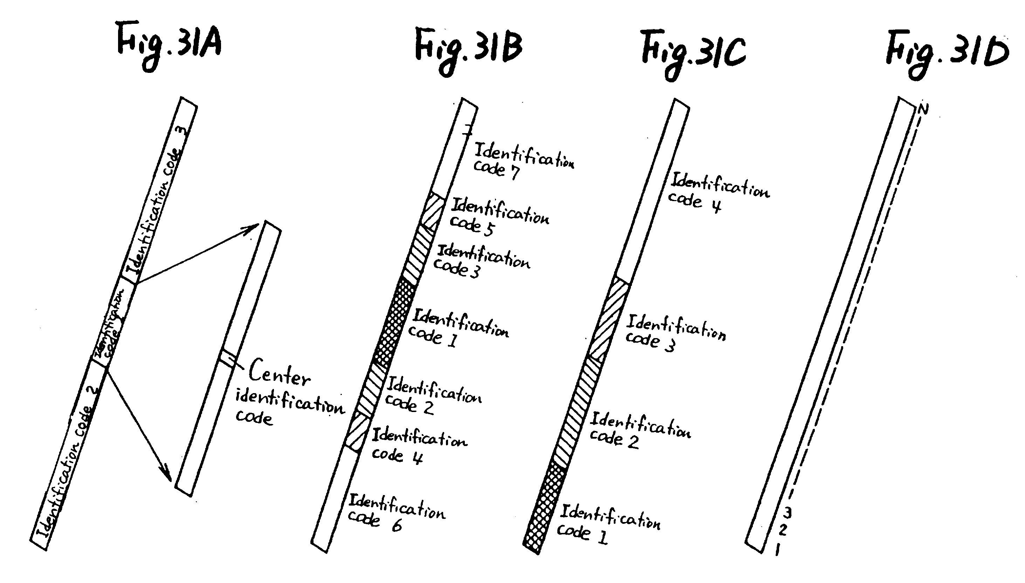

Figures **31A** to **31D** show exemplary patterns of identification codes. The identification codes in Figure **31A** follow the above-described manner. If an identification code indicating the center of the area **1** is additionally recorded in the center portion of the area **1**, the servo can be applied more accurately. The method is described below.

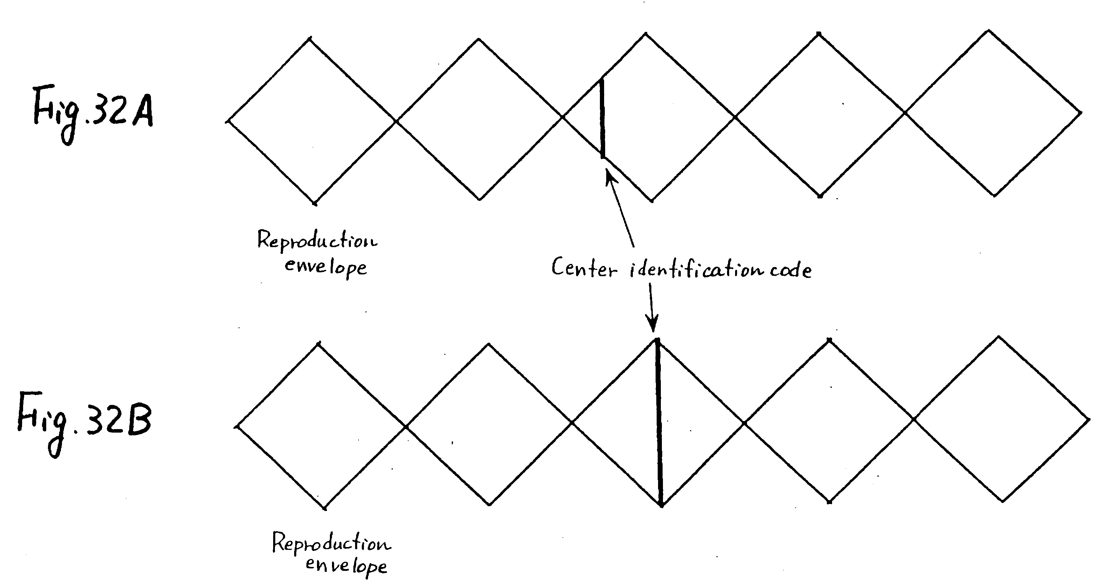

Figures **32A** and **32B** are concept diagrams showing the reproduction envelopes during the high-speed reproduction. The reproduction envelope during the high-speed reproduction has a shape in which the amplitude is periodically changed because the head moves so as to traverse a plurality of tracks. When the envelope is the smallest, the head jumps the track. If the head passes the area **1** but does not pass the center of the area **1** during the high-speed reproduction, the center identification code is detected at a position which is deviated from the maximum amplitude position of the envelope, as is shown in Figure **32A**. Thus, by examining the relative positional relationship between the amplitude of the envelope and the center identification code, it is possible to judge whether the head passes the center of the area **1** or the edge portion of the area **1**. The amplitude of the envelope may be judged by directly monitoring the envelope. Alternatively, in order to judge the amplitude of the envelope, there are a method for checking the error rate of the reproduced data, and a method for recording additional codes at positions forward and backward of the center identification code of the area **1**. If a portion of the area **1** where head passes can be detected, the head path is controlled by the above-described method, so that the servo can be performed accurately in order that the center identification code positioned at the center of the envelope, as is shown in Figure **32B**.

Figures **31B** and **31D** show the cases where the number of identification areas is increased. Figure **31D** shows the case where, instead of applying different identification codes to different areas, identification numbers are sequentially assigned to the tracks from the lower end to the upper end. In the cases shown in Figures **31B** and **31D**, it is possible to grasp in detail which portion of the track the head passes. Accordingly, it is possible to grasp the distance between the position which is desired to be traced by the head and the current head position, and hence to apply the optimal servo depending on that distance. Figure **31C** shows the case where the area **1** is located at a position other than the center portion of the track. Also in the case shown in Figure **31C**, the same control as described above can be performed.

The identification codes are described so that the different identification codes are assigned to the same track. However, it is appreciated that the identification codes may also be assigned to respective tracks.

If the rotating drum having two pairs of heads are used as is shown in Figure **20**, paired tracks, i.e., two tracks are simultaneously scanned, so that, if the data in one of the paired tracks includes an error and the identification code of the track cannot be obtained, the identification code of the other track can be used. Therefore, this structure has high resistance against data error.

The area capable of being scanned is changed depending on the speed of the medium. As the speed becomes slower, the area increase along the track extending direction. Accordingly, a high-speed reproduction can be realized in which, as the speed becomes slower, an image with a larger amount of information can be reproduced. In this case, the head can be controlled in the same way as described above.

In this example, the data constituting an image during the high-speed reproduction and the other data are attached with different identification codes, and the head path is controlled by using the identification codes, whereby the data of a specific area can be accurately reproduced.

### Example 6

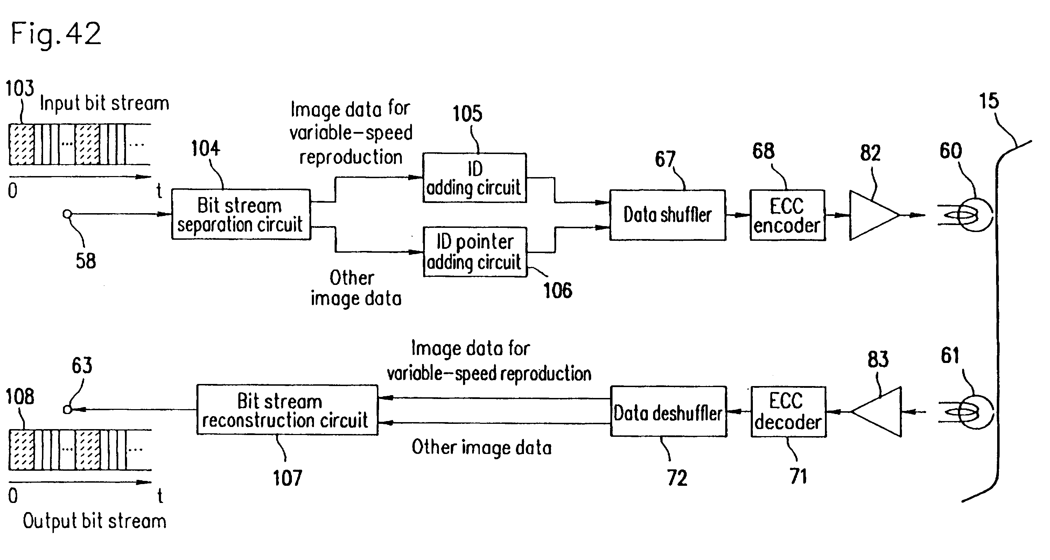

Hereinafter, a signal recording and reproducing apparatus in a sixth example according to the invention will be described. Figure **42** shows the construction of the signal recording and reproducing apparatus of the sixth example.

In Figure **42**, a bit stream **103** is input from the input terminal **58**. Then, the bit stream **103** is recorded in a predetermined form on the tape-like recording medium **15**, through a bit stream separation circuit **104**, an ID adding circuit **105**, an ID pointer adding circuit **106**, a data shuffler **67**, an ECC circuit **68**, a recording amplifier **82**, and a recording head **60**.

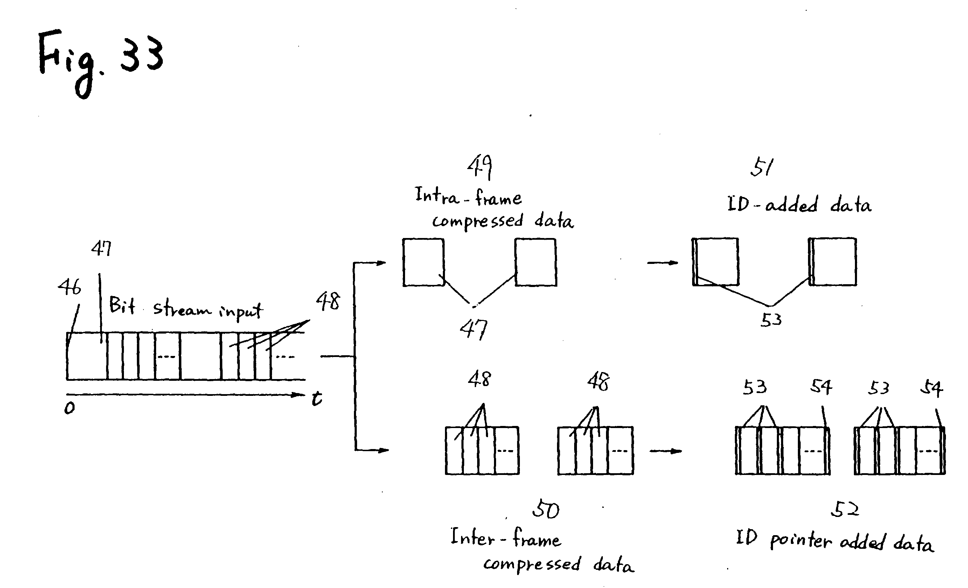

An example of the bit stream **103** which is input from the input terminal **58** is shown in Figure **33**. In this example, the input bit stream **103** is composed of data **47** processed by intra-frame compression and data **48** processed by inter-frame compression.

The input bit stream **103** is composed of the image data processed by intra-frame compression for one frame at a certain time, and the image data processed by inter-frame compression or intra-frame compression for the successive some frames. The bit stream **103** is first input into the bit stream separation circuit **104**. The bit stream separation circuit **104** separates the input bit streams **103** into the image data for variable-speed reproduction and the other image data, and outputs the separated data. The image data for variable-speed reproduction is, for example, the intra-frame compressed data **49**. The other image data is, for example, the inter-frame compressed data **50**.

The image data for variable-speed reproduction is input into the ID adding circuit **105** where an ID for identifying the data during the reproduction is added. The other image data is input into the ID pointer adding circuit **106** where an ID for identifying the data during the reproduction and a pointer for specifying a position where the data for variable-speed reproduction is located in the original bit stream during the reproduction are added. The output image data from these circuit are the ID added data **51** and the ID pointer added data **52**, respectively, as shown in Figure **33**. Herein, the reference numerals **53** and **54** indicate the ID code and the pointer, respectively.

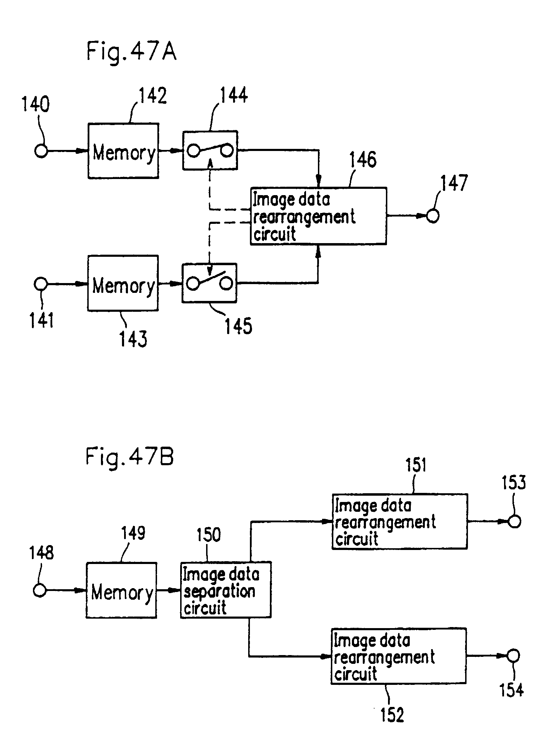

Thereafter, the image data for variable-speed reproduction and the other image data are respectively input into the data shuffler **67**. Figure **47A** shows the construction of the data shuffler **67**. As is shown in Figure **47A**, the data shuffler **67** includes input terminals **140**, **141**, memories **142**, **143**, switches **144**, **145**, an image data rearrangement circuit **146**, and an output terminal **147**.

The data shuffler **67** serves to distribute the data onto the recording medium, when the data is to be recorded on the recording medium. For example, the intra-frame compressed data **49** is input through the input terminal **140**, and stored in the memory **142**. The inter-frame compressed data **50** is input through the input terminal **141**, and stored in the memory **143**. The data rearrangement circuit **146** controls the open/close of the switches **144** and **145** at predetermined timings, whereby the order of data is rearranged so that the intra-frame compressed data is located on part of or all of the portions of the recording medium which are commonly traced by the reproducing head at a plurality of reproduction speeds. The data rearrangement circuit **146** rearranges the order of data so that the error correction is efficiently performed during the recording and the reproduction.

Next, to the data in which the order thereof is rearranged, an error correction code is added in the ECC circuit **68**. The data is then amplified by the recording amplification **82**, and recorded onto the tape-like recording medium **15** by the recording head **60**.

The signal recording and reproducing apparatus further includes a reproducing head **61**, a reproducing amplifier **83**, an ECC circuit **71**, a data deshuffler **72**, and a bit stream reconstruction circuit **107**, whereby the reproduced bit stream **108** is output from the output terminal **63**.

During the normal reproduction, the signals are read out from the respective recorded tracks by using the reproducing head **61** (the recording head **60** may also function as the reproducing head), and the read signals are amplified by the reproducing amplifier **83** and input into the ECC circuit **71**. Any errors which occur during the recording and reproduction in the signals input into the ECC circuit **71** are possibly corrected, and then fed to the data deshuffler **72**.

Figure **47B** shows the construction of the data deshuffler **72**. As is shown in Figure **47B**, the data deshuffler **72** includes an input terminal **148**, a memory **149**, an image data separation circuit **150**, data rearrangement circuits **151**, **152**, and output terminals **153**, **154**.

The signal input through the input terminal **148** is temporarily stored in the memory **149**. Next, the image data separation circuit **150** appropriately reads out the reproduced image data from the memory **149**, and separates the reproduced image data into the original intra-frame compressed image data and inter-frame compressed image data. The operation of the circuit **150** is reversed from the operation during the recording. The order of the separated data are rearranged into the original one by the data rearrangement circuits **151** and **152**, respectively. The operations in the data rearrangement circuits **151** and **152** are completely reversed from the rearrangement by the data shuffler **67** in the recording. The rearranged data are separately output from the output terminals **153** and **154**.

The intra-frame compressed image data and the inter-frame compressed image data output from the data deshuffler **72** are respectively input into the bit stream reconstruction circuit **107**, so as to reproduce the original bit stream.

In the variable-speed reproduction, the tape is made to travel at a speed different from the normal speed, so that the reproducing head obliquely scans the recorded tracks, and hence it is not possible to reproduced all of the image data. However, by reproducing the intra-frame compressed image data which is separated from the input bit stream and located at a particular position based on the operation of the data shuffler **67**, it becomes possible to obtain an image for the variable-speed reproduction.

The data for variable-speed reproduction may be part of the intra-frame compressed data, as described above.

As in the sixth example, the compressed bit stream which is transmitted in the broadcasting may be directly separated into the data for variable-speed reproduction and the other data.

### Example 7

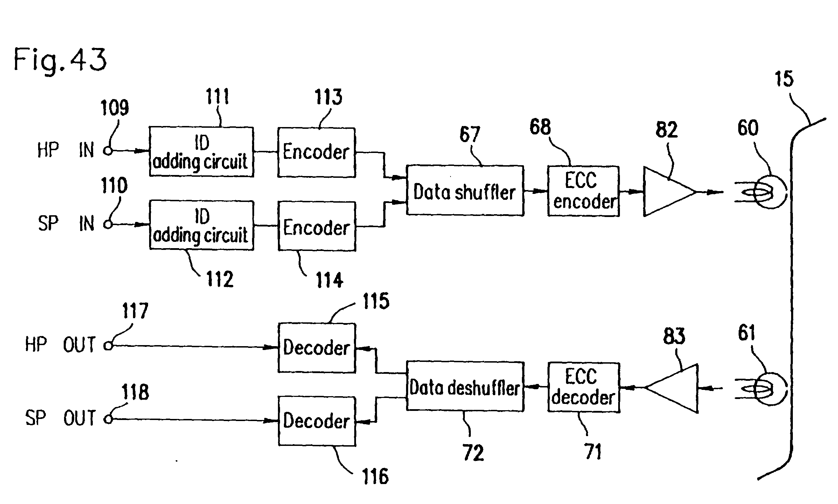

Hereinafter, a signal recording and reproducing apparatus of a seventh example according to the invention will be described. Figure **43** shows the construction of the signal recording and reproducing apparatus of the seventh example.

First, the format of the signal input into the signal recording and reproducing apparatus is described.

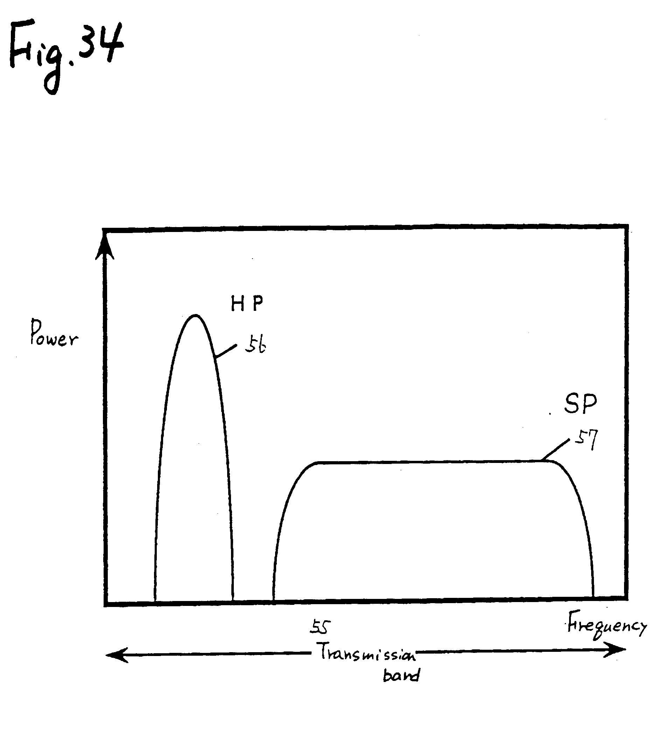

Figure **34** shows the concept of the spectrum of a modulated wave in the transmission band of AD-HDTV system which is proposed in the advanced high definition television system in the U.S.A. In Figure **34**, the reference numeral **55** denotes the transmission band, **56** denotes the modulated wave of image data of low-frecomponent having the high priority (HP: High Priority), and **57** denotes the modulated wave of the high-frequency component which is added for the high definition image having the priority lower than the aforementioned image data (SP: Standard Priority). In this system, the image data having the higher priority is transmitted by the modulated wave with a higher power. Accordingly, even in the peripheral region of the broadcasting area to which the radio wave is difficult to reach, it is advantageously possible to obtain an image quality to some extent by receiving only the image data of low-frequency component having the higher priority.

Alternatively, in the DSC-HDTV system which is also proposed in the U.S.A., in the transmission band having a certain band width, the fundamental image data of low-frequency component having the higher priority is modulated by the modulation method for facilitating the reach of radio wave, and the image data of high-frequency component is modulated by another modulation method in which the transmission rate is high but the radio wave is difficult to reach. The thus modulated two types of signals are transmitted by time division duplex.

The two types of image data having a different priority are input through two input terminals **109** and **110**.

To the input terminal **109**, the image data of low-frequency component having the higher priority is input. To the input terminal **110**, the image data having the lower priority than the data input to the input terminal **109** is input. In this example, as is shown in Figure **43**, the signal recording and reproducing apparatus has two input terminals. Alternatively, the signal recording and reproducing apparatus may have one or more input terminals and image data having different priorities may be input to the respective one or more input terminals. Alternatively, different types of image data having different priorities may be input to one and the same input terminal.

The ID adding circuits **111** and **112** add ID's indicating the data type, the position on screen, and the like to the respective image data. The ID added data are encoded into recording codes in the encoders **113** and **114**, respectively. Thereafter, the recording codes are input into the data shuffler **67** where the order of data is rearranged.

The remaining recording process after the data shuffler **67** and the reproduction process before the data deshuffler **72** are the same as those implemented by the circuits shown in Figure **42**.

The output signals form the data deshuffler **72** are decoded by the decoders **115** and **116**, and output from the output terminals **117** and **118** as the output of the reproduction system in the same form as that of the input normal broadcasting signal. As the result of the decoding into the same form as the of the input normal broadcasting signal, the reproduced image can be obtained.

As described above, the data previously having the priority is input, and the data having the higher priority is used as the data for high-speed reproduction.

The portion into which the data for high-speed reproduction is recorded is desirably in the vicinity of the center of the track for the following reasons.

Figure **18** shows the concept illustrating the reproduced envelope. The reference numeral **40** shows the reproduced envelope in the case where the tape is made to travel at a predetermined speed for recording and reproduction. As is seen from the reproduced envelope **40**, the reproduced output is slightly lowered at both ends of the tape.

The reference numeral **41** shows the reproduced envelope in the case where the tape is made to travel at a higher speed for recording and reproduction. During the high-speed traveling of the tape, the reproduced output at both ends of the tape is lowered as compared with the case of the slower traveling speed.

Therefore, it is desirable that the data for high-speed reproduction is recorded in the vicinity of the center of the tape.

### Example 8

Hereinafter, a signal recording and reproducing apparatus of an eighth example according to the invention will be described.

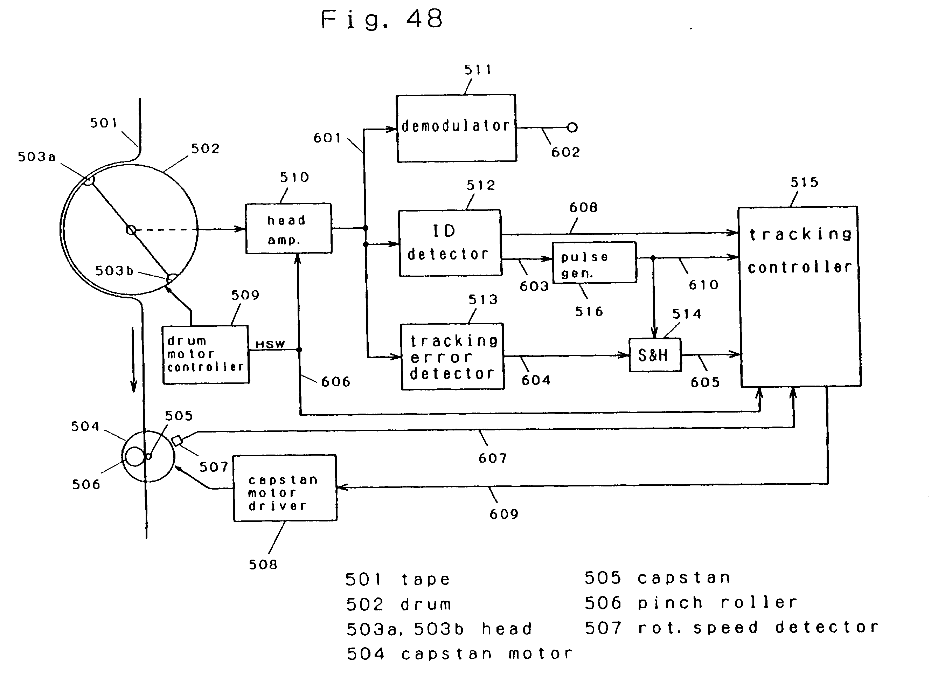

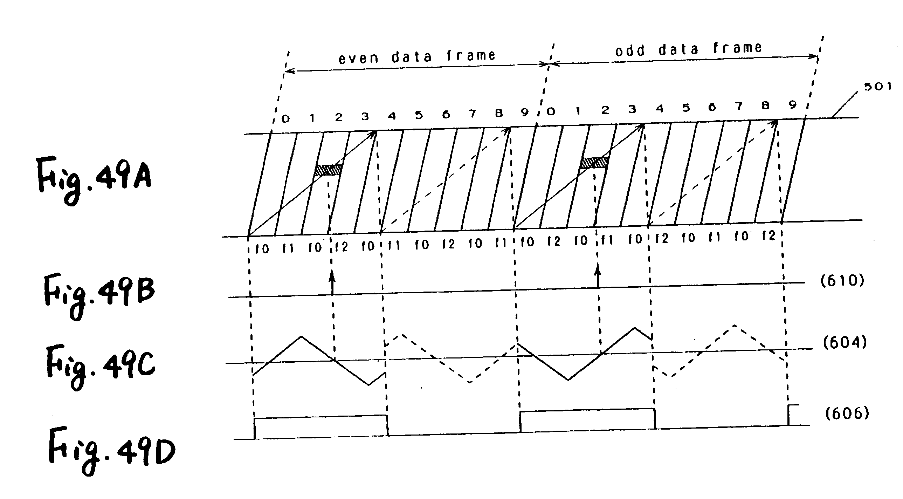

Figure **48** shows the construction of a digital VTR according to the invention. In Figure **48**, the digital VTR includes a rotating drum (drum) **502** with magnetic heads (heads) **503a** and **503b** having azimuth angles different from each other, a capstan **505**, a capstan motor **504**, a pinch roller **506**, a rotation speed detector **507**, a capstan motor driver **508**, a drum motor controller **509**, a head amplifier **510**, a demodulator **511**, an ID detector **512**, a tracking error detector **513**, a sampler **514**, a tracking controller **515**, and a pulse generator **516**. The ID detector **512** is used to detect a portion to be reproduced on a magnetic tape **501**. The heads **503a** and **503b** are mounted on the drum **502** in such a manner they are diametrically opposed. The tracking controller **515**, the capstan motor driver **508**, the capstan motor **504**, the capstan **505**, the pinch roller **506**, and the rotation speed detector **507** are used for a tracking control. The operation of the digital VTR having the above-described construction will be described below with reference to Figure **49**.

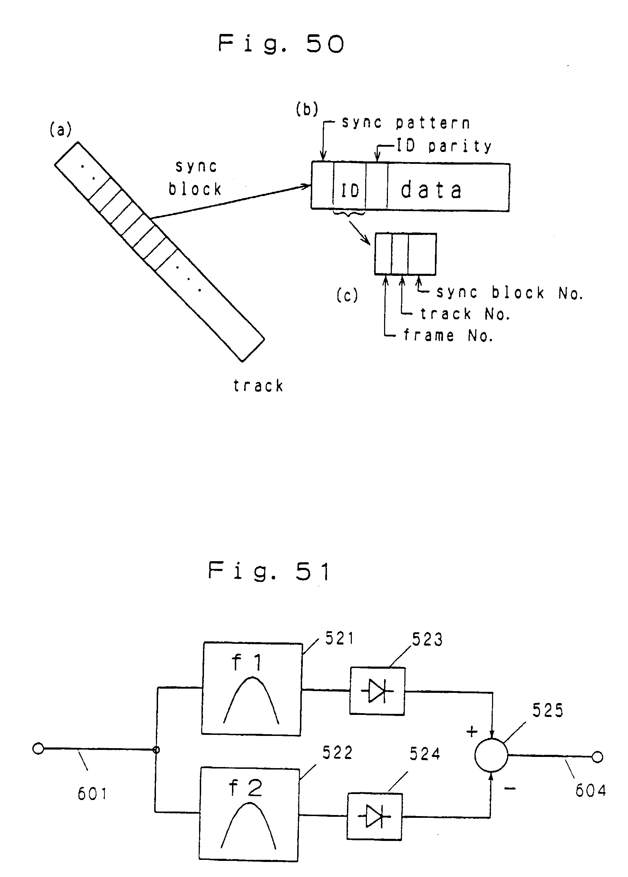

Figure **49A** shows a recorded pattern of tracks on the tape **501**. In this example, video signals of 10 video frames are subjected to the information compression into one unit, and recorded as one data frame. Among the video signals of 10 video frames, the video signals of 9 video frames are subjected to the interframe compression, and the video signals of the remaining one video frame are subjected to the intra-frame compression. The two types of compressed data are modulated as required and then separately recorded as 10 tracks on the tape. Figure **49A** shows only two data frames. Actually, each track is recorded at a large inclination with respect to the tape **501**. However, in Figure **49A**, for the explanation based on the time sequence, each track is shown at a small inclination. A series of circulated numbers from 0 to 9 shown at the upper end of the tape indicate the track numbers in the data frame. The tracks having even track numbers have the same azimuth as that of the head **503a** and the tracks having odd track numbers have the same azimuth as that of the head **503b**. Figure **50** shows the data structure in each track. Each track is divided into sub-blocks which are referred to as sync blocks, as is shown in Figure **50**(a). In the leading portion of each sync block, a sync pattern indicating the start of the sync block is recorded as is shown in Figure **50**(b). Following the sync pattern, an ID (identification code) which is address information of the sync block and an ID parity for detecting an error of ID are recorded. Then, the digital video signals are recorded. The ID information portion includes the data frame number, the track number and the sync block number as is shown in Figure **50**(c).

The symbols **f0**, **f1**, **f0**, and **f2** shown at the lower end of the tape **501** indicate the types of pilot signals for tracking control. For the pilot signals **f1** and **f2**, relatively lower but different frequencies which can be separated from the digital information signals and which is difficult to be influenced by the azimuth loss are selected. In the track indicated by **f0**, the pilot signal is not recorded. The respective pilot signals are recorded substantially all over the tracks by frequency duplex with the digital video signals which is similar to that in the 8 mm VTR, or by bit modulation as disclosed in European Patent Application Publication No. 339724.

First, the normal reproduction (the x1 speed reproduction) is briefly described. The tracking controller **515** conveys the tape **501** at substantially the same speed as in the recording, using the capstan motor driver **508**, the capstan motor **504**, the capstan **505** and the pinch roller **506**. The drum motor controller **509** controls the rotation of the drum **502** at a predetermined rotation speed. In the period in which the head **503a** reproduces the tracks, the tracking error detector **513** compares the magnitudes of the pilot signals **f1** and **f2** leaking into the reproduced signals **601**, and outputs a tracking error signal **604** indicating the deviation of the head from the tracks. The tracking controller **515** performs the tracking control by adjusting the tape traveling speed based on the tracking error signal **604** so that the head **503a** scans the track on which the pilot signal **f0** is recorded, and the head **503b** scans the track on which the pilot signal **f1** or **f2** is recorded. The normal reproduction operation is briefly described above, but the detailed description thereof is omitted.

The operation in the reproduction at a speed different from that of the recording, e.g., in the high-speed reproduction is described. The drum **502** is controlled so as to rotate at a predetermined rotation speed by the drum motor controller **509**. At this time, the drum motor controller **509** detects the rotational position of the drum **502**, and outputs an identification signal (HSW signal) **606** indicating which head is in contact with the tape **501**. The tape **501** is wrapped on the drum **502** by 180 degrees. The tape **501** is sandwiched between the capstan **505** and the pinch roller **506**. Accordingly, the tape **501** travels along the lengthwise direction thereof by means of the rotation of the capstan motor **504**. The tracking controller **515** receives an FG signal **607** from the rotation speed detector **507**, and controls the rotation speed of the capstan motor **504** via the capstan motor driver **508**. The heads **503a** and **503b** mounted on the drum **502** scan the tape **501** by tracing the paths determined by the cylinder rotation and the tape traveling speed. Now, it is assumed that the tape **501** is made to travel at a speed which is 5 times as fast as the normal reproduction speed, and the drum **502** rotates at the same speed as the normal reproduction speed. The scanning paths are indicated by arrows of solid line and broken line on the tape **501** in Figure **49A**. The solid line indicates the path of the head **503a** and the broken line indicates the path of the head **503b**.

The reproduced signals obtained from the respective heads by successively traversing the tracks are head-switched in the head amplifier **510** based on the HSW signal **606**, and amplified. Then, the reproduced signals are supplied to the demodulator **511**, the ID detector **512** and the tracking error detector **513**. The demodulator **511** demodulates and decompresses the reproduced signals successively obtained from all of the tracks in the normal reproduction, so as to substantially perfectly reconstruct the recorded video signals. The reconstructed signals are output as the reproduced video signals **602**. In the high-speed reproduction, the head reproduces the signals by traversing the tracks, so that only the portions forward and backward of an intersecting point where the center of a track having the same azimuth as that of the head scanning path intersects the head scanning path can be reproduced. Such portions may be the hatched portions in Figure **49A**. The demodulator **511** constitutes the image based on the partial information obtained in such a condition, and outputs the image.

When the compressed data is to be decompressed, data of all units used for the compression are required. In this example, the intra-frame compressed data of 1 video frame is smaller in compression unit than the data of the other 9 video frames. Therefore, if the sync block in which the intra-frame compressed data of 1 video frame is selectively reproduced, the image reproduction can be efficiently performed in the high-speed reproduction.

In another example, the video signal is divided into a low-frequency component and a high-frequency component, and the components are separately recorded onto different sync blocks. By selectively reproducing the sync block in which the low-frequency component is recorded, the image reproduction can be efficiently performed.

As explained above, in the signal recording and reproducing apparatus, it is often required that a specific part of the recorded data on the tape is selectively reproduced during the high-speed reproduction. That is, it is necessary to lock the phase relationship between the head path and the recorded data. The phase lock operation is next described.

The tracking error detector **513** has, for example, a construction shown in Figure **51**. From the reproduced signal **601**, the pilot signals **f1** and **f2** are extracted by band pass filters **521** and **522**, respectively. The amplitudes of the pilot signals **f1** and **f2** are detected by envelope detectors **523** and **524**, respectively. Then a difference in amplitude (**f1** - **f2**) is calculated by a difference calculator **525**, and then output as the tracking error signal **604**.

In the case of the scanning paths shown in Figure **49A**, the tracking error signal **604** during the high-speed reproduction is shown in Figure **49C**. The tracking error signal can be obtained during the reproduction by the head **503b**, but the tracking error signal is not used in this description, so that it is indicated by a broken line. It is assumed that a sync block to be reproduced is located at the hatched portion in Figure **49A**. Figure **49** shows the state where the scanning path just passes on the sync block. In this state, the tracking error signal is O at the timing of the reproduction for the sync block. Thus, by controlling the tape travel so that the tracking error signal becomes 0 at this timing, the scanning path can be always fixed on the sync block, as shown in Figure **49A**.

The ID detector **512** and the pulse generator **516** detect the timing at which the tracking error signal is set to be 0. The ID detector **512** detects the ID portion included in each sync block in the reproduced signal **601**. The specific construction is omitted, but for example, an operation such as equalizing, level regeneration, timing regeneration by a PLL (phase locked loop), and the like is performed for the reproduced signal **601** so that the reproduced signal is made to be a digital data series, and then the sync pattern shown in Figure **50(b)** is detected, and the ID portion which follows the sync pattern is extracted. In addition, the error detection is performed for the ID portion by using the ID parity, and only the ID information with no error is output. Note that the function of ID detection is generally provided for the demodulator **511**. In such a case, the ID information from the demodulator **511** is supplied to the pulse generator **512**.

The track number and sync block number **603** among the ID information is input into the pulse generator **516**. The pulse generator **516** outputs a sample pulse **610** when the ID of the sync block which is currently required to be reproduced, e.g., the sync block indicated in Figure **49A** is detected. An exemplary sample pulse **610** is shown in Figure **49B**. There may be a case where successive plural sync blocks are actually required to be reproduced. For example, in the case where 1 track is constituted of 100 sync blocks, each hatched portion in Figure **49A** includes several sync blocks to a dozen sync blocks. In such a case, the target scanning path is determined to intersect the region occupied by the sync blocks in the vicinity of the center of the region along the track direction, and the pulse generator **516** may detect the sync block positioned at the intersecting position where the scanning path intersects the track center. Alternatively, the scanning path is determined in the same way, and one or more ID's of these sync blocks are detected, whereby the pulse generator **516** outputs the sample pulse **610** at the timing when the scanning path may intersect the track center.

The sample pulse **610** and the tracking error signal **604** are input into the sampler **514**. The sampler **514** samples the tracking error signal at the timing of the sample pulse, and holds the value until the next sample pulse is applied. When the next sample pulse is applied, the sampler **514** outputs the value.

The tracking controller **515** controls the rotation of the capstan so that the sampled tracking error signal **605** becomes 0. In the cases where the phase relationship between the head scanning path and the track pattern on the tape is nearly equal to the ideal state shown in Figure **49A**, the above-described method is sufficient for the control. However, in the cases where the phase relationship is largely different from the ideal state, e.g., in the case where the scanning paths of the head **503a** and **503b** are exchanged, the target sync block is not reproduced. Accordingly, there occurs a vicious cycle in which the ID is not detected, and hence the sample pulse is not generated, therefore the tracking controller **515** cannot operate. In this case, it is necessary to prepare a countermeasure for leading the deadlock state into the proper state of tracking control.

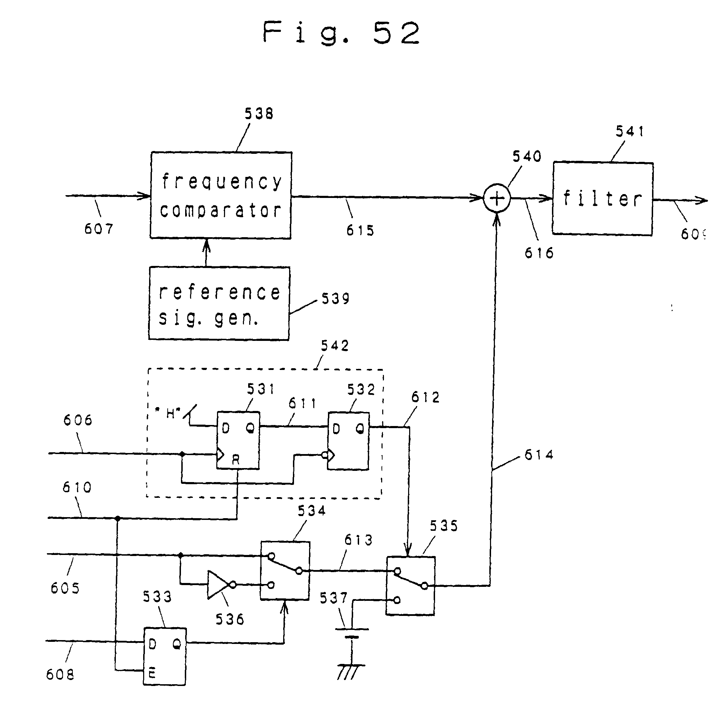

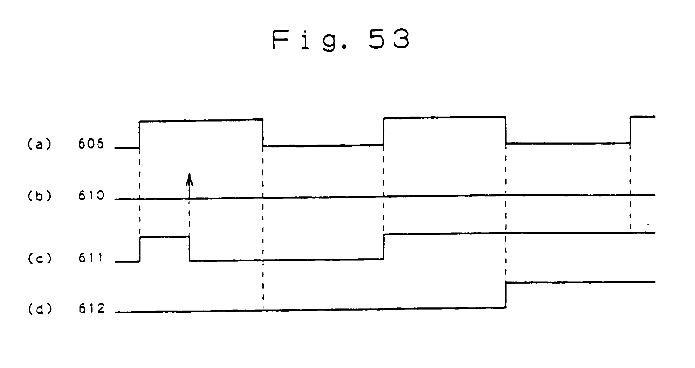

Figure **52** shows an exemplary construction of the tracking controller **515** considering such a counter-measure. In Figure **52**, the tracking controller **515** includes D-type flip-flops **531** and **532**, a latch **533**, switches **534** and **535**, a polarity inversion circuit **536** (an amplifier having a gain of -1), a voltage source **537**, a frequency comparator **538**, a reference signal generator **539**, an adder **540**, and a filter **541**. First, the operation of the judgment circuit **542** enclosed by a broken line is described with reference to Figure **53**. In Figure **53**, the same signals are designated by the same reference numerals as those shown in Figure **52**. The judgment circuit **542** judges whether the ID corresponding to the target sync block is detected for each scanning of the head **503a**. Now, it is assumed that, during the scanning of the tape by the head **503a**, the drum motor controller **509** outputs "H" (high level) as the HSW signal **606**. The D-type flip-flop **531** latches the "H" at the D input at the rising edge of the HSW signal and outputs it. In Figure **53**, when the sample pulse **610** is applied during the scanning period, e.g., in the first period of the HSW, the D-type flip-flop **531** is reset at this timing and the output thereof becomes to be "L" (low level). If the sample pulse **610** is not supplied as in the second period, the D-type flip-flop **531** is not reset, so that the output thereof remains to be "H". Accordingly, at the falling edge of the HSW signal **606**, the output **611** of the D-type flip-flop **531** is latched by the next D-type flip-flop **532**, so that a signal depending on the presence or absence of the sample pulse can be obtained in each scanning period as the output **612** of the D-type flip-flop **532**.

The polarity of the sampled tracking error signal **605** is inverted in the polarity inversion circuit **536**. The inversion or non-inversion of the signal **605** is selected by the switch **534**. As is seen from Figure **49B**, the polarity of the tracking error signal at the sample pulse position for the even frame is inverted from that at the sample pulse position for the odd frame. Specifically, the tracking error when the scanning path is deviated in a certain direction is inverted between the even frame and the odd frame. This is because the number of tracks constituting one frame is not the integer multiple of the number of tracks in a cycle of tracking pilot frequencies which vary for each track (in this example, four tracks of **f0**, **f1**, **f0** and **f2**). In order to fix the polarity of the tracking error signal used for the tracking control, it is necessary to switch the polarity between the inversion and the non-inversion depending on the even or odd frame of the sampled tracking error signal. At the D input of the latch **533**, the least significant bit of the frame number from the ID detector **512**, i.e., a frame even/odd signal **608** is input. When the target ID is detected and the sample pulse **610** is applied to the E input, the latch **533** latches the level of the D input and holds the value until the next sample pulse is applied. The switch **534** operates depending on the output **617**, so that the polarity of the tracking error signal after the switching is constant.

Next, the switch **535** selects one of the reference voltage from the reference voltage source **537** and the tracking error signal **613** depending on the output **612** of the judgment circuit **542**.

In the state where the sample pulse is applied for each scanning, the signal **612** becomes "L" and the switch **535** selects the tracking error signal **613**. The output **614** of the switch **535** is supplied to the adder **540**. From the speed detector **507** of the capstan motor **504**, the FG signal **607** having a frequency depending on the rotation speed of the capstan **505** is applied. The frequency comparator **538** compares the frequency of the FG signal **607** with the frequency of the reference signal applied from the reference signal generator **539**, so as to output a speed error signal **615** in accordance with the deviation from the target rotation speed of the capstan motor. The speed error signal **615** and the tracking error signal **614** are added to each other in the adder **540**, and subjected to the frequency compensation such as integration compensation in the filter **541**, thereby being output as the capstan driving signal **609** to the capstan motor driver **508**. The capstan motor driver **508** drives the capstan motor **504** in accordance with the capstan driving signal **609**. In this way, the tape travel is adjusted so that the sampled tracking error **605** becomes 0.

In the state where the head scanning position is largely different from the state shown in Figure **49A** and hence the sample pulse **610** cannot be obtained, the reference voltage is selected by the switch **535**. The reference voltage is added to the speed error signal **615** by the adder **540**, and the tape travel is adjusted so that the added signal **616** becomes 0. In this case, the signal **614** keeps the constant value, so that the added signal becomes 0 by offsetting the speed error signal in the reverse direction in DC by the amount equal to the value, thereby being balanced. That is, the tape travel is controlled to be the speed which is deviated by the amount depending on the reference voltage. Therefore, by selecting the reference voltage so that the tape speed in the high-speed reproduction is deviated from the target tape speed by a slight amount, e.g., by about 1%, the phase of the head scanning gradually changes with respect to the data frames. After a while, the scanning path substantially reaches the phase shown in Figure **49A**, so that the sample pulse can be obtained. As a result, the switch **535** is switched so as to start the tracking control, and the scanning path is locked to the desired phase. According to the above-described operation, even in the case where the scanning path is largely different from the target path, the phase shifting can be smoothly performed without arising the vicious cycle.

As described above, according to this example, in the case where the reproduction is performed at a tape speed different from that in the recording, the ID detector detects the ID information included in the reproduced signal, and the pulse generator generates a sample pulse at a timing at which a specific position in a data frame is reproduced based on the detected ID information. The sampler samples the tracking error signal which is detected from the reproduced signal by the tracking error detector at the timing of sample pulse. Thus, the tracking controller operates based on the sampled tracking error signal, whereby the tape speed is adjusted. Accordingly, it is possible to accurately fix the head scanning path at a specific phase on the tape. In the case where the ID is not detected, the tape speed is set to be different from the target speed at which the phase of the head scanning can be locked, so that the phase can be shifted to the phase at which the ID is smoothly detected.

In this example, the case where one data frame is divided into 10 tracks and the tape speed is set to be x5 speed is described. Alternatively, as far as the phase relationship between the head scanning and the data frame can be fixed, the invention can be applied. For example, to the reproduction at a tape speed of integer multiple other than the x1 speed, the invention can be applied (in some cases, in order to fix the relative speed of the head to the tracks, there may accurately occur some deviation from the integer-multiple speed relative to the x1 speed).

The example where two types of pilot signals are recorded on the tape is shown, but the method is not limited to this. As far as the positional relationship between the head and the tracks can be detected in the vicinity of the sync block from which the data is to be selectively read out, the recording method is not limited to any specific one.

Regarding the head construction on the drum, and the wrapping angle of the tape, they are not limited to those shown in this example. Alternatively, two heads may be mounted adjacently, or two or more heads may be mounted.

The example where one sample pulse is generated for one scanning is shown, but the method is not limited to this. Regarding the timing of the sample pulse, it is sufficient that the target scanning path intersects the track having the same azimuth. Thus, a plurality of samplings can be performed. In view of the polarity of the obtained sample value, the number of sample pulses can be increased as the result of the obvious extension, whereby the phase lock accuracy can be enhanced.

The example where the tracking control is performed by the tape speed adjusting which uses the capstan is shown. Alternatively, another method can be used. For example, a method (DTF) in which the head is directly driven to adjust the tracking can be used.

It is appreciated that the respective components can be implemented by various method as far as the functions equivalent to those described above can be realized. In this example, each block is constructed mainly in hardware. Alternatively, is can be implemented in software having the equivalent function.

### Example 9

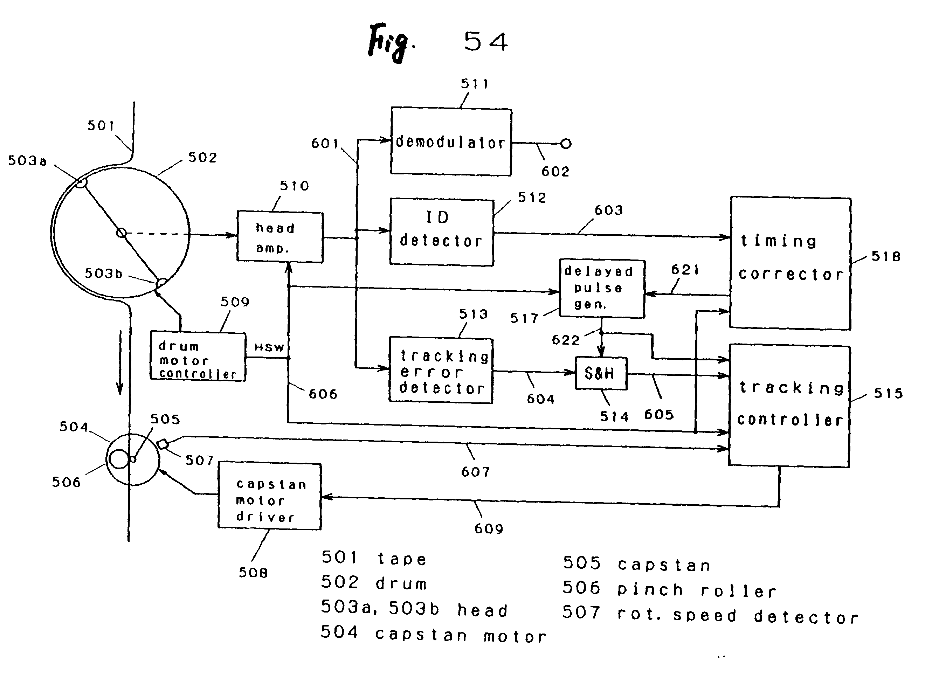

Next, a signal recording and reproducing apparatus in a ninth example of the invention will be described. Figure **54** shows the construction of the digital VTR based on the invention. In Figure **54**, except for a delayed pulse generator **517**, a timing corrector **518**, and a tracking controller **515**, the elements have the same constructions and the operations as those in the example shown in Figure **48**, so that they are generally described.

Hereinafter, the high-speed reproduction is described mainly considering the differences from the example shown in Figure **48**. Tape **501** is made to travel at a tape speed which is about 5 times as fast as the normal reproduction speed, by the capstan **505** which rotates by means of the capstan motor driver **508**. Accordingly, the angular relationship between the head scanning path and the tracks is the same as shown in Figure **49A**. The arrangement of pilot signals and the data structure in each track are the same as those shown in Figures **49A** and **50**. The drum **502** is controlled to rotate at a predetermined rotation speed by the drum motor controller **509**. The outputs of the heads **503a** and **503b** are amplified by the head amplifier **510** and head-switched, and then input into the demodulator **511**, the ID detector **512**, and the tracking error detector **513**. The demodulator **511** demodulates the reproduced signals which are intermittently obtained, and outputs the reproduced video signals **602**. The ID detector **512** detects and outputs the ID portions in each sync block in the reproduced signals. The tracking error detector **513** detects and outputs the tracking error signal **604** corresponding to the deviation of the head from the track based on the pilot signal amplitude included in the reproduced signals.

The first difference from the example shown in Figure **48** is in that the sampling in the sampler **514** is performed at the timing which is synchronized with the HSW signal. Another difference resides in that the timing corrector **518** finally corrects the scanning path to the target phase by correcting the sample timing. The correction of the timing is performed based on the ID information detected from the reproduced signals. Hereinafter, the operation thereof will be described.

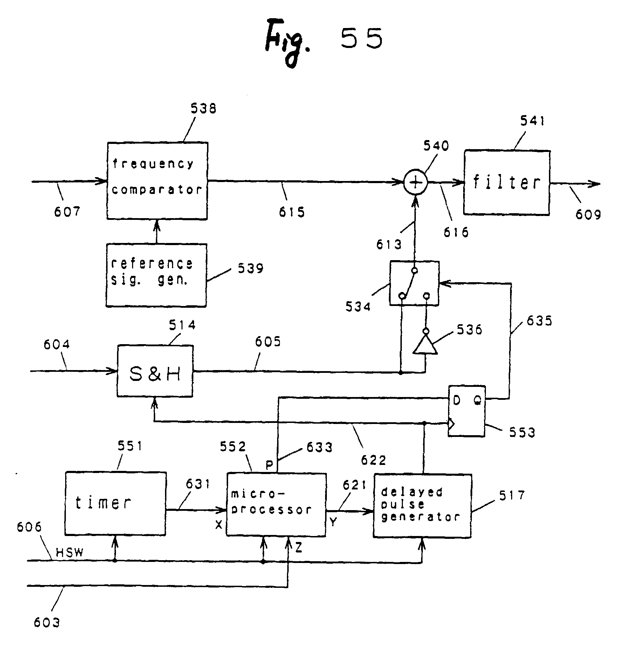

Figure **55** shows the construction of the delayed pulse generator **517**, the sampler **514**, the timing corrector **518** and the tracking controller **515**. In Figure **55**, the HSW signal **606** is supplied to a timer **551**, a microprocessor **552**, the delayed pulse generator **517**. The delayed pulse generator **517** outputs a sample pulse **622** after a time period depending on the timing data **621** applied from the microprocessor **522**, following the rising edge of the HSW signal **606**, has elapsed. The timing data **621** is generated from the output **631** of the timer **551**, the track number and sync block number **603** and the HSW signal **606**. The generation method is described later. The sampler **514** samples the tracking error signal **604** in accordance with the sample pulse **622**, and holds and outputs the sampled value. After the polarity of the sampled tracking error signal **605** is inverted so as to keep the control polarity constant by the inversion circuit **536** and the switch **534** in accordance with the switching signal **635**, the sampled tracking error signal **605** is supplied to the adder **540**. Thereafter, the speed error signal **615** is generated by the frequency comparator **538** and the reference signal generator **539**. The speed error signal **615** is added to the tracking error signal **613**, and then supplied to the capstan motor driver **508** through the filter **541**. The above operation is the same as in the example shown in Figure **52**. As a result, the tape traveling speed is adjusted so that the tracking error signal **605** which is successively sampled by the sampler **514** becomes 0.

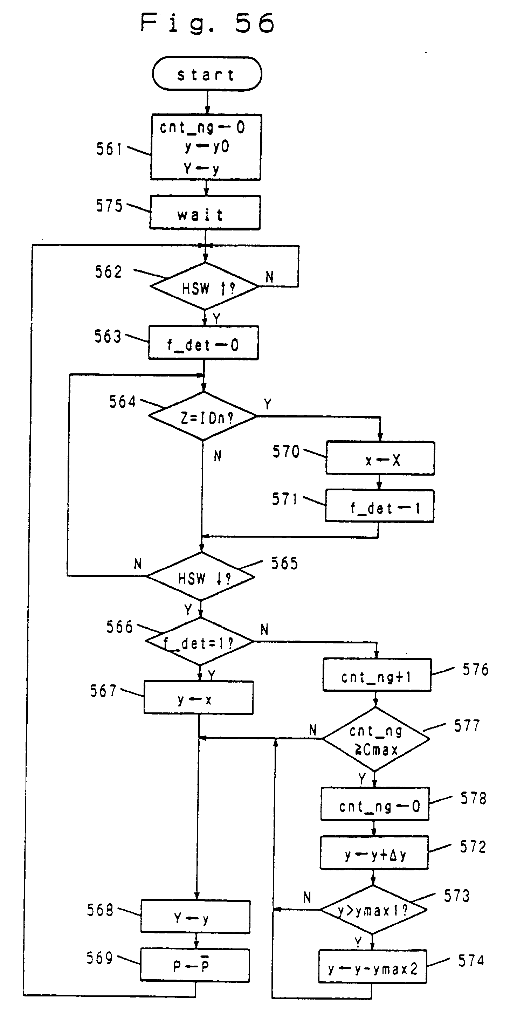

Next, the generation of the timing data **621**, i.e., the operation for correcting the sample timing is described. The timer **551** is implemented by a counter into which the HSW signal **606** is input. The counter is reset at the rising edge of the HSW signal **606**, and thereafter increments the contents at a regular interval. The counter contents of the timer **551** are output as the elapsed time data **631**. The elapsed time data **631** indicate the elapsed time which is counted from the rising edge of the HSW signal, and the data **631** is supplied to the microprocessor **552**. Figure **56** shows the flowchart illustrating the outline of the program executed by the microprocessor **552**. In Figure **56**, the symbols **x**, **y**, **f_det**, and **cnt_ng** denote memories contained in the microprocessor **552**. The symbols **X**, **Z**, **HSW** denote input ports, and **Y** denotes an output port. These ports are connected to the elapsed time data **631**, the track number and sync block number **603**, the HSW signal **606**, and the timing data **621**, respectively. In Figure **56**, **y0**, **IDn**, **ymax1**, **ymax2**, Δ**y**, and **Cmax** are constants. The program operation is executed in the following manner.

First, in step 561, the memories and the ports are initialized. The constant **y0** is time data corresponding to the time interval from the rising edge of the HSW signal (Figure **49D**) to the ideal sample pulse timing (Figure **49B**), i.e., in the case where the head scanning path coincides with the target phase. The time data **y0** is output to the output port **Y**. The value at the output port **Y** is supplied to the delayed pulse generator **517** as the timing data **621**. The delayed pulse generator **517** actually generates a sample pulse at the timing shown in Figure **49B**. In the initialized state, the tracking control is performed so that the tracking error signal **605** becomes 0 at the timing. In step 575, the pull-in and the setting of the tracking control is waited. Specifically, the program merely waits for the time period corresponding to the response time of the tracking control. In this time period, the tracking pull-in is performed.

Next, in step 562, the detection of the rising edge of **HSW** is waited. In step 563, the ID detection flag **f_det** is cleared. In step 564, the values at the input port **Z**, i.e., the numbers of track and sync block which are currently reproduced are compared with a predetermined value **IDn**. The predetermined value **IDn** is a value corresponding to the target sync block among the hatched portions shown in Figure **49A**. As the result of the comparison, if the values are matched with each other, this means that the reproduction can be performed to the target sync block. In step 570, the elapsed time data **631** from the timer is input through the input port **X** and stored in the memory **x**. In step 571, the detection flag **f_det** is set to be 1, and the program proceeds to step 565. If the values are not matched as the result of the comparison at step 564, the program merely proceeds to step 565. If the falling edge of **HSW** is detected at step 565, the process proceeds to step 566. Otherwise, the process returns to step 564. In other words, steps 564, 570, 571, and 565 are repeatedly executed during the "H" period of the HSW signal **606**.

When the falling edge of **HSW** is detected, the program proceeds to step 566. In the case where the detection flag **f_det** is 1, i.e., when the predetermined value **IDn** is detected during the "H" period of **HSW** (during the immediately preceding scanning period of the head **503a**), the elapsed time data stored in the memory **x** is transferred to the memory **y** in step 567. Then, in step 568, the contents of the memory **y** is output to the output port **Y**, so that the sample timing is corrected from the initial value **y0** to the timing at which the predetermined value **IDn** is detected. Herein, it is assumed that the elapsed time data **631** obtained from the timer **551** and the timing data **621** supplied to the delayed pulse generator **517** have the same unit. Accordingly, the phase of the scanning path determined by the initial timing of the reference HSW is corrected to an accurate phase excluding error factors such as tracking error.

If the detection flag **f_det** is 0 in step 566, this means that the value **IDn** was not detected in the immediately preceding scanning period. In such a case, the contents of the memory **cnt_ng** are incremented in step 576, and then compared with the constant **Cmax** in step 577. If cnt_ng > Cmax, the contents of the memory **cnt_ng** are reset to be 0 in step 578. The process in steps 576 to 578 is provided for the case where the actual scanning path is largely different from the ideal one shown in Figure **49A**. If the control polarity is neglected, the phase of scanning path in which the tracking error signal becomes 0 at the timing of **y0** may exist on every second track. Therefore, at the time when the tracking control is pulled in step 575, it is not known into which phase the control is pulled. Thus, in the case where the control is pulled into the shifted phase, it is necessary to correct the locked phase to the target phase. However, even in a condition where the scanning path is close to the target, there may occur a case where the detection of **IDn** fails depending on the state of the reproduced signals. Accordingly, when the detection of **IDn** is successively failed Cmax times in the scanning period of the head **503a**, i.e., when cnt_ng ≧ Cmax in step 577, it is judged that the scanning path is locked to the phase which is different from the target phase, so that the operation for correcting the locked phase is performed. The correction operation is realized by the process of steps 572, 573, and 574.

As the methods for correcting the locked phase, there are various methods. Herein, a method in which the locked phase is gradually shifted by shifting the sample timing is employed. In step 572, the value in the memory **y** is incremented by Δy which is the time-width data for shifting the sample timing every one rotation of cylinder. The time-width data is selected so as to perform the shifting rapidly in the range capable of being followed by the tracking control, depending on the linear operation range of the tracking control system. Next, in step 573, the contents of the memory **y** is compared with the data **ymax1**. The data **ymax1** is the time data corresponding to one scanning period. When the contents of the memory **y** is increased by every rotation of the cylinder in step 572, the sample timing will exceed the scanning period. In order to prevent this, the sample timing is somewhat recovered by subtracting **ymax2** from **y**. However, in order not to disturb the tracking control or not to recover the phase of the head scanning path to the original one, the subtracting time amount is set to correspond to the cyclic period of the pilot signal frequency, i.e., the time period for which the head traverses four tracks. In this example, the head traverses four tracks in one scanning period, so that the value **ymax2** is equal to the time of one scanning period. That is, ymax2 = ymax1. As the result of such selection, the sample value of the same tracking error signal can be obtained, even if the sample timing is discontinuously changed. Accordingly, while the tracking control is set in the locked state, the head scanning path can be continuously shifted. By outputting the value of **y** set in step 567 or 574 to the output port **Y** in step 568, the elapsed time data **621** is fed to the delayed pulse generator **617**. As the result of the above process, the head scanning path is gradually shifted by every rotation of a cylinder. When the head scanning path finally reaches the vicinity of the target phase, **IDn** is detected, so that the sample timing is corrected in steps 570, 571, and 567. Thus, the scanning path can be accurately controlled to the target scanning path phase.

If cnt_ng < Cmax in step 577, the process proceeds to step 568. Since the value of **y** remains unchanged, the sampling is performed at the sample timing which was previously set.

The process of step 569 is not executed by the timing corrector **518**, but executed by the tracking controller **515**. That is, the process is required because the number of tracks in one data frame (ten in this example) is not the integer multiple of the number of tracks in a cyclic period of pilot signal frequency (four in this example). In step 569, the polarity of the sampled tracking error signal **605** which is inverted every data frame is made to be constant for the use in the control. The polarity of the value **P** at the output port is inverted every rotation of cylinder. In this example, the tape travels by 1 data frame as the result of one cylinder rotation, i.e., two head scannings. Thus, the polarity of the tracking error signal is inverted depending on the inversion, thereby achieving the polarity matching. Specifically, after the timing of the output signal **633** is matched with the sample timing at the D-type flip-flop **553**, the signal **633** is supplied to the switch **534** which selects the inversion or non-inversion of the tracking error signal.

Thereafter, the program returns to step 562, and the foregoing steps are repeated.

As described above, according to this example, when the reproduction is performed at a tape speed which is different from that in the recording, the delayed pulse generator generates a sample pulse at a timing synchronized with the rotation of cylinder. The sampler samples the tracking error signal in accordance with the sample pulse. The tracking controller operates based on the sampled tracking error signal, so as to adjust the tape traveling. During the operation, the ID detector detects the ID information included in the reproduced signals. The timing corrector corrects the sample pulse generation timing of the delayed pulse generator based on the detected ID information. Accordingly, the head scanning path can be accurately fixed to the specific phase. In the case where the scanning path is locked at a phase other than the target phase, the timing corrector moves the locked phase by gradually changing the sample pulse generation timing. Accordingly, the phase can certainly be pulled into the target phase.

In this example, the case where one data frame is divided into 10 tracks and the tape speed is set to be x5 speed is described. Alternatively, as far as the phase relationship between the head scanning and the data frame can be fixed, the invention can be applied. For example, to the reproduction at a tape speed of integer multiple other than the x1 speed, the invention can be applied (in some cases, in order to fix the relative speed of the head to the tracks, there may occur some deviation from the integer multiple speed relative to the x1 speed).

The example where two types of pilot signals are recorded on the tape is shown, but the method is not limited to this. As far as the positional relationship between the head and the tracks can be detected in the vicinity of the sync block from which the data is to be selectively read out, the recording method is not limited to any specific one.

Regarding the head construction on the drum, and the wrapping angle of the tape, they are not limited to those shown in this example. Alternatively, two heads may be mounted adjacently, or two or more heads may be mounted.

The example where one sample pulse is generated for one scanning is shown, but the method is not limited to this. Regarding the timing of the sample pulse, it is sufficient that the target scanning path intersects the track having the same azimuth. Thus, a plurality of samplings can be performed. In view of the polarity of the obtained sample value, the number of sample pulses can be increased as the result of the obvious extension, whereby the phase lock accuracy can be enhanced.

The countermeasure for the case where the scanning path is locked to the phase other than the target phase is not limited to the specific one which is described in the above example. It is sufficient that the scanning path can be finally moved to the target phase.

In the above example, the tracking control is performed by adjusting the tape speed with a capstan. Alternatively, another method such as a method in which the head is directly driven to perform the tracking control (DTF) can be used.

It is appreciated that the respective components can be implemented by various methods as far as the functions equivalent to those described above can be realized. In this example, each block is constructed mainly in hardware. Alternatively, is can be implemented in software having the equivalent function. Reversely, the timing corrector can be realized by hardware logic, instead of the software. It is appreciated that any of the other components can be realized by either hardware or software.

With the above construction of the invention, the tracking error signal is sampled based on the ID information detected from the reproduced signals by the reproduced position detecting means. The tracking control is performed based on the sampled tracking error signal. Accordingly, the phase relationship between the data frame and the scanning path can be fixed without being influenced by the tracking error on the tape or the like when the reproduction is to be performed at a speed different from that in the recording. As a result, a specific region in the data frame can be selectively read out. Especially when the present invention is applied to the signal recording and reproducing apparatus in which digital compressed video signals are recorded or reproduced (e.g., a digital VTR), the high-speed reproduced image quality can be remarkably improved.

## Claims

1. An apparatus for recording and reproducing data, comprising:
recording medium travelling means (504) for making a recording medium (15; 501) travel in a first direction;
rotating drum means (37; 502) which rotates with an angle with respect to the first direction, the rotating drum means (37; 502) having a head (38, 39; 503a, 503b) used for recording and reproducing the data;
recording means for receiving the data at an input terminal, for partitioning the data into at least first and second data components according to a predefined criteria, and for selectively recording the first data component onto a first portion of the recording medium (15; 501); and
reproducing means for reproducing the first data component which is recorded on the first portion of the recording medium (15; 501), characterised in that
the first portion (5) is part of tracks (1, 2) which are formed on the recording medium (15; 501), and the tracks (1, 2) including the first portions are intermittently located on the recording medium (15; 501) at a predetermined first pitch along the first direction, the first portions being selected such that it is commonly passed by the head (38, 39; 503a, 503b) at least at three predetermined speeds during reproducing the data so that the first data component is reproduced at each of the at least three predetermined speeds.

2. An apparatus according to claim 1, wherein the first portion (5) is located in the vicinity of the center of a track (1, 2) formed on the recording medium (15; 501).

3. An apparatus according to claim 1 or 2, wherein the data is video data, and the first data component is at least part of video data of one frame corresponding to a screen selected at a predetermined rate among a plurality of screens, or at least part of video data of one field corresponding to the selected screen.

4. An apparatus according to claim 1 or 2, wherein the data is video data, and the first data component includes a component which coarsely constitutes an image.

5. An apparatus according to one of the preceding claims, the apparatus further comprising means for performing an orthogonal base transform and quantization on the data, wherein the data is video data, and the first data component includes video data to which at least an orthogonal base transform and quantization are performed by the means for performing.

6. An apparatus according to claim 5, wherein the orthogonal base transform is a discrete cosine transform or an Hadamard transform.

7. An apparatus according to claim 5 or 6, wherein the first data component includes at least an upper bit of a DC component obtained by the orthogonal base transform.

8. An apparatus according to one of the preceding claims, wherein the data is video data,
the recording means includes at least one of:
first redundant component suppressing means for suppressing a visual redundant component or a statistic redundant component of the video data, only by using video data of one frame or video data of one field; and
second redundant component suppressing means for suppressing a visual redundant component or a statistic redundant component of the video data, only by using video data of plural frames or video data of plural fields, and
the reproducing means includes at least one of:
first recovering means for recovering the suppressed video data by the first redundant component suppressing means to the original video data; and
second recovering means for recovering the suppressed video data by the second redundant component suppressing means to the original video data.

9. An apparatus according to one of the preceding claims, wherein the data is video data having a suppressed visual redundant component or a suppressed statistic redundant component, and the first data component includes at least part of the suppressed video data of one frame or at least part of the suppressed video data of one field.

10. An apparatus according to one of the preceding claims, wherein the first data component of the data and the remaining data of the data are input into the recording means separately from each other.

11. An apparatus according to one of the preceding claims, wherein the recording means includes means for adding a contents identification code for identifying the contents of the data to at least one of the first data component of the data and the remaining data of the data, and the reproducing means includes means for identifying the contents of the data based on the contents identification code.

12. An apparatus according to one of the preceding claims, wherein the first data component includes a track identification code for identifying a type of track formed on the recording medium.

13. An apparatus according to one of the preceding claims, wherein the recording means includes at least one of:
means for adding, to the first data component of the data, a first position identification code indicating the position of the first data on a track;
means for adding, to second data which is recorded on the track on which the first data component is recorded in a forward portion thereof with respect to the first data component, a second position identification code indicating the position of the second data on the track; and
means for adding, to third data which is recorded on the track on which the first data component is recorded in a backward portion thereof with respect to the first data component, a third position identification code indicating the position of the third data on the track.

14. An apparatus according to claim 13, wherein the reproducing means includes:
detection means for detecting a relative positional relationship between the head and the first portion, based on at least one of the first, second and third position identification codes recorded on the track; and
adjusting means for adjusting the relative positional relationship between the head and the first portion so that the head passes the first portion, on the basis of the detected relative positional relationship.

15. An apparatus according to claim 14, wherein the adjusting means adjusts the relative positional relationship between the head and the first portion, by adjusting at least one of a traveling speed of the recording medium, a rotation speed of the rotating drum means and a position of the head mounted on the rotating drum means.

16. An apparatus according to one of the preceding claims, wherein the recording means is for selectively recording the second data component which is different from the first data component onto a second portion of the recording medium which is passed by the head at least at one of the at least three predetermined speeds during reproducing of the data, and the first portion is part of tracks which are formed on the recording medium, and the tracks including the first portions are intermittently located on the recording medium at a predetermined first pitch along the first direction, and wherein the second portion is part of tracks which are formed between the tracks each including the first portion, and the tracks each including the second portion and the tracks each including the first portion are located on the recording medium at a predetermined second pitch along the first direction.

17. An apparatus according to claim 16, wherein the second portion is part of tracks each including the first portion, the second portion being positioned differently from the first portion.

18. An apparatus according to claim 16, wherein the first and second portions are located in the vicinity of the center of a track formed on the recording medium.

19. An apparatus according to claim 16, wherein the data is video data, the first data component includes a component which coarsely constitutes an image, and the second data component includes a component which constitutes the image as coarsely as that in the first data or a component which constitutes the image at a higher definition degree than that in the first data.

20. An apparatus according to claim 16, the apparatus further comprising means for performing an orthogonal base transform and quantization on the data, wherein the data is video data, and the first data component and the second data component include video data to which at least an orthogonal base transform and quantization are performed by the means for performing.

21. An apparatus according to claim 20, wherein the orthogonal base transform is a discrete cosine transform or Hadamard transform.

22. An apparatus according to claim 20, wherein the first data component includes at least upper bits of a direct current component which is obtained by the orthogonal base transform, and the second data component includes at least a component which is equivalent to that in the first data component or upper bits of an alternate current component which is closest to the direct current next to the direct current component in the first data component.

## Patentansprüche

1. Gerät zum Aufzeichnen und Wiedergeben von Daten, umfassend:
Aufzeichnungsmediumslaufmittel (504), um ein Aufzeichnungsmedium (15; 501) in einer ersten Richtung laufen zu lassen;
Rotationswalzenmittel (37; 502), welches sich mit einem Winkel in bezug auf die erste Richtung dreht, wobei das Rotationswalzenmittel (37; 502) einen Kopf (38, 39; 503a, 503b) aufweist, der zum Aufzeichnen und Wiedergeben der Daten verwendet wird;
Aufzeichnungsmittel zum Empfangen der Daten an einem Eingangsanschluß, zum Aufteilen der Daten in mindestens erste und zweite Datenkomponenten entsprechend einem vordefinierten Kriterium und zum wahlweise Aufzeichnen der ersten Datenkomponenten auf einen ersten Bereich des Aufzeichnungsmediums (15; 501); und
Wiedergabemittel zum Wiedergeben der ersten Datenkomponenten, die auf dem ersten Bereich des Aufzeichnungsmediums (15; 501) aufgezeichnet sind,
dadurch gekennzeichnet, daß
der erste Bereich (5) ein Teil von Spuren (1, 2) ist, die auf dem Aufzeichnungsmedium (15; 501) gebildet sind, und die Spuren (1, 2), die die ersten Bereiche umfassen, intermittent angeordnet sind auf dem Aufzeichnungsmedium (15; 501) bei einer vorbestimmten ersten Ganghöhe entlang der ersten Richtung, wobei die ersten Bereiche derart ausgewählt sind, daß sie gemeinsam von dem Kopf (38, 39; 503a, 503b) bei mindestens drei vorgegebenen Geschwindigkeiten während der Wiedergabe der Daten überstrichen werden, so daß die erste Datenkomponente bei jeder der mindestens drei vorbestimmten Geschwindigkeiten wiedergegeben wird.

2. Gerät nach Anspruch 1, worin der erste Bereich (5) in der Nähe der Mitte einer Spur (1, 2), die auf dem Aufzeichnungsmedium (15; 501) gebildet ist, angeordnet ist.

3. Gerät nach Anspruch 1 oder 2, worin die Daten Videodaten sind und die erste Datenkomponente mindestens ein Teil der Videodaten eines Rahmens entsprechend einem Schirm ist, der mit einer vorbestimmten Rate unter einer Mehrzahl von Schirmen ausgewählt ist oder mindestens Teil der Videodaten eines Feldes entsprechend dem ausgewählten Schirm ist.

4. Gerät nach Anspruch 1 oder 2, worin die Daten Videodaten sind und die erste Datenkomponente eine Komponente umfaßt, welche grob ein Bild bildet.

5. Gerät nach einem der vorangegangenen Ansprüche, wobei das Gerät weiterhin Mittel umfaßt zum Durchführen einer Orthogonalbasentransformation und Quantisierung an den Daten, wobei die Daten Videodaten sind und die erste Datenkomponente Videodaten enthält, auf welche mindestens eine Orthogonalbasentransformation und Quantisierung mittels des Durchführungs-Mittels durchgeführt werden.

6. Gerät nach Anspruch 5, worin die Orthogonalbasentransformation eine diskrete Kosinustransformation oder eine Hadamard-Transformation ist.

7. Gerät nach Anspruch 5 oder 6, worin die erste Datenkomponente mindestens ein oberes Bit einer Gleichstromkomponente enthält, die durch Orthogonalbasentransformation erhalten wurde.

8. Gerät nach einem der vorangegangenen Ansprüche, worin die Daten Videodaten sind,
das Aufzeichnungsmittel mindestens eines der folgenden enthält:
erste Redundant-Komponenten-Unterdrückungsmittel zum Unterdrücken einer visuellen redundanten Komponente oder einer statistisch redundanten Komponente der Videodaten nur bei Verwendung von Videodaten eines Rahmens oder Videodaten eines Feldes; und
zweite Redundant-Komponenten-Unterdrückungsmittel zum Unterdrücken einer visuellen redundanten Komponente oder statistisch redundanten Komponente der Videodaten nur bei Verwendung von Videodaten von mehreren Rahmen oder Videodaten von mehreren Feldern, und
die Wiedergabemittel mindestens eines der folgenden enthalten:
erste Rückführungsmittel zum Rückführen der unterdrückten Videodaten durch die ersten Redundant-Komponenten-Unterdrückungsmittel auf die ursprünglichen Videodaten; und
zweite Rückführungsmittel zum Rückführen der unterdrückten Videodaten durch das zweite Redundant-Komponenten-Unterdrückungsmittel auf die ursprünglichen Videodaten.

9. Gerät nach einem der vorangegangenen Ansprüche, worin die Daten Videodaten sind, die eine unterdrückte visuelle redundante Komponente oder eine unterdrückte statistische redundante Komponente aufweisen, und die erste Datenkomponente mindestens einen Teil der unterdrückten Videodaten von einem Rahmen oder mindestens einen Teil der unterdrückten Videodaten von einem Feld enthält.

10. Gerät nach einem der vorangegangenen Ansprüche, worin die erste Datenkomponente der Daten und die verbleibenden Daten der Daten in das Aufzeichnungsmittel getrennt voneinander eingegeben werden.

11. Gerät nach einem der vorangegangenen Ansprüche, worin das Aufzeichnungsmittel ein Mittel zum Addieren einer Inhaltsidentiflkationskodierung zum Identifizieren des Inhalts der Daten auf mindestens eine der ersten Datenkomponenten der Daten und das Wiedergabemittel ein Mittel zum Identifizieren des Inhalts der Daten auf der Grundlage der Inhaltsidentifikationskodierung umfassen.

12. Gerät nach einem der vorangegangenen Ansprüche, worin die erste Datenkomponente mindestens eine Spuridentifkationskodierung zum Identifizieren eines Typs von Spur, die auf dem Aufzeichnungsmedium gebildet ist, umfaßt.

13. Gerät nach einem der vorangegangenen Ansprüche, worin das Aufzeichnungsmittel mindestens eines der folgenden umfaßt:
Mittel zum Addieren zu der ersten Datenkomponente der Daten eine erste Positionsidentifikationskodierung, die die Position der ersten Daten auf einer Spur anzeigt;
Mittel zum Addieren zu zweiten Daten, die auf der Spur aufgezeichnet sind, auf welcher die erste Datenkomponente aufgezeichnet ist in einem vorderen Bereich desselben in bezug auf die erste Datenkomponente, eine zweite Positionsidentifkationskodierung, die die Position der zweiten Daten auf der Spur anzeigt; und
Mittel zum Addieren zu dritten Daten, welche auf der Spur aufgezeichnet sind, auf welcher die erste Datenkomponente in einem hinteren Bereich desselben in bezug auf die erste Datenkomponente aufgezeichnet ist, eine dritte Positionsidentifikationskodierung, die die Position der dritten Daten auf der Spur anzeigt.

14. Gerät nach Anspruch 13, worin das Wiedergabemittel umfaßt:
Erfassungsmittel zum Erfassen einer relativen Positionsbeziehung zwischen dem Kopf und dem ersten Bereich auf der Grundlage von mindestens einer der ersten, zweiten und dritten Positionsidentifikationskodierungen, die auf der Spur aufgezeichnet sind; und
Einstellmittel zum Einstellen der relativen Positionsbeziehung zwischen dem Kopf und dem ersten Bereich, so daß der Kopf über den ersten Bereich läuft auf der Basis der erfaßten relativen Positionsbeziehung.

15. Gerät nach Anspruch 14, worin das Einstellmittel die relative Positionsbeziehung zwischen dem Kopf und dem ersten Bereich einstellt durch Ändern von mindestens einem von Bandgeschwindigkeit des Aufzeichnungsmediums, Drehgeschwindigkeit des Rotationswalzenmittels und Position des Kopfes, der auf dem Rotationswalzenmittel angebracht ist.

16. Gerät nach einem der vorangegangenen Ansprüche, worin das Aufzeichnungsmittel zum selektiven Aufzeichnen der zweiten Datenkomponenten vorgesehen ist, die von der ersten Datenkomponente verschieden ist auf einem zweiten Bereich des Aufzeichnungsmediums, welcher von dem Kopf bei mindestens einer von mindestens drei vorbestimmten Geschwindigkeiten während der Wiedergabe der Daten überstrichen wird, und der erste Bereich Teil der Spuren ist, die auf dem Aufzeichnungsmedium gebildet sind, und die Spuren erste Bereiche umfassen, die versetzt angeordnet sind auf dem Aufzeichnungsmedium mit einer vorbestimmten ersten Ganghöhe entlang der ersten Richtung, und worin der zweite Bereich Teil von Spuren ist, die zwischen den Spuren, die jeweils den ersten Bereich enthalten, und den Spuren gebildet sind, die jeweils den zweiten Bereich enthalten, und worin die Spuren, die jeweils den ersten Bereich enthalten, auf dem Aufzeichnungsmedium mit einer vorbestimmten zweiten Ganghöhe entlang der ersten Richtung angeordnet sind.

17. Gerät nach Anspruch 16, worin der zweite Bereich Teil von Spuren ist, die jeweils den ersten Bereich umfassen, wobei der zweite Bereich von dem ersten Bereich verschieden positioniert ist.

18. Gerät nach Anspruch 16, worin die ersten und zweiten Bereiche in der Nähe der Mitte einer Spur, die auf dem Aufzeichnungsmedium gebildet ist, angeordnet ist.

19. Gerät nach Anspruch 16, worin die Daten Videodaten sind, die erste Datenkomponente eine Komponente, welche grob ein Bild bildet, und die zweite Datenkomponente eine Komponente, welche ein Bild so grob wie die in den ersten Daten bildet, oder eine Komponente enthält, welche das Bild mit einem höheren Definitionsgrad bildet als die in den ersten Daten.

20. Gerät nach Anspruch 16, worin das Gerät weiterhin Mittel zum Durchführen einer Orthogonalbasentransformation und Quantisierung an den Daten umfaßt, worin die Daten Videodaten sind und die erste Datenkomponente und die zweite Datenkomponente Videodaten enthalten, auf welche mindestens eine Orthogonalbasentransformation und Quantisierung mittels des Durchführungs-Mittels durchgeführt wurde.

21. Gerät nach Anspruch 20, worin die Orthogonalbasentransformation eine diskrete Kosinustransformation oder eine Hadamard-Transformation ist.

22. Gerät nach Anspruch 20, worin die erste Datenkomponente zumindest die oberen Bits einer Gleichstromkomponente enthält, die durch Orthogonalbasentransformation erhalten wurde, und die zweite Datenkomponente mindestens eine Komponente, welche äquivalent ist zu der in der ersten Datenkomponente, oder obere Bits einer Wechselstromkomponente enthält, welche am nächsten an dem Gleichstrom nahe der Gleichstromkomponente in der ersten Datenkomponente liegt.

## Revendications

1. Appareil d'enregistrement et de reproduction de données, comprenant :
un moyen de déplacement de support d'enregistrement (504) destiné à faire se déplacer un support d'enregistrement (15 ; 501) dans une première direction,
un moyen de tambour rotatif (37 ; 502) qui tourne en présentant un angle par rapport à la première direction, le moyen de tambour rotatif (37 ; 502) comportant une tête (38, 39 ; 503a, 503b) utilisée en vue de l'enregistrement et de la reproduction des données,
un moyen d'enregistrement destiné à recevoir les données au niveau d'une borne d'entrée, afin de séparer les données au moins des première et seconde composantes de données conformément à un critère prédéfini, et à enregistrer sélectivement la première composante de données sur une première partie du support d'enregistrement (15 ; 501) et
un moyen de reproduction destiné à reproduire la première composante de données qui est enregistrée sur la première partie du support d'enregistrement (15 ; 501), caractérisé en ce que
la première partie (5) constitue une partie des pistes (1, 2) qui sont formées sur le support d'enregistrement (15 ; 501), et les pistes (1, 2) comprenant les premières parties sont localisées de façon intermittente sur le support d'enregistrement (15 ; 501) suivant un premier pas prédéterminé le long de la première direction, les premières parties étant sélectionnées de telle sorte qu'elles passent ensemble devant la tête (38, 39 ; 503a, 503b) au moins à trois vitesses prédéterminées durant la reproduction des données de telle sorte que la première composante de données soit reproduite à chacune des au moins trois vitesses prédéterminées.

2. Appareil selon la revendication 1, dans lequel la première partie (5) est située à proximité du centre d'une piste (1, 2) formée sur le support d'enregistrement (15 ; 501).

3. Appareil selon la revendication 1 ou 2, dans lequel les données sont des données vidéo, et la première composante de données est au moins une partie de données vidéo d'une trame correspondant à un écran sélectionné à une fréquence prédéterminée parmi une pluralité d'écrans, ou au moins une partie de données vidéo d'un balayage de trame correspondant à l'écran sélectionné.

4. Appareil selon la revendication 1 ou 2, dans lequel les données sont des données vidéo, et la première composante de données comprend une composante qui constitue de façon approchée une image.

5. Appareil selon l'une revendication précédente, l'appareil comprenant en outre un moyen destiné à exécuter une transformation de base orthogonale et une quantification sur les données, dans lequel les données sont des données vidéo, et la première composante de données comprend des données vidéo sur lesquelles au moins une transformation de base orthogonale et une quantification sont exécutées par le moyen d'exécution.

6. Appareil selon la revendication 5, dans lequel la transformation de base orthogonale est une transformation en cosinus discrète ou une transformation de Hadamard.

7. Appareil selon la revendication 5 ou 6, dans lequel la première composante de données comprend au moins un bit supérieur d'une composante continue obtenue par la transformation de base orthogonale.

8. Appareil selon l'une des revendications précédentes, dans lequel les données sont des données vidéo,
le moyen d'enregistrement comprend au moins un élément parmi :
un premier moyen de suppression de composante redondante destiné à supprimer une composante visuellement redondante ou une composante statistiquement redondante des données vidéo, uniquement en utilisant les données vidéo d'une trame ou les données vidéo d'un balayage de trame, et
un second moyen de suppression de composante redondante destiné à supprimer une composante visuellement redondante ou une composante statistiquement redondante des données vidéo, uniquement en utilisant des données vidéo de plusieurs trames ou des données vidéo de plusieurs balayages de trame, et
le moyen de reproduction comprend au moins un élément parmi :
un premier moyen de récupération destiné à récupérer les données vidéo supprimées par le premier moyen de suppression de composante redondante en les données vidéo d'origine, et
un second moyen de récupération destiné à récupérer les données vidéo supprimées par le second moyen de suppression de composante redondante en les données vidéo d'origine.

9. Appareil selon l'une des revendications précédentes, dans lequel les données sont des données vidéo comportant une composante visuellement redondante supprimée ou une composante statistiquement redondante supprimée, et la première composante de données comprend au moins une partie des données vidéo supprimées d'une trame ou au moins une partie des données vidéo supprimées d'un balayage de trame.

10. Appareil selon l'une des revendications précédentes, dans lequel la première composante de données des données et les données restantes des données sont reçues en entrée dans le moyen d'enregistrement, séparément les unes des autres.

11. Appareil selon l'une des revendications précédentes, dans lequel le moyen d'enregistrement comprend un moyen destiné à additionner un code d'identification de contenu destiné à identifier le contenu des données dans au moins l'une de la première composante de données des données et des données restantes des données, et le moyen de reproduction comprend un moyen destiné à identifier le contenu des données sur la base du code d'identification de contenu.

12. Appareil selon l'une des revendications précédentes, dans lequel la première composante de données comprend un code d'identification de piste destiné à identifier un type de piste formée sur le support d'enregistrement.

13. Appareil selon l'une des revendications précédentes, dans lequel le moyen d'enregistrement comprend au moins un élément parmi :
un moyen destiné à additionner, à la première composante de données des données, un premier code d'identification de position indiquant la position des premières données sur une piste,
un moyen destiné à additionner, à des secondes données qui sont enregistrées sur la piste sur laquelle la première composante de données est enregistrée dans une partie antérieure de celle-ci par rapport à la première composante de données, un second code d'identification de position indiquant la position des secondes données sur la piste, et
un moyen destiné à additionner, aux troisièmes données qui sont enregistrées sur la piste sur laquelle la première composante de données est enregistrée dans une partie postérieure de celle-ci par rapport à la première composante de données, un troisième code d'identification de position indiquant la position des troisièmes données sur la piste.

14. Appareil selon la revendication 13, dans lequel le moyen de reproduction comprend :
un moyen de détection destiné à détecter une relation de position relative entre la tête et la première partie, sur la base d'au moins l'un parmi les premier, second et troisième codes d'identification de position enregistrés sur la piste, et
un moyen d'ajustement destiné à ajuster la relation de position relative entre la tête et la première partie de façon à ce que la tête passe devant la première partie sur la base de la relation de position relative détectée.

15. Appareil selon la revendication 14, dans lequel le moyen d'ajustement ajuste la relation de position relative entre la tête et la première partie, en ajustant au moins un élément parmi une vitesse de déplacement du support d'enregistrement, une vitesse de rotation du moyen de tambour rotatif et une position de la tête montée sur le moyen de tambour rotatif.

16. Appareil selon l'une des revendications précédentes, dans lequel le moyen d'enregistrement est destiné à enregistrer sélectivement la seconde composante de données qui diffère de la première composante de données sur une seconde partie du support d'enregistrement qui passe devant la tête à au moins l'une des au moins trois vitesses prédéterminées durant la reproduction des données, et la première partie représente une partie des pistes qui sont formées sur le support d'enregistrement, et les pistes comprenant les premières parties sont situées de façon intermittente sur le support d'enregistrement suivant un premier pas prédéterminé le long de la première direction, et dans lequel la seconde partie représente une partie des pistes qui sont formées entre les pistes comprenant chacune la première partie, et les pistes comprenant chacune la seconde partie ainsi que les pistes comprenant chacune la première partie sont situées sur le support d'enregistrement suivant un second pas prédéterminé le long de la première direction.

17. Appareil selon la revendication 16, dans laquelle la seconde partie représente une partie des pistes comprenant chacune la première partie, la seconde partie étant positionnée différemment par rapport à la première partie.

18. Appareil selon la revendication 16, dans lequel les première et seconde parties sont situées à proximité du centre d'une piste formée sur le support d'enregistrement.

19. Appareil selon la revendication 16, dans lequel les données sont des données vidéo, la première composante de données comprend une composante qui constitue de façon approchée une image-, et la seconde composante de données comprend une composante qui constitue l'image de façon aussi approchée que dans les premières données ou une composante qui constitue l'image à un degré de définition supérieur à celui des premières données.

20. Appareil selon la revendication 16, appareil comprenant en outre un moyen destiné à exécuter une transformation de base orthogonale et une quantification sur les données, dans lequel les données sont des données vidéo, et la première composante de données ainsi que la seconde composante de données comprennent des données vidéo sur lesquelles au moins une transformation de base orthogonale et une quantification sont exécutées par le moyen d'exécution.

21. Appareil selon la revendication 20, dans lequel la transformation de base orthogonale est une transformation en cosinus discrète ou une transformation de Hadamard.

22. Appareil selon la revendication 20, dans lequel la première composante de données comprend au moins des bits supérieurs d'une composante de courant continu qui est obtenue par la transformation de base orthogonale, et la seconde composante de données comprend au moins une composante qui est équivalente à celle de la première composante de données ou des bits supérieurs d'une composante en courant alternatif qui est la plus proche du courant continu après la composante de courant continu dans la première composante de données.
